# EUROPEAN PATENT APPLICATION

(11) **EP 4 535 906 A1**
(43) Date of publication of application: **09.04.2025**
(21) Application number: 23834748.8
(22) Date of filing: 30.06.2023
(51) Int. Cl.: H04W 72/40

(54) **INFORMATION TRANSMISSION METHOD AND COMMUNICATION APPARATUS**

(30) Priority: 05.07.2022 CN 202210794205; 09.08.2022 CN 202210949468; 30.09.2022 CN 202211206514
(71) Applicant: Huawei Technologies Co., Ltd., Shenzhen, Guangdong 518129 (CN)
(72) Inventor: LI, Chao, Shenzhen, Guangdong 518129 (CN); MI, Xiang, Shenzhen, Guangdong 518129 (CN)
(74) Representative: Goddar, Heinz J.
(86) International application number: PCT/CN2023/104555
(87) International publication number: WO 2024/007981

(57) **Abstract**

Embodiments of this application provide an information transmission method and a communication apparatus. The method may include: A first terminal apparatus obtains a channel occupancy time COT; and the first terminal apparatus sends COT indication information to a second terminal apparatus, where the COT indication information indicates a resource that is in the COT and that is to be used by the second terminal apparatus to send information. In this way, the second terminal apparatus may send information on the resource, indicated by the COT indication information, that is in the COT and that is to be used by the second terminal apparatus to send information, to enable COT sharing in SL communication, improve resource utilization, and reduce a transmission delay.

## Description

This application claims priorities to Chinese Patent Application No. 202210794205.6, filed with the China National Intellectual Property Administration on July 5, 2022 and entitled "UNLICENSED SPECTRUM COT SHARING INFORMATION INDICATION METHOD", to Chinese Patent Application No. 202210949468.X, filed with the China National Intellectual Property Administration on August 9, 2022 and entitled "INFORMATION TRANSMISSION METHOD AND COMMUNICATION APPARATUS", and to Chinese Patent Application No. 202211206514.3, filed with the China National Intellectual Property Administration on September 30, 2022 and entitled "INFORMATION TRANSMISSION METHOD AND COMMUNICATION APPARATUS", which are incorporated herein by reference in their entireties.

### TECHNICAL FIELD

This application relates to the communication field, and more specifically, to an information transmission method and a communication apparatus.

### BACKGROUND

In a wireless communication system, spectrum resources may be classified into a licensed spectrum and an unlicensed spectrum. Currently, in sidelink (sidelink, SL) communication, enabling an unlicensed spectrum is an important evolution direction.

In an unlicensed spectrum, a terminal may use a spectrum resource through contention. In a possible manner, the terminal contends for a channel through listen-before-talk (listen-before-talk, LBT), to use a channel resource. If the terminal successfully performs the LBT, the terminal may use the channel resource to send data, and the terminal may further share the channel resource with another terminal. How to share a channel resource between terminals is a problem to be resolved.

### SUMMARY

This application provides an information transmission method and a communication apparatus, to implement resource sharing between terminals.

According to a first aspect, an information transmission method is provided. The method may be performed by a terminal apparatus; or may be performed by a component (for example, a chip or a circuit) of a terminal apparatus. This is not limited. For ease of description, the following uses an example in which the method is performed by a first terminal apparatus for description.

The method may include: The first terminal apparatus obtains a channel occupancy time COT; and the first terminal apparatus sends COT indication information to a second terminal apparatus, where the COT indication information indicates a resource that is in the COT and that is to be used by the second terminal apparatus to send information.

Based on the foregoing technical solution, after obtaining the COT, the first terminal apparatus may send the COT indication information to the second terminal apparatus, to indicate, to the second terminal apparatus, the resource that is in the COT and that is to be used by the second terminal apparatus to send information. In this way, after the second terminal apparatus receives the COT indication information, the second terminal apparatus may send information by using the resource, indicated by the COT indication information, that is in the COT and that is to be used by the second terminal apparatus to send information, to enable COT sharing in SL communication, improve resource utilization, and reduce a transmission delay.

With reference to the first aspect, in some implementations of the first aspect, before that the first terminal apparatus sends COT indication information to a second terminal apparatus, the method further includes: The first terminal apparatus receives first indication information from the second terminal apparatus, where the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus.

For example, the first indication information is used to trigger the first terminal apparatus to send the COT indication information to the second terminal apparatus.

Based on the foregoing technical solution, after receiving the indication from the second terminal apparatus, the first terminal apparatus may send the COT indication information to the second terminal apparatus. In this way, a requirement of the second terminal apparatus for the COT can be responded in a timely manner, and the first terminal apparatus may further properly allocate, based on the requirement of the second terminal apparatus for the COT, the COT resource shared with the second terminal apparatus, to improve resource utilization.

With reference to the first aspect, in some implementations of the first aspect, the method further includes: The first terminal apparatus sends second indication information to the second terminal apparatus, where the second indication information whose value is a first value indicates that sidelink control information includes the COT indication information.

Based on the foregoing technical solution, the second terminal apparatus may determine, based on the value of the second indication information, whether the sidelink control information includes the COT indication information. Based on the second indication information, unnecessary blind detection performed by the second terminal apparatus can be reduced, a detection speed can be improved, and detection complexity can be reduced.

With reference to the first aspect, in some implementations of the first aspect, that the first terminal apparatus sends COT indication information to a second terminal apparatus includes: The first terminal apparatus sends sidelink control information to the second terminal apparatus, where the sidelink control information includes the COT indication information; the first terminal apparatus sends a medium access control-control element MAC CE to the second terminal apparatus, where the MAC CE includes the COT indication information; or the first terminal apparatus sends sidelink control information and a MAC CE to the second terminal apparatus, where the sidelink control information and the MAC CE include the COT indication information.

Based on the foregoing technical solution, the COT indication information may be carried in the sidelink control information, may be carried in the MAC CE, or may be partially carried in the sidelink control information and partially carried in the MAC CE. In this way, the method according to the first aspect is applicable to more scenarios, for example, a scenario in which the first terminal apparatus shares a COT resource with a plurality of second terminal apparatuses. For example, the first terminal apparatus shares a COT resource with a plurality of second terminal apparatuses, information about some second terminal apparatuses in the COT indication information is carried in the sidelink control information, and information about remaining second terminal apparatuses in the COT indication information is carried in the MAC CE.

With reference to the first aspect, in some implementations of the first aspect, a remaining length of the COT is less than or equal to X time domain units, and the first terminal apparatus sends the sidelink control information to the second terminal apparatus; a remaining length of the COT is greater than X time domain units, and the first terminal apparatus sends the MAC CE to the second terminal apparatus; or a remaining length of the COT is greater than X time domain units, and the first terminal apparatus sends the sidelink control information and the MAC CE to the second terminal apparatus, where X is an integer greater than or equal to 1.

With reference to the first aspect, in some implementations of the first aspect, the first terminal apparatus sends the sidelink control information and the MAC CE to the second terminal apparatus, where the sidelink control information includes COT indication information in the first X time domain units in the COT; and the MAC CE includes COT indication information after the first X time domain units in the COT, and/or the MAC CE includes COT indication information in the first X time domain units in the COT.

With reference to the first aspect, in some implementations of the first aspect, a value of X is related to at least one of the following: a processing capability of the second terminal apparatus and a subcarrier spacing.

With reference to the first aspect, in some implementations of the first aspect, the COT indication information is located on a first time domain resource of the COT, and the first terminal apparatus sends the sidelink control information to the second terminal apparatus; or the COT indication information is located on a second time domain resource of the COT, and the first terminal apparatus sends the MAC CE to the second terminal apparatus, where the second time domain resource of the COT is after the first time domain resource of the COT.

With reference to the first aspect, in some implementations of the first aspect, the MAC CE includes the COT indication information located on the second time domain resource of the COT and/or the first time domain resource of the COT.

With reference to the first aspect, in some implementations of the first aspect, the method further includes: The first time domain resource of the COT is Y consecutive time domain units in the COT, and a start time domain unit in the Y consecutive time domain units is a start time domain unit of the COT, or a start time domain unit in the Y consecutive time domain units is a time domain unit in which the COT indication information is located, where Y is an integer greater than 1 or equal to 1; and the second time domain resource of the COT is a time domain unit after the Y consecutive time domain units in the COT.

With reference to the first aspect, in some implementations of the first aspect, a value of Y is related to at least one of the following: a processing capability of the second terminal apparatus and a subcarrier spacing.

With reference to the first aspect, in some implementations of the first aspect, the method further includes: The first terminal apparatus sends third indication information to the second terminal apparatus, where the third indication information indicates that the sidelink control information includes the COT indication information; the third indication information indicates that the MAC CE includes the COT indication information; or the third indication information indicates that the sidelink control information and the MAC CE include the COT indication information.

Based on the foregoing technical solution, the second terminal apparatus may determine, based on the third indication information, whether the sidelink control information and/or the MAC CE include/includes the COT indication information. Based on the third indication information, unnecessary blind detection performed by the second terminal apparatus can be reduced, a detection speed can be improved, and detection complexity can be reduced.

With reference to the first aspect, in some implementations of the first aspect, the sidelink control information further includes a parameter used by the first terminal apparatus to send third data in the COT, and the third data is data sent by the first terminal apparatus to the second terminal apparatus.

Based on the foregoing technical solution, the COT indication information is further indicated when the parameter used by the first terminal apparatus to send the third data in the COT is indicated, to reduce signaling overheads and reduce a transmission delay.

With reference to the first aspect, in some implementations of the first aspect, the method further includes: The first terminal apparatus sends fourth indication information to the second terminal apparatus, where the fourth indication information indicates that: the sidelink control information includes the COT indication information; or the sidelink control information includes the COT indication information and the parameter used by the first terminal apparatus to send the third data in the COT, and the third data is the data sent by the first terminal apparatus to the second terminal apparatus.

Based on the foregoing technical solution, the second terminal apparatus may determine, based on the fourth indication information, whether the COT indication information and the parameter used by the first terminal apparatus to send the third data in the COT are carried in the same sidelink control information. Based on the fourth indication information, the unnecessary blind detection performed by the second terminal apparatus can be reduced, the detection speed can be improved, and the detection complexity can be reduced.

With reference to the first aspect, in some implementations of the first aspect, the COT indication information includes: a resource that is in the COT and that is to be used by the second terminal apparatus to send data; and/or a resource that is in the COT and that is to be used by the second terminal apparatus to send a hybrid automatic repeat request HARQ answer message.

Based on the foregoing technical solution, the resource, indicated by the COT indication information, that is in the COT and that is to be used by the second terminal apparatus to send information may be used by the second terminal apparatus to send data, or may be used by the second terminal apparatus to send a HARQ answer message.

With reference to the first aspect, in some implementations of the first aspect, the method further includes: The first terminal apparatus sends fifth indication information to the second terminal apparatus, where the fifth indication information indicates that the COT indication information includes any one of the following: the resource that is in the COT and that is to be used by the second terminal apparatus to send data; the resource that is in the COT and that is to be used by the second terminal apparatus to send a HARQ answer message; or the resource that is in the COT and that is to be used by the second terminal apparatus to send data, and the resource that is in the COT and that is to be used by the second terminal apparatus to send a HARQ answer message.

With reference to the first aspect, in some implementations of the first aspect, the method further includes: The first terminal apparatus receives a response message from the second terminal apparatus, where the response message indicates whether the second terminal apparatus accepts sharing of the COT; and the response message includes a response message of the second terminal apparatus for the COT indication information; or the response message includes a HARQ answer message of the second terminal apparatus for the third data sent by the first terminal apparatus, where the HARQ answer message sent by using a first resource indicates that the second terminal apparatus accepts sharing of the COT, or the HARQ answer message sent by using a second resource indicates that the second terminal apparatus does not accept sharing of the COT.

Based on the foregoing technical solution, whether the second terminal apparatus receives the COT resource shared by the first terminal apparatus is implicitly indicated by using different resources (or different resource groups), to reduce signaling overheads. For example, if the second terminal apparatus sends the answer message for the third data to the first terminal apparatus by using the first resource, it indicates that the second terminal apparatus accepts the COT resource shared by the first terminal apparatus; or if the second terminal apparatus sends the answer message for the third data to the first terminal apparatus by using the second resource, it indicates that the second terminal apparatus does not accept the COT resource shared by the first terminal apparatus.

With reference to the first aspect, in some implementations of the first aspect, a time interval between a moment at which the first terminal apparatus sends the COT indication information and a moment at which the first terminal apparatus receives the response message is greater than or equal to a first preset value.

With reference to the first aspect, in some implementations of the first aspect, that the first terminal apparatus sends COT indication information to a second terminal apparatus includes: The first terminal apparatus sends the COT indication information to N second terminal apparatuses, where N is a positive integer, where the COT indication information includes N groups of parameters, and each of the N groups of parameters includes an identifier of one of the second terminal apparatuses; and each of the N groups of parameters further includes at least one of the following: a channel access parameter, a time domain resource that is in the COT and that is to be used by the second terminal apparatus to send information, a frequency domain resource that is in the COT and that is to be used by the second terminal apparatus to send information, sixth indication information, and feedback configuration information, where the sixth indication information indicates whether the second terminal apparatus sends the response message for the COT indication information.

For example, the N groups of parameters correspond one-to-one to the N second terminal apparatuses, in other words, the N groups of parameters indicate at least one of the foregoing of the N second terminal apparatuses.

For example, the method further includes: The first terminal apparatus sends a value of N to the second terminal apparatus.

For example, the channel access parameter includes at least one of the following: channel access type indication information of a message to be sent by the second terminal apparatus; priority indication information of the message to be sent by the second terminal apparatus; and cyclic prefix extension indication information.

With reference to the first aspect, in some implementations of the first aspect, the COT indication information further includes an identifier of the first terminal apparatus.

With reference to the first aspect, in some implementations of the first aspect, the COT indication information and the parameter used by the first terminal apparatus to send the third data in the COT are carried in same signaling, the parameter used by the first terminal apparatus to send the third data in the COT includes an identifier of the first terminal apparatus, and the COT indication information does not include the identifier of the first terminal apparatus; or the COT indication information and the parameter used by the first terminal apparatus to send the third data in the COT are not carried in same signaling, and the COT indication information includes an identifier of the first terminal apparatus, where the third data is the data sent by the first terminal apparatus to the second terminal apparatus.

Based on the foregoing technical solution, if the COT indication information and the parameter used by the first terminal apparatus to send the third data in the COT are carried in the same signaling, and the parameter used by the first terminal apparatus to send the third data in the COT includes the identifier of the first terminal apparatus, the second terminal apparatus may learn of the identifier of the first terminal apparatus based on the parameter used by the first terminal apparatus to send the third data in the COT. Therefore, the COT indication information may not carry the identifier of the first terminal apparatus, to reduce signaling overheads. If the COT indication information and the parameter used by the first terminal apparatus to send the third data in the COT are not carried in the same signaling, the COT indication information includes the identifier of the first terminal apparatus. In this way, the second terminal apparatus may identify that a terminal apparatus sharing the COT resource is the first terminal apparatus.

With reference to the first aspect, in some implementations of the first aspect, the method further includes: The first terminal apparatus sends seventh indication information, where the seventh indication information indicates a cast type, where the cast type is unicast, and the COT indication information includes an identifier of the first terminal apparatus and the identifier of one of the second terminal apparatuses; or the parameter used by the first terminal apparatus to send the third data in the COT includes an identifier of the first terminal apparatus and the identifier of one of the second terminal apparatuses; the cast type is multicast, and the COT indication information includes an identifier of the first terminal apparatus and identifiers of the N second terminal apparatuses; or the cast type is multicast, the parameter used by the first terminal apparatus to send the third data in the COT includes an identifier of the first terminal apparatus and a group identifier of the N second terminal apparatuses, and the COT indication information includes identifiers of the N second terminal apparatuses, where the third data is the data sent by the first terminal apparatus to the second terminal apparatus.

With reference to the first aspect, in some implementations of the first aspect, the channel access parameter includes eighth indication information, where the eighth indication information indicates a channel access type of a message to be sent by the second terminal apparatus or a priority of the message to be sent by the second terminal apparatus, and there is an association relationship between the channel access type of the message to be sent by the second terminal apparatus and the priority of the message to be sent by the second terminal apparatus.

For example, the channel access type of the message to be sent by the second terminal apparatus may be a channel access priority class (channel access priority class, CAPC).

For example, a quantity of bits occupied by the eighth indication information is less than 5 bits, for example, 3 bits or 4 bits.

For example, the eighth indication information is used by the second terminal apparatus to obtain the channel access type of the message to be sent by the second terminal apparatus and the priority of the message to be sent by the second terminal apparatus.

For example, the association relationship is configured, preconfigured, or predefined.

With reference to the first aspect, in some implementations of the first aspect, the feedback configuration information includes at least one of the following: a channel format for sending feedback information by the second terminal apparatus, time domain resource indication information for sending feedback information by the second terminal apparatus, frequency domain resource indication information for sending feedback information by the second terminal apparatus, information indicating the second terminal apparatus to send a feedback, information indicating a manner of sending a feedback by the second terminal apparatus, and a sequence parameter for sending feedback information by the second terminal apparatus.

With reference to the first aspect, in some implementations of the first aspect, the COT indication information indicates the time domain resource that is in the COT and that is to be used by the second terminal apparatus to send information, and the COT indication information includes ninth indication information, where a value of the ninth indication information is a second value, and the frequency domain resource to be used by the second terminal apparatus to send information is a frequency domain resource indicated by the ninth indication information; or a value of the ninth indication information is a third value, and the frequency domain resource to be used by the second terminal apparatus to send information is all frequency domain resources on the time domain resource to be used by the second terminal apparatus to send information.

With reference to the first aspect, in some implementations of the first aspect, a time interval between a moment at which the first terminal apparatus sends the COT indication information and a moment at which the first terminal apparatus receives the information about the second terminal apparatus is greater than or equal to a second preset value.

With reference to the first aspect, in some implementations of the first aspect, the method further includes: The first terminal apparatus sends conflict indication information in the COT.

With reference to the first aspect, in some implementations of the first aspect, the method further includes: The first terminal apparatus sends first information to the second terminal apparatus, where the first information includes at least one of the following: the remaining length of the COT, a length of the COT, a used length of the COT, a frequency domain resource occupied by the COT, and a channel access priority type.

With reference to the first aspect, in some implementations of the first aspect, that the first terminal apparatus sends first information to the second terminal apparatus includes: The first terminal apparatus sends sidelink control information to the second terminal apparatus, where the sidelink control information includes the first information.

For example, the sidelink control information may be first-order sidelink control information, or may be second-order sidelink control information.

With reference to the first aspect, in some implementations of the first aspect, the sidelink control information further includes at least one of the following: priority indication information for sending data by the first terminal apparatus in the COT; reservation periodicity indication information for sending data by the first terminal apparatus in the COT; time domain resource indication information for sending data by the first terminal apparatus in the COT; and frequency domain resource indication information for sending data by the first terminal apparatus in the COT.

With reference to the first aspect, in some implementations of the first aspect, the sidelink control information further includes second information, and the second information indicates that the sidelink control information includes the first information.

For example, the second information is carried in first-order sidelink control information and/or second-order sidelink control information.

According to a second aspect, an information transmission method is provided. The method may be performed by a terminal apparatus; or may be performed by a component (for example, a chip or a circuit) of a terminal apparatus. This is not limited. For ease of description, the following uses an example in which the method is performed by a second terminal apparatus for description.

The method may include: A second terminal apparatus receives channel occupancy time COT indication information from a first terminal apparatus, where the COT indication information indicates a resource that is in a COT of the first terminal apparatus and that is to be used by the second terminal apparatus to send information; and the second terminal apparatus sends the information by using the resource indicated by the COT indication information.

With reference to the second aspect, in some implementations of the second aspect, before that a second terminal apparatus receives COT indication information from a first terminal apparatus, the method further includes: The second terminal apparatus sends first indication information to the first terminal apparatus, where the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus.

With reference to the second aspect, in some implementations of the second aspect, the method further includes: The second terminal apparatus receives second indication information from the first terminal apparatus, where the second indication information whose value is a first value indicates that sidelink control information includes the COT indication information.

With reference to the second aspect, in some implementations of the second aspect, that a second terminal apparatus receives COT indication information from a first terminal apparatus includes: The second terminal apparatus receives sidelink control information from the first terminal apparatus, where the sidelink control information includes the COT indication information; the second terminal apparatus receives a medium access control-control element MAC CE from the first terminal apparatus, where the MAC CE includes the COT indication information; or the second terminal apparatus receives sidelink control information and a MAC CE from the first terminal apparatus, where the sidelink control information and the MAC CE include the COT indication information.

With reference to the second aspect, in some implementations of the second aspect, a remaining length of the COT is less than or equal to X time domain units, and the second terminal apparatus receives the sidelink control information from the first terminal apparatus; a remaining length of the COT is greater than the X time domain units, and the second terminal apparatus receives the MAC CE from the first terminal apparatus; or a remaining length of the COT is greater than the X time domain units, and the second terminal apparatus receives the sidelink control information and the MAC CE from the first terminal apparatus, where X is an integer greater than or equal to 1.

With reference to the second aspect, in some implementations of the second aspect, the second terminal apparatus receives the sidelink control information and the MAC CE from the first terminal apparatus, where the sidelink control information includes COT indication information in the first X time domain units in the COT; and the MAC CE includes COT indication information after the first X time domain units in the COT, and/or the MAC CE includes COT indication information in the first X time domain units in the COT.

With reference to the second aspect, in some implementations of the second aspect, a value of X is related to at least one of the following: a processing capability of the second terminal apparatus and a subcarrier spacing.

With reference to the second aspect, in some implementations of the second aspect, the COT indication information is located on a first time domain resource of the COT, and the second terminal apparatus receives the sidelink control information from the first terminal apparatus; or the COT indication information is located on a second time domain resource of the COT, and the second terminal apparatus receives the MAC CE from the first terminal apparatus, where the second time domain resource of the COT is after the first time domain resource of the COT.

With reference to the second aspect, in some implementations of the second aspect, the MAC CE includes the COT indication information located on the second time domain resource of the COT and/or the first time domain resource of the COT.

With reference to the second aspect, in some implementations of the second aspect, the method further includes: The first time domain resource of the COT is Y consecutive time domain units in the COT, and a start time domain unit in the Y consecutive time domain units is a start time domain unit of the COT, or a start time domain unit in the Y consecutive time domain units is a time domain unit in which the COT indication information is located, where Y is an integer greater than 1 or equal to 1; and the second time domain resource of the COT is a time domain unit after the Y consecutive time domain units in the COT.

With reference to the second aspect, in some implementations of the second aspect, the second terminal apparatus receives the MAC CE in a time domain unit n, and the second terminal apparatus does not expect a resource indicated to the second terminal apparatus for sending information to appear in a time domain unit before a time domain unit n+Y; or the second terminal apparatus receives the MAC CE in a time domain unit n, and the second terminal apparatus expects a resource indicated to the second terminal apparatus for sending information to appear in the time domain unit after a time domain unit n+Y.

With reference to the second aspect, in some implementations of the second aspect, a value of Y is related to at least one of the following: a processing capability of the second terminal apparatus and a subcarrier spacing.

With reference to the second aspect, in some implementations of the second aspect, the method further includes: The second terminal apparatus receives third indication information from the first terminal apparatus; the third indication information indicates that the sidelink control information includes the COT indication information; the third indication information indicates that the MAC CE includes the COT indication information; or the third indication information indicates that the sidelink control information and the MAC CE include the COT indication information.

With reference to the second aspect, in some implementations of the second aspect, the sidelink control information further includes a parameter used by the first terminal apparatus to send third data in the COT, and the third data is data sent by the first terminal apparatus to the second terminal apparatus.

With reference to the second aspect, in some implementations of the second aspect, the method further includes: The second terminal apparatus receives fourth indication information from the first terminal apparatus, where the fourth indication information indicates that: the sidelink control information includes the COT indication information; or the sidelink control information includes the COT indication information and the parameter used by the first terminal apparatus to send third data in the COT, and the third data is the data sent by the first terminal apparatus to the second terminal apparatus.

With reference to the second aspect, in some implementations of the second aspect, the COT indication information includes: a resource that is in the COT and that is to be used by the second terminal apparatus to send data; and/or a resource that is in the COT and that is to be used by the second terminal apparatus to send a hybrid automatic repeat request HARQ answer message.

With reference to the second aspect, in some implementations of the second aspect, the method further includes: The second terminal apparatus receives fifth indication information from the first terminal apparatus, where the fifth indication information indicates that the COT indication information includes any one of the following: the resource that is in the COT and that is to be used by the second terminal apparatus to send data; the resource that is in the COT and that is to be used by the second terminal apparatus to send a HARQ answer message; or the resource that is in the COT and that is to be used by the second terminal apparatus to send data, and the resource that is in the COT and that is to be used by the second terminal apparatus to send a HARQ answer message.

With reference to the second aspect, in some implementations of the second aspect, the method further includes: The second terminal apparatus sends a response message to the first terminal apparatus, where the response message indicates whether the second terminal apparatus accepts sharing of the COT; and the response message includes a response message of the second terminal apparatus for the COT indication information; or the response message includes a HARQ answer message of the second terminal apparatus for the third data sent by the first terminal apparatus, where the HARQ answer message sent by using a first resource indicates that the second terminal apparatus accepts sharing of the COT, or the HARQ answer message sent by using a second resource indicates that the second terminal apparatus does not accept sharing of the COT.

With reference to the second aspect, in some implementations of the second aspect, a time interval between a moment at which the second terminal apparatus receives the COT indication information and a moment at which the second terminal apparatus sends the response message is greater than or equal to a first preset value.

With reference to the second aspect, in some implementations of the second aspect, the COT indication information includes N groups of parameters, each of the N groups of parameters includes an identifier of one of the second terminal apparatuses, and N is a positive integer; and each of the N groups of parameters further includes at least one of the following: a channel access parameter, a time domain resource that is in the COT and that is to be used by the second terminal apparatus to send information, a frequency domain resource that is in the COT and that is to be used by the second terminal apparatus to send information, sixth indication information, and feedback configuration information, where the sixth indication information indicates whether the second terminal apparatus sends the response message for the COT indication information.

With reference to the second aspect, in some implementations of the second aspect, the COT indication information further includes an identifier of the first terminal apparatus.

With reference to the second aspect, in some implementations of the second aspect, the COT indication information and the parameter used by the first terminal apparatus to send the third data in the COT are carried in same signaling, the parameter used by the first terminal apparatus to send the third data in the COT includes an identifier of the first terminal apparatus, and the COT indication information does not include the identifier of the first terminal apparatus; or the COT indication information and the parameter used by the first terminal apparatus to send the third data in the COT are not carried in same signaling, and the COT indication information includes the identifier of the first terminal apparatus, where the third data is the data sent by the first terminal apparatus to the second terminal apparatus.

With reference to the second aspect, in some implementations of the second aspect, the method further includes: The second terminal apparatus receives seventh indication information from the first terminal apparatus, where the seventh indication information indicates a cast type, where the cast type is unicast, and the COT indication information includes an identifier of the first terminal apparatus and the identifier of one of the second terminal apparatuses; or the parameter used by the first terminal apparatus to send the third data in the COT includes an identifier of the first terminal apparatus and the identifier of one of the second terminal apparatuses; the cast type is multicast, and the COT indication information includes an identifier of the first terminal apparatus and identifiers of the N second terminal apparatuses; or the cast type is multicast, the parameter used by the first terminal apparatus to send the third data in the COT includes an identifier of the first terminal apparatus and a group identifier of the N second terminal apparatuses, and the COT indication information includes identifiers of the N second terminal apparatuses, where the third data is the data sent by the first terminal apparatus to the second terminal apparatus.

With reference to the second aspect, in some implementations of the second aspect, the channel access parameter includes eighth indication information, and the eighth indication information indicates a channel access type of a message to be sent by the second terminal apparatus or a priority of the message to be sent by the second terminal apparatus; and the method further includes: The second terminal apparatus determines, based on the eighth indication information and an association relationship, the channel access type of the message to be sent by the second terminal apparatus and the priority of the message to be sent by the second terminal apparatus, where the association relationship is an association relationship between the channel access type of the message to be sent by the second terminal apparatus and the priority of the message to be sent by the second terminal apparatus.

With reference to the second aspect, in some implementations of the second aspect, the feedback configuration information includes at least one of the following: a channel format for sending feedback information by the second terminal apparatus; time domain resource indication information for sending feedback information by the second terminal apparatus; frequency domain resource indication information for sending feedback information by the second terminal apparatus; information indicating the second terminal apparatus to send a feedback; information indicating a manner of sending a feedback by the second terminal apparatus; and a sequence parameter for sending feedback information by the second terminal apparatus.

With reference to the second aspect, in some implementations of the second aspect, the COT indication information indicates the time domain resource that is in the COT and that is to be used by the second terminal apparatus to send information, and the COT indication information includes ninth indication information, where a value of the ninth indication information is a second value, and the frequency domain resource to be used by the second terminal apparatus to send information is a frequency domain resource indicated by the ninth indication information; or a value of the ninth indication information is a third value, and the frequency domain resource to be used by the second terminal apparatus to send information is all frequency domain resources on the time domain resource to be used by the second terminal apparatus to send information.

With reference to the second aspect, in some implementations of the second aspect, a time interval between a moment at which the second terminal apparatus receives the COT indication information and a moment at which the second terminal apparatus sends information by using the resource indicated by the COT indication information is greater than or equal to a second preset value.

With reference to the second aspect, in some implementations of the second aspect, the method further includes: The second terminal apparatus receives conflict indication information from the first terminal apparatus.

With reference to the second aspect, in some implementations of the second aspect, the method further includes: The second communication apparatus receives first information from the first terminal apparatus, where the first information includes at least one of the following: the remaining length of the COT, a length of the COT, a used length of the COT, a frequency domain resource occupied by the COT, and a channel access priority type.

With reference to the second aspect, in some implementations of the second aspect, that the second communication apparatus receives first information from the first terminal apparatus includes: The second communication apparatus receives sidelink control information from the first terminal apparatus, where the sidelink control information includes the first information.

With reference to the second aspect, in some implementations of the second aspect, the sidelink control information further includes at least one of the following: priority indication information for sending data by the first terminal apparatus in the COT; reservation periodicity indication information for sending data by the first terminal apparatus in the COT; time domain resource indication information for sending data by the first terminal apparatus in the COT; and frequency domain resource indication information for sending data by the first terminal apparatus in the COT.

With reference to the second aspect, in some implementations of the second aspect, the sidelink control information further includes second information, and the second information indicates that the sidelink control information includes the first information.

With reference to the first aspect or the second aspect, in some implementations, the first indication information is carried in first-order sidelink control information and/or second-order sidelink control information; the second indication information is carried in first-order sidelink control information and/or second-order sidelink control information; the third indication information is carried in first-order sidelink control information and/or second-order sidelink control information; the fourth indication information is carried in first-order sidelink control information and/or second-order sidelink control information; or the fifth indication information is carried in first-order sidelink control information and/or second-order sidelink control information.

With reference to the first aspect or the second aspect, in some implementations, the first indication information is carried in a dedicated field in first-order sidelink control information and/or second-order sidelink control information, and/or the first indication information is carried in a format indication field in first-order sidelink control information and/or second-order sidelink control information; or the second indication information is carried in a dedicated field in first-order sidelink control information and/or second-order sidelink control information, and/or the second indication information is carried in a format indication field in the first-order sidelink control information and/or second-order sidelink control information; or the third indication information is carried in a dedicated field in first-order sidelink control information and/or second-order sidelink control information, and/or the third indication information is carried in a format indication field in first-order sidelink control information and/or second-order sidelink control information; or the fourth indication information is carried in a dedicated field in first-order sidelink control information and/or second-order sidelink control information, and/or the fourth indication information is carried in a format indication field in first-order sidelink control information and/or second-order sidelink control information; or the fifth indication information is carried in a dedicated field in first-order sidelink control information and/or second-order sidelink control information, and/or the fifth indication information is carried in a format indication field in first-order sidelink control information and/or second-order sidelink control information.

With reference to the first aspect or the second aspect, in some implementations, the sidelink control information is first-order sidelink control information or second-order sidelink control information.

With reference to the first aspect or the second aspect, in some implementations, the parameter used by the first terminal apparatus to send the third data in the COT includes at least one of the following: a source identifier, a destination identifier, a cast type indicator, a hybrid automatic repeat request HARQ process number, a redundancy version, a new data indicator, a channel state information CSI request, and a HARQ enabling indicator.

For beneficial effects of the second aspect, refer to the related descriptions in the first aspect. Details are not described herein again.

According to a third aspect, an information transmission method is provided. The method may be performed by a terminal apparatus; or may be performed by a component (for example, a chip or a circuit) of a terminal apparatus. This is not limited. For ease of description, the following uses an example in which the method is performed by a second terminal apparatus for description.

The method may include: The second terminal apparatus determines first indication information, where the first indication information is used to trigger a first terminal apparatus to send channel occupancy time COT indication information, and the COT indication information indicates a resource that is in a COT of the first terminal apparatus and that is to be used by the second terminal apparatus to send information; and the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus; and the second terminal apparatus sends the first indication information to the first terminal apparatus.

Based on the foregoing technical solutions, the second terminal apparatus sends the first indication information to the first terminal apparatus, so that the first terminal apparatus can respond to a requirement of the second terminal apparatus for a COT in a timely manner based on the request of the second terminal apparatus, and share a COT resource with the second terminal apparatus, to reduce a transmission delay and improve resource utilization.

With reference to the third aspect, in some implementations of the third aspect, after that the second terminal apparatus sends the first indication information to the first terminal apparatus, the method further includes: The second terminal apparatus receives the COT indication information from the first terminal apparatus.

With reference to the third aspect, in some implementations of the third aspect, a time interval between a moment at which the second terminal apparatus sends the first indication information and a moment at which the second terminal apparatus receives the COT indication information is greater than or equal to a third preset value.

With reference to the third aspect, in some implementations of the third aspect, the method further includes: The second terminal apparatus sends second indication information to the first terminal apparatus, where the second indication information whose value is a fourth value indicates that sidelink control information includes the first indication information.

Based on the foregoing technical solution, the first terminal apparatus may determine, based on the value of the second indication information, whether the sidelink control information includes the first indication information. Based on the second indication information, unnecessary blind detection performed by the first terminal apparatus can be reduced, a detection speed can be improved, and detection complexity can be reduced.

With reference to the third aspect, in some implementations of the third aspect, that the second terminal apparatus sends the first indication information to the first terminal apparatus includes: The second terminal apparatus sends sidelink control information to the first terminal apparatus, where the sidelink control information includes the first indication information; the second terminal apparatus sends a medium access control-control element MAC CE to the first terminal apparatus, where the MAC CE includes the first indication information; or the second terminal apparatus sends sidelink control information and a MAC CE to the first terminal apparatus, where the sidelink control information and the MAC CE include the first indication information.

Based on the foregoing technical solution, the first indication information may be carried in the sidelink control information, may be carried in the MAC CE, or may be partially carried in the sidelink control information and partially carried in the MAC CE. In this way, when a quantity of bits required by the first indication information is large, the first indication information may be partially carried in the SCI #1 and partially carried in the MAC CE.

With reference to the third aspect, in some implementations of the third aspect, the method further includes: The second terminal apparatus sends eleventh indication information to the first terminal apparatus, where the eleventh indication information indicates that the sidelink control information includes the first indication information; the eleventh indication information indicates that the MAC CE includes the first indication information; or the eleventh indication information indicates that the sidelink control information and the MAC CE include the first indication information.

Based on the foregoing technical solution, the first terminal apparatus may determine, based on the eleventh indication information, whether the sidelink control information and/or the MAC CE include/includes the first indication information. Based on the eleventh indication information, unnecessary blind detection performed by the first terminal apparatus can be reduced, a detection speed can be improved, and detection complexity can be reduced.

With reference to the third aspect, in some implementations of the third aspect, the sidelink control information further includes a parameter to be used by the second terminal apparatus to send the first data.

Based on the foregoing technical solution, when the parameter to be used by the second terminal apparatus to send the first data is indicated, the first indication information is further indicated, to reduce signaling overheads and reduce the transmission delay.

With reference to the third aspect, in some implementations of the third aspect, the method further includes: The second terminal apparatus sends twelfth indication information to the first terminal apparatus, where the twelfth indication information indicates that the sidelink control information includes the first indication information; or the sidelink control information includes the first indication information and the parameter to be used by the second terminal apparatus to send the first data.

Based on the foregoing technical solution, the first terminal apparatus may determine, based on the twelfth indication information, whether the first indication information and the parameter to be used by the second terminal apparatus to send the first data are carried in the same sidelink control information. Based on the twelfth indication information, the unnecessary blind detection performed by the first terminal apparatus can be reduced, the detection speed can be improved, and the detection complexity can be reduced.

With reference to the third aspect, in some implementations of the third aspect, the sidelink control information further includes a parameter used for a conflict indication.

With reference to the third aspect, in some implementations of the third aspect, the method further includes: The second terminal apparatus sends thirteenth indication information to the first terminal apparatus, where the thirteenth indication information indicates that the sidelink control information includes the first indication information; or the sidelink control information includes the first indication information and the parameter used for the conflict indication.

With reference to the third aspect, in some implementations of the third aspect, the COT resource that is of the first terminal apparatus and that is requested by the second terminal apparatus is used for at least one of the following: the COT resource is to be used by the second terminal apparatus to send data; and/or is to be used by the second terminal apparatus to send a hybrid automatic repeat request HARQ answer message.

With reference to the third aspect, in some implementations of the third aspect, the method further includes: The second terminal apparatus sends fourteenth indication information to the first terminal apparatus, where the fourteenth indication information indicates that the COT resource that is of the first terminal apparatus and that is requested by the second terminal apparatus is used for at least one of the following: the COT resource is to be used by the second terminal apparatus to send data; is to be used by the second terminal apparatus to send a HARQ answer message; or is to be used by the second terminal apparatus to send data and a HARQ answer message.

With reference to the third aspect, in some implementations of the third aspect, before that the second terminal apparatus sends the first indication information to the first terminal apparatus, the method further includes: The second terminal apparatus receives fifteenth indication information from the first terminal apparatus, where the fifteenth indication information indicates the second terminal apparatus to send the first indication information.

With reference to the third aspect, in some implementations of the third aspect, the first indication information includes resource information that is of the channel occupancy time COT of the first terminal apparatus and that is requested by the second terminal apparatus, and the first indication information further includes at least one of the following: a priority of a message to be sent by the second terminal apparatus, a channel access type of the message to be sent by the second terminal apparatus, an identifier of the second terminal apparatus, an identifier of the first terminal apparatus, a transmission type of the second terminal apparatus, a time domain resource required by the second terminal apparatus, a frequency domain resource required by the second terminal apparatus, a packet delay budget required by the second terminal apparatus, request information of a feedback resource, and a parameter of a requested feedback resource.

With reference to the third aspect, in some implementations of the third aspect, the first indication information includes sixteenth indication information, where the sixteenth indication information indicates the priority of the message to be sent by the second terminal apparatus or the channel access type of the message to be sent by the second terminal apparatus, and there is an association relationship between the priority of the message to be sent by the second terminal apparatus and the channel access type of the message to be sent by the second terminal apparatus.

For example, a quantity of bits occupied by the sixteenth indication information is less than 5 bits, for example, 3 bits or 4 bits.

For example, the sixteenth indication information is used by the first terminal apparatus to obtain the priority of the message to be sent by the second terminal apparatus and the channel access type of the message to be sent by the second terminal apparatus.

For example, the association relationship is configured, preconfigured, or predefined.

With reference to the third aspect, in some implementations of the third aspect, the first indication information and the parameter to be used by the second terminal apparatus to send the first data are carried in same signaling, the parameter to be used by the second terminal apparatus to send the first data includes the identifier of the first terminal apparatus and the identifier of the second terminal apparatus, and the first indication information does not include the identifier of the first terminal apparatus or the identifier of the second terminal apparatus; or the first indication information and the parameter to be used by the second terminal apparatus to send the first data are not carried in same signaling, and the first indication information includes the identifier of the first terminal apparatus and the identifier of the second terminal apparatus.

Based on the foregoing technical solution, if the first indication information and the parameter to be used by the second terminal apparatus to send the first data are carried in same signaling, and the parameter to be used by the second terminal apparatus to send the first data includes the identifier of the first terminal apparatus and the identifier of the second terminal apparatus, the first terminal apparatus may learn of the identifiers of the first terminal apparatus and the second terminal apparatus based on the parameter to be used by the second terminal apparatus to send the first data. Therefore, the first indication information may not carry the identifiers of the first terminal apparatus and the second terminal apparatus, to reduce the signaling overheads. If the first indication information and the parameter to be used by the second terminal apparatus to send the first data are not carried in same signaling, the first indication information includes the identifiers of the first terminal apparatus and the second terminal apparatus. In this way, the first terminal apparatus may identify that the first indication information is sent by the second terminal apparatus to the first terminal apparatus.

With reference to the third aspect, in some implementations of the third aspect, the first indication information includes the information indicating that the transmission of the first data is not completed, and the information indicating that the transmission of the first data is not completed includes any one of the following: information indicating a size of data whose transmission is not completed by the second terminal apparatus; or information indicating a buffer size of the second terminal apparatus.

With reference to the third aspect, in some implementations of the third aspect, the first indication information includes the resource reservation information of the first data sent by the second terminal apparatus, and the resource reservation information includes at least one of the following: the packet delay budget required by the second terminal apparatus, the priority of the message to be sent by the second terminal apparatus, the channel access type of the message to be sent by the second terminal apparatus, the request information of the feedback resource, the parameter of the requested feedback resource, a reservation periodicity, the time domain resource required by the second terminal apparatus, the frequency domain resource required by the second terminal apparatus, a time interval between two adjacent data packets sent by the second terminal apparatus, a demodulation reference signal pattern, a demodulation reference signal port, a format of the sidelink control information, and a modulation and coding scheme.

With reference to the third aspect, in some implementations of the third aspect, the resource reservation information includes seventeenth indication information, and the seventeenth indication information indicates the priority of the message to be sent by the second terminal apparatus or the channel access type of the message to be sent by the second terminal apparatus, and there is an association relationship between the priority of the message to be sent by the second terminal apparatus and the channel access type of the message to be sent by the second terminal apparatus.

With reference to the third aspect, in some implementations of the third aspect, the packet delay budget required by the second terminal apparatus is used by the first terminal apparatus to determine a time domain resource that is in the COT and that is to be used by the second terminal apparatus to send information.

According to a fourth aspect, an information transmission method is provided. The method may be performed by a terminal apparatus; or may be performed by a component (for example, a chip or a circuit) of a terminal apparatus. This is not limited. For ease of description, the following uses an example in which the method is performed by a first terminal apparatus for description.

The method may include: The first terminal apparatus receives first indication information from a second terminal apparatus, where the first indication information includes at least one of the following: resource information that is of a channel occupancy time COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus; and the first terminal apparatus sends COT indication information to the second terminal apparatus, where the COT indication information indicates a resource that is in the COT and that is to be used by the second terminal apparatus to send information.

With reference to the fourth aspect, in some implementations of the fourth aspect, a time interval between a moment at which the first terminal apparatus receives the first indication information and a moment at which the first terminal apparatus sends the COT indication information is greater than or equal to a third preset value.

With reference to the fourth aspect, in some implementations of the fourth aspect, the method further includes: The first terminal apparatus receives second indication information from the second terminal apparatus, where the second indication information whose value is a fourth value indicates that sidelink control information includes the first indication information.

With reference to the fourth aspect, in some implementations of the fourth aspect, that the first terminal apparatus receives first indication information from a second terminal apparatus includes: The first terminal apparatus receives sidelink control information from the second terminal apparatus, where the sidelink control information includes the first indication information; the first terminal apparatus receives a medium access control-control element MAC CE from the second terminal apparatus, where the MAC CE includes the first indication information; or the first terminal apparatus receives sidelink control information and a MAC CE from the second terminal apparatus, where the sidelink control information and the MAC CE include the first indication information.

With reference to the fourth aspect, in some implementations of the fourth aspect, the method further includes: The first terminal apparatus receives eleventh indication information from the second terminal apparatus, where the eleventh indication information indicates that the sidelink control information includes the first indication information; the eleventh indication information indicates that the MAC CE includes the first indication information; or the eleventh indication information indicates that the sidelink control information and the MAC CE include the first indication information.

With reference to the fourth aspect, in some implementations of the fourth aspect, the sidelink control information further includes a parameter to be used by the second terminal apparatus to send the first data.

With reference to the fourth aspect, in some implementations of the fourth aspect, the method further includes: The first terminal apparatus receives twelfth indication information from the second terminal apparatus, where the twelfth indication information indicates that the sidelink control information includes the first indication information; or the sidelink control information includes the first indication information and the parameter to be used by the second terminal apparatus to send the first data.

With reference to the fourth aspect, in some implementations of the fourth aspect, the sidelink control information further includes a parameter used for a conflict indication.

With reference to the fourth aspect, in some implementations of the fourth aspect, the method further includes: The first terminal apparatus receives thirteenth indication information from the second terminal apparatus, where the thirteenth indication information indicates that the sidelink control information includes the first indication information; or the sidelink control information includes the first indication information and the parameter used for the conflict indication.

With reference to the fourth aspect, in some implementations of the fourth aspect, a COT resource that is of the first terminal apparatus and that is requested by the second terminal apparatus is used for at least one of the following: the COT resource is used by the second terminal apparatus to send data; and/or is used by the second terminal apparatus to send a hybrid automatic repeat request HARQ answer message.

With reference to the fourth aspect, in some implementations of the fourth aspect, the method further includes: The first terminal apparatus receives fourteenth indication information from the second terminal apparatus, where the fourteenth indication information indicates that the COT resource that is of the first terminal apparatus and that is requested by the second terminal apparatus is used for at least one of the following: the COT resource is used by the second terminal apparatus to send data; is used by the second terminal apparatus to send a HARQ answer message; or is used by the second terminal apparatus to send data and a HARQ answer message.

With reference to the fourth aspect, in some implementations of the fourth aspect, before that the first terminal apparatus receives first indication information from a second terminal apparatus, the method further includes: The first terminal apparatus sends fifteenth indication information to the second terminal apparatus, where the fifteenth indication information indicates the second terminal apparatus to send the first indication information.

With reference to the fourth aspect, in some implementations of the fourth aspect, the first indication information includes resource information that is of a channel occupancy time COT of the first terminal apparatus and that is requested by the second terminal apparatus, and the first indication information further includes at least one of the following: a priority of a message to be sent by the second terminal apparatus, a channel access type of the message to be sent by the second terminal apparatus, an identifier of the second terminal apparatus, an identifier of the first terminal apparatus, a transmission type of the second terminal apparatus, a time domain resource required by the second terminal apparatus, a frequency domain resource required by the second terminal apparatus, a packet delay budget required by the second terminal apparatus, request information of a feedback resource, and a parameter of a requested feedback resource.

With reference to the fourth aspect, in some implementations of the fourth aspect, the first indication information includes sixteenth indication information, where the sixteenth indication information indicates the priority of the message to be sent by the second terminal apparatus or the channel access type of the message to be sent by the second terminal apparatus; and the method further includes: The first terminal apparatus determines, based on the sixteenth indication information and an association relationship, the priority of the message to be sent by the second terminal apparatus and the channel access type of the message to be sent by the second terminal apparatus, where the association relationship is an association relationship between the priority of the message to be sent by the second terminal apparatus and the channel access type of the message to be sent by the second terminal apparatus.

With reference to the fourth aspect, in some implementations of the fourth aspect, the first indication information and the parameter to be used by the second terminal apparatus to send the first data are carried in same signaling, the parameter to be used by the second terminal apparatus to send the first data includes the identifier of the first terminal apparatus and the identifier of the second terminal apparatus, and the first indication information does not include the identifier of the first terminal apparatus or the identifier of the second terminal apparatus; or the first indication information and the parameter to be used by the second terminal apparatus to send the first data are not carried in same signaling, and the first indication information includes the identifier of the first terminal apparatus and the identifier of the second terminal apparatus.

With reference to the fourth aspect, in some implementations of the fourth aspect, the first indication information includes the information indicating that the transmission of the first data is not completed, and the information indicating that the transmission of the first data is not completed includes any one of the following: information indicating a size of data whose transmission is not completed by the second terminal apparatus; or information indicating a buffer size of the second terminal apparatus.

With reference to the fourth aspect, in some implementations of the fourth aspect, the first indication information includes resource reservation information of the first data sent by the second terminal apparatus, and the resource reservation information includes at least one of the following: the packet delay budget required by the second terminal apparatus, the priority of the message to be sent by the second terminal apparatus, the channel access type of the message to be sent by the second terminal apparatus, the request information of the feedback resource, the parameter of the requested feedback resource, a reservation periodicity, the time domain resource required by the second terminal apparatus, the frequency domain resource required by the second terminal apparatus, a time interval between two adjacent data packets sent by the second terminal apparatus, a demodulation reference signal pattern, a demodulation reference signal port, a format of the sidelink control information, and a modulation and coding scheme.

With reference to the fourth aspect, in some implementations of the fourth aspect, the resource reservation information includes seventeenth indication information, where the seventeenth indication information indicates the priority of the message to be sent by the second terminal apparatus or the channel access type of the message to be sent by the second terminal apparatus, and the method further includes: The first terminal apparatus determines, based on the seventeenth indication information and an association relationship, the priority of the message to be sent by the second terminal apparatus and the channel access type of the message to be sent by the second terminal apparatus, where the association relationship is an association relationship between the priority of the message to be sent by the second terminal apparatus and the channel access type of the message to be sent by the second terminal apparatus.

With reference to the fourth aspect, in some implementations of the fourth aspect, the packet delay budget required by the second terminal apparatus is used by the first terminal apparatus to determine a time domain resource that is in the COT and that is to be used by the second terminal apparatus to send information.

With reference to the third aspect or the fourth aspect, in some implementations, the first indication information is carried in first-order sidelink control information and/or second-order sidelink control information; the eleventh indication information is carried in first-order sidelink control information and/or second-order sidelink control information; the twelfth indication information is carried in first-order sidelink control information and/or second-order sidelink control information; the thirteenth indication information is carried in first-order sidelink control information and/or second-order sidelink control information; the fourteenth indication information is carried in first-order sidelink control information and/or second-order sidelink control information; or the fifteenth indication information is carried in first-order sidelink control information and/or second-order sidelink control information.

With reference to the third aspect or the fourth aspect, in some implementations, the first indication information is carried in a dedicated field in first-order sidelink control information and/or second-order sidelink control information, and/or the first indication information is carried in a format indication field in the first-order sidelink control information and/or the second-order sidelink control information; or the eleventh indication information is carried in a dedicated field in first-order sidelink control information and/or second-order sidelink control information, and/or the eleventh indication information is carried in a format indication field in the first-order sidelink control information and/or the second-order sidelink control information; or the twelfth indication information is carried in a dedicated field in first-order sidelink control information and/or second-order sidelink control information, and/or the twelfth indication information is carried in a format indication field in the first-order sidelink control information and/or the second-order sidelink control information; or the thirteenth indication information is carried in a dedicated field in first-order sidelink control information and/or second-order sidelink control information, and/or the thirteenth indication information is carried in a format indication field in the first-order sidelink control information and/or the second-order sidelink control information; or the fourteenth indication information is carried in a dedicated field in first-order sidelink control information and/or second-order sidelink control information, and/or the fourteenth indication information is carried in a format indication field in the first-order sidelink control information and/or the second-order sidelink control information; or the fifteenth indication information is carried in a dedicated field in first-order sidelink control information and/or second-order sidelink control information, and/or the fifteenth indication information is carried in a format indication field in the first-order sidelink control information and/or the second-order sidelink control information.

With reference to the third aspect or the fourth aspect, in some implementations, the sidelink control information is second-order sidelink control information.

With reference to the third aspect or the fourth aspect, in some implementations, the parameter to be used by the second terminal apparatus to send the first data includes at least one of the following: a source identifier, a destination identifier, a cast type indicator, a hybrid automatic repeat request HARQ process number, a redundancy version, a new data indicator, a channel state information CSI request, and a HARQ enabling indicator.

For beneficial effects of the second aspect, refer to the related descriptions in the first aspect. Details are not described herein again.

According to a fifth aspect, an information transmission method is provided. The method may be performed by a terminal apparatus; or may be performed by a component (for example, a chip or a circuit) of a terminal apparatus. This is not limited. For ease of description, the following uses an example in which the method is performed by a first terminal apparatus for description.

The method may include: The first terminal apparatus obtains a channel occupancy time COT; and the first terminal apparatus sends first information to a second terminal apparatus, where the first information includes at least one of the following: a remaining length of the COT, a length of the COT, a used length of the COT, a frequency domain resource occupied by the COT, and a channel access priority type.

Based on the foregoing technical solution, after obtaining the COT, the first terminal apparatus may send the first information to the second terminal apparatus, where the first information may indicate structure information of the COT, for example, the length of the COT, the remaining length of the COT, the used length of the COT, the frequency domain resource occupied by the COT, and the channel access priority type. In this way, the second terminal apparatus may be enabled to determine a structure of the COT, to receive and send corresponding data when a resource of the COT needs to be shared.

With reference to the fifth aspect, in some implementations of the fifth aspect, the method further includes: The first terminal apparatus receives first indication information from the second terminal apparatus, where the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus.

With reference to the fifth aspect, in some implementations of the fifth aspect, that the first terminal apparatus sends first information to a second terminal apparatus includes: The first terminal apparatus sends sidelink control information to the second terminal apparatus, where the sidelink control information includes the first information.

With reference to the fifth aspect, in some implementations of the fifth aspect, the sidelink control information further includes at least one of the following: priority indication information for sending data by the first terminal apparatus in the COT; reservation periodicity indication information for sending data by the first terminal apparatus in the COT; time domain resource indication information for sending data by the first terminal apparatus in the COT; and frequency domain resource indication information for sending data by the first terminal apparatus in the COT.

With reference to the fifth aspect, in some implementations of the fifth aspect, the sidelink control information further includes second information, and the second information indicates that the sidelink control information includes the first information.

Based on the foregoing technical solution, when receiving the sidelink control information, the second terminal apparatus may determine, based on the second information in the sidelink control information, whether the sidelink control information includes the first information indicating the structure of the COT, so that the second terminal apparatus correspondingly performs resolution and signaling parsing.

According to a sixth aspect, an information transmission method is provided. The method may be performed by a terminal apparatus; or may be performed by a component (for example, a chip or a circuit) of a terminal apparatus. This is not limited. For ease of description, the following uses an example in which the method is performed by a second terminal apparatus for description.

The method may include: The second terminal apparatus receives first information from a first terminal apparatus, where the first information includes at least one of the following: a remaining length of a COT, a length of the COT, a used length of the COT, a frequency domain resource occupied by the COT, and a channel access priority type.

With reference to the sixth aspect, in some implementations of the sixth aspect, the method further includes: The second terminal apparatus sends first indication information to the first terminal apparatus, where the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus.

With reference to the sixth aspect, in some implementations of the sixth aspect, that the second terminal apparatus receives first information from a first terminal apparatus includes: The second terminal apparatus receives sidelink control information from the first terminal apparatus, where the sidelink control information includes the first information.

With reference to the sixth aspect, in some implementations of the sixth aspect, the sidelink control information further includes at least one of the following: priority indication information for sending data by the first terminal apparatus in the COT; reservation periodicity indication information for sending data by the first terminal apparatus in the COT; time domain resource indication information for sending data by the first terminal apparatus in the COT; and frequency domain resource indication information for sending data by the first terminal apparatus in the COT.

With reference to the sixth aspect, in some implementations of the sixth aspect, the sidelink control information further includes second information, and the second information indicates that the sidelink control information includes the first information.

For beneficial effects of the sixth aspect, refer to the related descriptions in the fifth aspect. Details are not described herein again.

According to a seventh aspect, a communication apparatus is provided. The apparatus is configured to perform the method in any possible implementation of the first aspect to the sixth aspect. Specifically, the apparatus may include a unit and/or a module configured to perform the method in any possible implementation of the first aspect to the sixth aspect, for example, a processing unit and/or a communication unit.

In an implementation, the apparatus is a terminal apparatus (for example, a first terminal apparatus or a second terminal apparatus). When the apparatus is the terminal apparatus, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used for the terminal apparatus (for example, the first terminal apparatus or the second terminal apparatus). When the apparatus is the chip, the chip system, or the circuit used for the terminal apparatus, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any possible implementation of the first aspect to the sixth aspect. Optionally, the apparatus further includes the memory, configured to store the computer program or the instructions. Optionally, the apparatus further includes a communication interface, and the processor reads, through the communication interface, the computer program or instructions stored in the memory.

In an implementation, the apparatus is a terminal apparatus (for example, a first terminal apparatus or a second terminal apparatus).

In another implementation, the apparatus is a chip, a chip system, or a circuit used for the terminal apparatus (for example, the first terminal apparatus or the second terminal apparatus).

According to a ninth aspect, this application provides a processor, configured to perform the method provided in the first aspect to the sixth aspect.

Unless otherwise specified, or if the operations such as sending and obtaining/receiving related to the processor do not conflict with actual functions or internal logic of the processor in related descriptions, the operations may be understood as operations such as outputting, receiving, and inputting of the processor, or may be understood as sending and receiving operations performed by a radio frequency circuit and an antenna. This is not limited in this application.

According to a tenth aspect, a computer-readable storage medium is provided. The computer-readable medium stores program code to be executed by a device, and the program code is used to perform the method in any possible implementation of the first aspect to the sixth aspect.

According to an eleventh aspect, a computer program product including instructions is provided. When the computer program product runs on a computer, the computer is enabled to perform the method in any possible implementation of the first aspect to the sixth aspect.

According to a twelfth aspect, a communication system is provided. The communication system includes the foregoing first terminal apparatus and second terminal apparatus.

### BRIEF DESCRIPTION OF DRAWINGS

FIG. 1A and FIG. 1B are diagrams of wireless communication systems applicable to embodiments of this application;
FIG. 2 is a diagram of an information transmission method 200 according to an embodiment of this application;
FIG. 3 is a diagram of a COT;
FIG. 4 is a diagram in which SCI #1 and a MAC CE include COT indication information;
FIG. 5 is a diagram of SCI #1;
FIG. 6 is a diagram of messages in terms of time;
FIG. 7 is a diagram of an information transmission method 700 according to an embodiment of this application;
FIG. 8 is another diagram of SCI #1;
FIG. 9 is a diagram of an information transmission method 900 according to an embodiment of this application;
FIG. 10 is a schematic block diagram of a communication apparatus 1000 according to an embodiment of this application;
FIG. 11 is a schematic block diagram of a communication apparatus 1100 according to an embodiment of this application; and
FIG. 12 is a schematic block diagram of a chip system 1200 according to an embodiment of this application.

### DESCRIPTION OF EMBODIMENTS

The following describes technical solutions in embodiments of this application with reference to accompanying drawings.

The technical solutions provided in this application can be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to a future communication system, for example, a 6th generation (6th generation, 6G) mobile communication system. The technical solutions provided in this application can be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. The V2V refers to communication between vehicles. The V2P refers to communication between a vehicle and a person (including a pedestrian, a bicycle rider, a driver, or a passenger). The V2I refers to communication between a vehicle and an infrastructure, for example, a road side unit (road side unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU. The V2N refers to communication between a vehicle and a network device. It may be understood that the foregoing descriptions are examples, and embodiments of this application are not limited thereto. For example, the V2X may further include NR system-based V2X communication in current 3GPP Rel-16 and later releases.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal device are: a mobile phone (mobile phone), a tablet computer, a notebook computer, a palmtop computer, a mobile internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, or a terminal device in a future evolved public land mobile network (public land mobile network, PLMN). This is not limited in embodiments of this application.

By way of example and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn or integrated into clothes or an accessory of a user. The wearable device is not merely a hardware device, but also implements a powerful function through software support, data exchange, and cloud interaction. In a broad sense, intelligent wearable devices include full-featured and large-size devices, for example, smart watches or smart glasses, that can implement complete or partial functions without depending on smartphones, and devices, for example, various smart bands or smart jewelry used for monitoring physical signs, that dedicated to only one type of application and need to be used together with other devices such as smartphones.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip; or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a master station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or movable. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of the network device may be a network device, or may be an apparatus, for example, a chip system or a chip, that can support the network device in implementing the function. The apparatus may be mounted in the network device. In embodiments of this application, the chip system may include a chip; or may include a chip and another discrete component.

The network device and the terminal device may be deployed on land, where the deployment includes indoor or outdoor, or handheld or vehicle-mounted deployment, may be deployed on water, or may be deployed on an aerocraft, a balloon, and a satellite in air. Scenarios in which the network device and the terminal device are located are not limited in embodiment of this application.

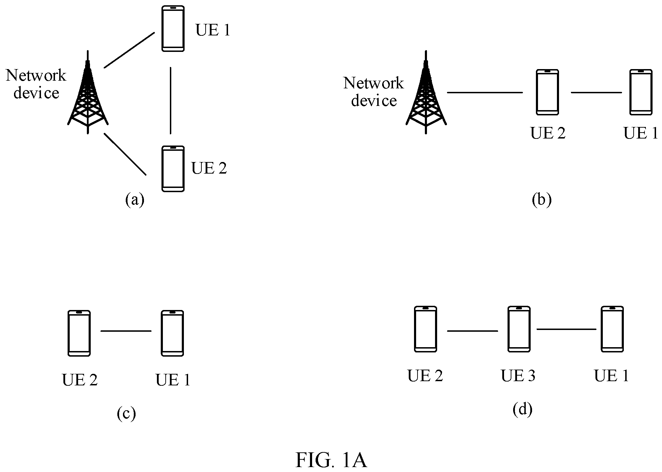

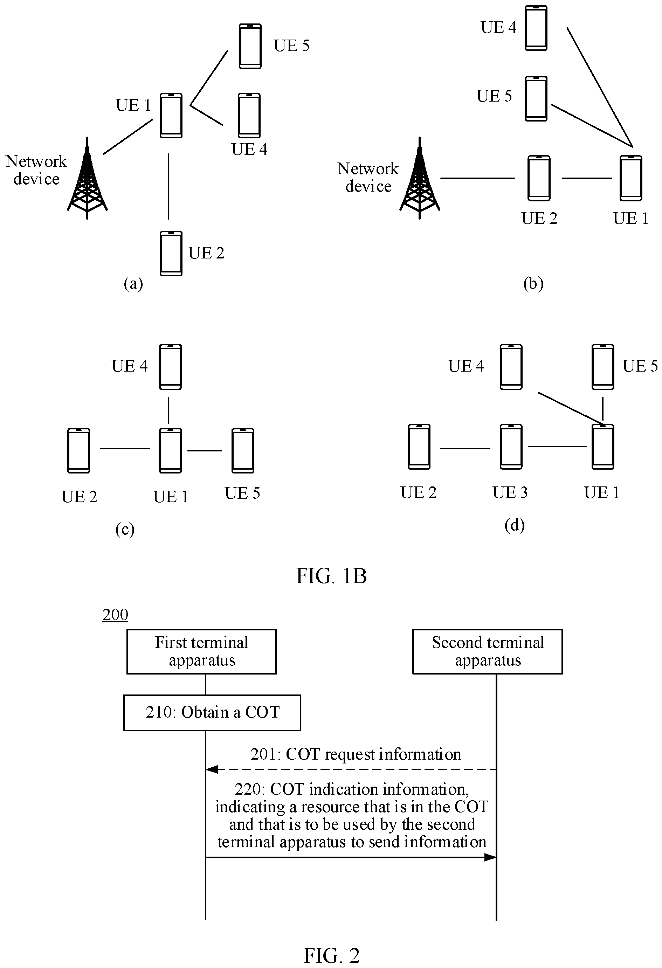

First, a communication system applicable to embodiments of this application is briefly described with reference to FIG. 1A and FIG. 1B.

FIG. 1A and FIG. 1B are diagrams of wireless communication systems applicable to embodiments of this application. As shown in FIG. 1A and FIG. 1B, the wireless communication system may include at least one terminal device, for example, a UE 1, a UE 2, a UE 3, a UE 4, and a UE 5 shown in the figure. Optionally, the wireless communication system may further include at least one network device, for example, a network device shown in the figure.

The network device and the terminal device may communicate with each other. For example, the network device and the terminal device may communicate with each other through a Uu interface, and a link (link) for communication between the network device and the terminal device may be denoted as a Uu link. As shown in FIG. 1A(a) or FIG. 1B(a), the network device and the UE 1 may directly communicate with each other. As shown in FIG. 1A(b) or FIG. 1B(b), the network device and the UE 1 may alternatively communicate with each other through the UE 2. Similarly, the network device and the UE 2 may directly communicate with each other, or the network device and the UE 2 may communicate with each other through the UE 1. It may be understood that, the Uu link represents a connection relationship between the terminal device and the network device, and is a logical concept rather than a physical entity. It may be understood that the Uu link is merely named for differentiation, and a specific name of the Uu link does not limit the protection scope of this application.

Terminal devices may also communicate with each other. For example, the terminal devices may directly communicate with each other. As shown in FIG. 1A(a) to FIG. 1A(c) and FIG. 1B(a) to FIG. 1B(c), the UE 1 and the UE 2 may directly communicate with each other. For another example, the terminal devices may communicate with each other through another device, for example, a network device or a terminal device. As shown in FIG. 1A(a), the UE 1 and the UE 2 may communicate with each other through the network device. As shown in FIG. 1A(d) and FIG. 1B(d), the UE 1 and the UE 2 may communicate with each other through the UE 3. An interface for the communication between the terminal devices may be denoted as a proximity-based services communication 5 (proximity-based services communication 5, PC5) interface, a link for the communication between the terminal devices may be denoted as a sidelink (sidelink, SL), and the communication between the terminal devices may also be denoted as SL communication. The sidelink may also be referred to as a side-link, a secondary link, or the like. It may be understood that the sidelink represents a connection relationship between the terminal devices, and is a logical concept rather than a physical entity. The sidelink is merely named for differentiation, and a specific name of the sidelink does not limit the protection scope of this application.

Unicast communication may be performed between devices. For example, unicast communication may be performed between terminal devices. Unicast means that one transmit terminal and one receive terminal form a unicast connection pair. For example, FIG. 1A is used as an example. Unicast communication may be performed between the UE 1 and the UE 2.

Multicast communication may be performed between devices. For example, multicast communication may be performed between terminal devices. Multicast means that one sending terminal and at least one receiving terminal form a multicast connection pair. For example, FIG. 1B is used as an example. Multicast communication may be performed between the UE 1 and the UE 2, the UE 4, and the UE 5. As shown in in FIG. 1B(a), the network device and the UE 1 may directly communicate with each other, and multicast communication may be performed between one UE 1 and a plurality of UEs, for example, the UE 2, the UE 4, and the UE 5. When multicast communication is performed between the UE 1 and the plurality of UEs, the multicast communication may be performed in network coverage, as shown in in FIG. 1B(a) or (b); or the multicast communication may be performed without network coverage, as shown in in FIG. 1B(c) or (d). It may be understood that, in FIG. 1B, an example in which multicast communication is performed between the UE 1 and three UEs is used for description. This is not limited. For example, multicast communication may be performed between the UE 1 and more UEs.

In an example, SL communication between terminal devices may be used in vehicle-to-everything or an intelligent transportation system (intelligent transportation system, ITS), for example, the V2X communication described above.

Optionally, SL communication between terminal devices may be performed in network coverage, or may be performed without network coverage. As shown in FIG. 1A(a), FIG. 1A(b), FIG. 1B(a), and FIG. 1B(b), the UE 1 and another UE may communicate with each other in network coverage. Alternatively, as shown in FIG. 1A(c), FIG. 1A(d), FIG. 1B(c), and FIG. 1B(d), the UE 1 and another UE may communicate with each other out of network coverage (out-of-coverage).

Optionally, configuration information used during SL communication between terminal devices, for example, a time-frequency resource used during the SL communication between the terminal devices, may be configured or scheduled by a network device, or may be autonomously selected by the terminal device. This is not limited.

It should be understood that FIG. 1A and FIG. 1B are merely examples of simplified diagrams for ease of understanding. The wireless communication system may further include another network device or another terminal device, which is not illustrated in FIG. 1A and FIG. 1B. Embodiments of this application are applicable to any communication scenario in which a transmit-end device communicates with a receive-end device.

For ease of understanding embodiments of this application, the following briefly describes several terms in this application.

### 1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. In the unlicensed spectrum, a communication device may use a spectrum resource through contention. SL communication in the unlicensed spectrum may be referred to as SL-U, and NR cellular communication in the unlicensed spectrum may be referred to as NR-U.

In a possible manner, a communication device contends for a channel through listen-before-talk (listen-before-talk, LBT), to use an unlicensed spectrum resource.

### 2. LBT

LBT is a channel access rule based on random backoff (random back-off). Before accessing a channel and starting to send data, a UE first senses (senses) whether the channel is idle (idle). If the channel has been idle for a period of time, the channel can be occupied. If the channel is not idle, the channel can be occupied only after the channel becomes idle. In a possible implementation, energy-based detection and signal class-based detection are used to determine whether a channel is idle. The energy-based detection is used as an example. When detected energy exceeds a detection threshold, it is determined that the channel is busy, in other words, access to the channel is not allowed. When the detected energy is lower than the detection threshold for a period of time, it is determined that the channel is idle, in other words, access to the channel is allowed.

A channel access process includes type1 (type1) LBT and type2 LBT. The type1 LBT is backoff-based LBT, a backoff time is related to a channel access priority class (channel access priority class, CAPC), and access to a channel is allowed only after the channel is idle for a long time. The type2 LBT requires only a short idle time (for example, 16 µs or 25 µs) of a channel for a UE to access the channel, and is mainly used when a channel occupancy time (channel occupancy time, COT) is shared.

### 3. COT

Channel occupancy (CO, channel occupancy) refers to transmission on one or more channels after a UE performs a channel access process. If a UE obtains, through LBT, a right to use a channel, the UE may occupy the channel in a period of time, and the period of time may be referred to as a COT. The COT may be a time concept, that is, a time of SL transmission; or may be a resource concept, that is, a time-frequency resource occupied by SL transmission.

Transmission of the UE cannot exceed a limit of a maximum channel occupancy time (maximum channel occupancy time, MCOT), which is denoted as *T*_{*m*cot,*p*}. For different CAPCs, values of *T*_{*m*cot,*p*} are different, as shown in Table 1 or Table 2. In Table 1 and Table 2, CWₚ is a contention window (contention window), CW_{min, p} is a minimum value of the contention window, and CW_{max, p} is a maximum value of the contention window.

**Table 1**

| CAPC (p) | mₚ | CW_{min, p} | CW_{max, p} | *T*_{*m*cot,*p*} | CWₚ value |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63 } |
| 4 | 7 | 15 | 1023 | 8 ms or 10 ms | {15, 31, 63, 127, 255, 511, 1023} |

**Table 2**

| CAPC (p) | mₚ | CW_{min, p} | CW_{max, p} | T_{cot, p} | CWₚ value |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

### 4. COT sharing

UEs may share an unlicensed spectrum resource with each other. For example, if a UE obtains, through LBT, a right to use a channel, the UE and another device may jointly occupy the channel. This process is COT sharing. The UE may share the right to use the channel in a COT with the another device, to be specific, the UE may share, with the another device, a resource shared in the COT, including a time domain resource and a frequency domain resource. The another device may send data on the resource shared by the UE.

A specific solution of COT sharing between UEs is described in detail below.

### 5. Time domain unit and frequency domain unit

Data or information may be carried on a time-frequency resource.

In time domain, the time-frequency resource may include one or more time domain units (or may also be referred to as time units). A time domain unit may be a symbol, a mini-slot (mini-slot), a slot (slot), a partial slot (partial slot), a subframe (subframe), a radio frame (frame), or the like.

In frequency domain, the time-frequency resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

### 6. Priority

A UE may send a plurality of services at the same time, and priorities of the plurality of services may be different. Therefore, a priority of the UE may also be described as a service priority of the UE. The service priority of the UE is specifically a transmission priority (transmission priority) of the UE.

The service priority may also be referred to as an L1 priority (L1 priority), a physical layer priority, a priority carried in sidelink control information (sidelink control information, SCI), a priority corresponding to a physical sidelink shared channel (physical sidelink shared channel, PSSCH) associated with SCI, a transmission priority, a priority of sending a PSSCH, a priority for resource selection, a priority of a logical channel, or a highest-level priority of a logical channel.

There may be a correspondence between a priority level and a priority value. For example, a higher priority level corresponds to a lower priority value, or a lower priority level corresponds to a lower priority value. For example, the higher priority level corresponds to the lower priority value, and the priority value may be an integer ranging from 1 to 8 or an integer ranging from 0 to 7. If the priority value ranges from 1 to 8, the priority value 1 indicates a highest-level priority.

### 7. Identifier of a terminal apparatus

An identifier of a terminal apparatus is an identifier that indicates, identifies, or corresponds to a corresponding terminal device. For example, the identifier of the terminal apparatus may be an index or a number that uniquely identifies the terminal device. The identifier may be configured via signaling, preconfigured, or predefined. In an example, the identifier of the terminal apparatus is any one of the following: a medium access control (medium access control, MAC) address, a subscriber identity module (subscriber identity module, SIM) card number, an international mobile equipment identity (international mobile equipment identity, IMEI), and the like of the terminal device.

Optionally, the identifier of the terminal apparatus may alternatively be an identifier that indicates, identifies, or corresponds to a corresponding terminal device during transmission. The identifier may be configured via signaling, preconfigured, or predefined, for example, an IP address, a network temporary identifier (radio network temporary identifier, RNTI), a source identifier of a transmitting device, and a destination identifier of a receiving device. Optionally, the source identifier of the transmitting device may be an identifier associated with a specific to-be-sent service or message. Optionally, the destination identifier of the receiving device may be an identifier associated with a specific to-be-received service or message.

The foregoing briefly describes the terms related in this application, and details are not described in the following embodiments. In addition, the foregoing descriptions of the terms are merely descriptions for ease of understanding, and do not limit the protection scope of embodiments of this application.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this application, information indicated by indication information is referred to as to-be-indicated information. In a specific implementation process, the to-be-indicated information is indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence that is of a plurality of pieces of information and that is pre-agreed on (for example, stipulated in a protocol), to reduce indication overheads to some extent.

The following describes in detail an information transmission method provided in embodiments of this application with reference to the accompanying drawings. Embodiments provided in this application are applicable to any communication scenario in which a transmit-end device communicates with a receive-end device, for example, may be applied to the communication systems shown in FIG. 1A and FIG. 1B.

FIG. 2 is a diagram of an information transmission method 200 according to an embodiment of this application. The method 200 may include the following steps.

210: A first terminal apparatus obtains a COT.

The first terminal apparatus obtains the COT, in other words, the first terminal apparatus accesses a channel, so that the first terminal apparatus may transmit data in the COT. A manner of obtaining the COT by the first terminal apparatus is not limited. In a possible implementation, the first terminal apparatus obtains the COT through LBT. For example, the first terminal apparatus may obtain the COT through Type1 LBT, to be specific, the first terminal apparatus may actively preempt the COT. For another example, the COT may be allocated or indicated to the first terminal apparatus by another terminal apparatus or a network device.

220: The first terminal apparatus sends COT indication information to a second terminal apparatus, where the COT indication information indicates a resource that is in the COT and that is to be used by the second terminal apparatus to send information.

That the COT indication information indicates a resource that is in the COT obtained by the first terminal apparatus and that is to be used by the second terminal apparatus to send information may also be understood as that the COT indication information indicates the second terminal apparatus to share the resource that is in the COT obtained by the first terminal apparatus. A name of the COT indication information is not limited in embodiments of this application. For example, the COT indication information may also be referred to as COT sharing information.

Based on the foregoing technical solution, after obtaining the COT, the first terminal apparatus may send the COT indication information to the second terminal apparatus, to indicate, to the second terminal apparatus, the resource that is in the COT and that is to be used by the second terminal apparatus to send information. In this way, after the second terminal apparatus receives the COT indication information, the second terminal apparatus may send information on the resource, indicated by the COT indication information, that is in the COT and that is to be used by the second terminal apparatus to send information. In this way, COT sharing on an SL is enabled, resource utilization is improved, and a transmission delay is reduced.

Optionally, before step 220, the method 200 further includes step 201.

201: The second terminal apparatus sends COT request information (namely, first indication information) to the first terminal apparatus.

The COT request information may be used to trigger the first terminal apparatus to send the COT indication information to the second terminal apparatus, the COT request information may be used to request (request) the first terminal apparatus to send the COT indication information to the second terminal apparatus, or the COT request information may be used by the first terminal apparatus to determine to send the COT indication information to the second terminal apparatus. For example, after receiving the COT request information, the first terminal apparatus sends the COT indication information to the second terminal apparatus based on the COT request information or in response to the COT request information. A name of the COT request information constitutes no limitation on the protection scope of embodiments of this application.

Specific content of the COT request information is not limited. For example, the COT request information includes at least one of the following: resource information that is of the COT of the first terminal apparatus and that is requested by the second terminal apparatus, information indicating that transmission of first data is not completed, and resource reservation information of second data. The first data is data sent by the second terminal apparatus to the first terminal apparatus, and the second data is data to be sent by the second terminal apparatus to the first terminal apparatus. Specifically, detailed descriptions are provided below with reference to a method 700.

Based on this, after receiving the indication from the second terminal apparatus, the first terminal apparatus may send the COT indication information to the second terminal apparatus. In this way, a requirement of the second terminal apparatus for the COT can be responded in a timely manner, and the first terminal apparatus may further properly allocate, based on the requirement of the second terminal apparatus for the COT, the COT resource shared with the second terminal apparatus, to improve the resource utilization.

Optionally, the method 200 further includes: The first terminal apparatus sends conflict indication information in the COT. The conflict indication information is indication information sent by an assistance terminal apparatus to an assisted terminal apparatus. The indication information is used to help the assisted terminal apparatus select a resource used for communication. The indication information includes at least one of the following: indication information of an available (or preferred) resource, indication information of an unavailable (or unpreferred) resource, a quantity of available (or preferred) resources, a quantity of unavailable (or unpreferred) resources, and the like.

The following describes in detail the solution of the embodiment shown in the method 200 with reference to several aspects.

### Aspect 1: Response message for the COT indication information

Optionally, the method 200 further includes: The second terminal apparatus sends a response message for the COT indication information to the first terminal apparatus.

In an example, the response message for the COT indication information may indicate at least one of the following: whether the second terminal apparatus successfully receives the COT indication information, and whether the second terminal apparatus accepts the COT resource shared by the first terminal apparatus. For ease of understanding, an example in which the response message for the COT indication information indicates whether the second terminal apparatus accepts the COT resource shared by the first terminal apparatus is used below for description.

In a first possible case, the first terminal apparatus receives an answer message for third data from the second terminal apparatus, where the answer message for the third data may indicate whether the second terminal apparatus accepts the COT resource shared by the first terminal apparatus, in other words, the answer message for the third data may be used as the response message for the COT indication information.

The third data is data sent by the first terminal apparatus to the second terminal apparatus. The answer message may be, for example, a hybrid automatic repeat request (hybrid automatic repeat request, HARQ) answer message, for example, an acknowledgement (acknowledgement, ACK) or a negative acknowledgement (negative acknowledgement, NACK). Specifically, if the second terminal apparatus successfully receives the third data, the answer message fed back by the second terminal apparatus to the first terminal apparatus is the ACK; or if the second terminal apparatus fails to receive the third data, the answer message fed back by the second terminal apparatus to the first terminal apparatus is the NACK. The answer message may be, for example, carried on a PSFCH.

In a possible implementation, the answer message for the third data may indicate both whether the second terminal apparatus accepts the COT resource shared by the first terminal apparatus and indicate whether the second terminal apparatus successfully receives the third data. For example, when the fed-back answer message is the ACK, it indicates that the second terminal apparatus accepts the COT resource shared by the first terminal apparatus, and indicates that the second terminal apparatus successfully receives the third data sent by the first terminal apparatus. For example, when the fed-back answer message is the NACK, it indicates that the second terminal apparatus does not accept the COT resource shared by the first terminal apparatus, and indicates that the second terminal apparatus fails to receive the third data sent by the first terminal apparatus.

In another possible implementation, the answer message for the third data may implicitly indicate whether the second terminal apparatus accepts the COT resource shared by the first terminal apparatus. In an example, whether the second terminal apparatus receives the COT resource shared by the first terminal apparatus is implicitly indicated by using different resources (or different resource groups or resource sets). For example, if the second terminal apparatus sends the answer message for the third data to the first terminal apparatus by using a first resource, it indicates that the second terminal apparatus accepts the COT resource shared by the first terminal apparatus; or if the second terminal apparatus sends the answer message for the third data to the first terminal apparatus by using a second resource, it indicates that the second terminal apparatus does not accept the COT resource shared by the first terminal apparatus. Optionally, the first resource and the second resource are different, or the first resource and the second resource belong to different resource sets.

The resource may be a time domain resource, a frequency domain resource, or a code domain resource. In an example, the code domain resource may be represented by using a root sequence number, a cyclic shift, an orthogonal code, or an initial sequence value. A first resource group and a second resource group may satisfy at least one of the following: different time domain resources, different frequency domain resources, and different code domain resources (for example, different PSFCH sequences).

Optionally, the HARQ answer message is carried on the PSFCH. Whether the second terminal apparatus accepts the COT resource shared by the first terminal apparatus is also explicitly or implicitly carried on the PSFCH in the foregoing manner.

Optionally, a PSFCH resource (or a resource set) may be used to correspond to a request for a corresponding resource or an answer of the second terminal apparatus for the corresponding COT shared resource. These resources may be indexes of time domain resources, indexes of frequency domain resources, or indexes of code domain resources. Optionally, the code domain resources are indicated by different sequence parameters, for example, a root sequence number, a cyclic shift, an orthogonal code, and an index of an initial sequence value. When a plurality of second terminal apparatuses send responses to the first terminal apparatus, the first terminal apparatus may determine, in this manner, a specific second terminal apparatus that responds or answers. Therefore, detection complexity of the first terminal apparatus is reduced.

In the foregoing manner, when sending the HARQ answer message, the second terminal apparatus also sends the response message for the COT indication information. Reliability and effectiveness of COT resource allocation are improved and system performance is improved, without increasing signaling overheads.

In a second possible case, the first terminal apparatus receives the response message for the COT indication information from the second terminal apparatus, where the response message for the COT indication information indicates whether the second terminal apparatus accepts the COT resource shared by the first terminal apparatus.

In a possible implementation, the response message for the COT indication information may directly indicate whether the second terminal apparatus accepts the COT resource shared by the first terminal apparatus. In an example, the response message for the COT indication information is implemented by using at least one bit. For example, it is assumed that 1 bit indicates whether the second terminal apparatus accepts the COT resource shared by the first terminal apparatus. If the bit is set to "1", it indicates that the second terminal apparatus accepts the COT resource shared by the first terminal apparatus; or if the bit is set to "0", it indicates that the second terminal apparatus does not accept the COT resource shared by the first terminal apparatus. It should be understood that the foregoing descriptions are merely example descriptions, and no limitations are imposed.

In another possible implementation, the response message for the COT indication information may implicitly indicate whether the second terminal apparatus accepts the COT resource shared by the first terminal apparatus. In an example, whether the second terminal apparatus receives the COT resource shared by the first terminal apparatus is implicitly indicated by using different resources (or different resource groups or resource sets). For example, if the second terminal apparatus sends the response message for the COT indication information to the first terminal apparatus by using a third resource, it indicates that the second terminal apparatus accepts the COT resource shared by the first terminal apparatus; or if the second terminal apparatus sends the response message for the COT indication information to the first terminal apparatus by using a fourth resource, it indicates that the second terminal apparatus does not accept the COT resource shared by the first terminal apparatus.

The following describes several manners in which the second terminal apparatus sends the response message for the COT indication information to the first terminal apparatus.

In a first possible manner, after receiving the COT indication information, the second terminal apparatus actively sends the response message for the COT indication information to the first terminal apparatus.

In a second possible manner, after receiving the COT indication information based on an indication, the second terminal apparatus sends the response message for the COT indication information to the first terminal apparatus based on the indication of the first terminal apparatus. In an example, the first terminal apparatus may determine, based on a communication situation, whether to indicate the second terminal apparatus to send the response message for the COT indication information to the first terminal apparatus. For example, if a link is reliable enough, the first terminal apparatus may disable such a function, to be specific, the first terminal apparatus may indicate, to the second terminal apparatus, that the second terminal apparatus does not need to send the response message for the COT indication information to the first terminal apparatus. If interference on the link is severe, the first terminal apparatus may enable such a function, to be specific, the first terminal apparatus may indicate the second terminal apparatus to send the response message for the COT indication information to the first terminal apparatus. Based on the foregoing technical solution, whether the second terminal apparatus needs to send the response message for the COT indication information to the first terminal apparatus may be dynamically indicated.

Optionally, whether the second terminal apparatus is to send the response message for the COT indication information to the first terminal apparatus may be indicated based on indication information configured in a resource pool. The configured indication information may be a system message, or may be an RRC message. This is not limited in embodiments of this application.

For example, the first terminal apparatus sends information #A to the second terminal apparatus, where the information #A indicates whether the second terminal apparatus needs to send the response message for the COT indication information to the first terminal apparatus. Correspondingly, the second terminal apparatus receives the information #A, and if the information #A indicates the second terminal apparatus to send the response message for the COT indication information to the first terminal apparatus, the second terminal apparatus sends the response message for the COT indication information to the first terminal apparatus. If the information #A indicates that the second terminal apparatus does not need to send the response message for the COT indication information to the first terminal apparatus, the second terminal apparatus does not need to send the response message for the COT indication information to the first terminal apparatus. The information #A may be, for example, the indication information configured in the resource pool. Optionally, in an example, the information #A may alternatively be carried in SCI, for example, first-stage SCI or second-stage SCI.

In a possible implementation, the information #A is implemented by using one or more bits. For example, it is assumed that 1 bit indicates whether the second terminal apparatus needs to send the response message for the COT indication information to the first terminal apparatus. If the bit is set to "0", it indicates that the second terminal apparatus does not need to send the response message for the COT indication information to the first terminal apparatus; or if the bit is set to "1", it indicates that the second terminal apparatus needs to send the response message for the COT indication information to the first terminal apparatus. It should be understood that the foregoing descriptions are merely example descriptions, and no limitations are imposed.

In another possible implementation, the information #A is a specific field. For example, the information #A is carried in the second-stage SCI. Whether the second-stage SCI includes the specific field indicates whether the second terminal apparatus needs to send the response message for the COT indication information to the first terminal apparatus. For example, if the second-stage SCI includes the specific field, it indicates that the second terminal apparatus needs to send the response message for the COT indication information to the first terminal apparatus; or if the second-stage SCI does not include the specific field, it indicates that the second terminal apparatus does not need to send the response message for the COT indication information to the first terminal apparatus.

### Aspect 2: Signaling design of the COT indication information

Optionally, the COT indication information is carried in SCI #1.

The SCI #1 may be, for example, second-stage SCI; or may be newly defined SCI (for example, referred to as third-stage SCI). The SCI #1 is mentioned below for a plurality of times, and details are not described again.

Further, optionally, the first terminal apparatus sends indication information #1 to the second terminal apparatus, where the indication information #1 indicates whether the SCI #1 includes the COT indication information.

The indication information #1 may be, for example, carried in SCI, for example, first-stage SCI or second-stage SCI. In an example, the indication information #1 may be carried in a dedicated field in the SCI (for example, the first-stage SCI or the second-stage SCI); or the indication information #1 may be carried in a format indication field in the SCI. This is not limited.

In a possible implementation, the indication information #1 is implemented by using at least one bit. In an example, the indication information #1 whose value is a first value indicates that the SCI #1 includes the COT indication information. For example, it is assumed that 1 bit indicates whether the SCI #1 includes the COT indication information. For example, if the bit is set to "0", it indicates that the SCI #1 includes the COT indication information; or if the bit is set to "1", it indicates that the SCI #1 does not include the COT indication information. For another example, if the bit is set to "1 ", it indicates that the SCI #1 includes the COT indication information; or if the bit is set to "0", it indicates that the SCI#1 does not include the COT indication information. It should be understood that the foregoing descriptions are merely example descriptions, and no limitations are imposed.

Optionally, the COT indication information is carried in the SCI #1 and/or a medium access control-control element (medium access control-control element, MAC CE). Based on this, the COT indication information may be carried in the SCI #1, may be carried in the MAC CE, or may be partially carried in the SCI #1 and partially carried in the MAC CE. In this way, the information transmission method is applicable to more scenarios.

In an example, the COT indication information is carried in the SCI #1.

Based on this, the first terminal apparatus sends the SCI #1 to the second terminal apparatus, where the SCI #1 includes the COT indication information.

In another example, the COT indication information is carried in the MAC CE.

Based on this, the first terminal apparatus sends the MAC CE to the second terminal apparatus, where the MAC CE includes the COT indication information.

In another example, the COT indication information is carried in the SCI #1 and the MAC CE.

Based on this, the first terminal apparatus sends the SCI #1 and the MAC CE to the second terminal apparatus, where the SCI #1 and the MAC CE include the COT indication information. For example, the SCI #1 includes partial information in the COT indication information, and the MAC CE includes remaining information in the COT indication information. For example, when a quantity of bits required by the COT indication information is large, the COT indication information may be partially carried in the SCI #1 and partially carried in the MAC CE. For another example, the first terminal apparatus shares a COT resource with a plurality of second terminal apparatuses, information about some second terminal apparatuses in the COT indication information is carried in the SCI #1, and information about remaining second terminal apparatuses in the COT indication information is carried in the MAC CE. For another example, the SCI #1 indicates COT indication information in some time domain units (for example, X time domain units), and the MAC CE indicates COT indication information in remaining time domain units (for example, after the X time domain units), or the MAC CE indicates the COT indication information in all time domain units.

Further, optionally, the first terminal apparatus sends indication information #2 to the second terminal apparatus, where the indication information #2 indicates that the COT indication information is carried in the SCI #1 and/or the MAC CE.

The indication information #2 may be, for example, carried in SCI, for example, first-stage SCI or second-stage SCI. In an example, the indication information #2 may be carried in a dedicated field in the SCI (for example, the first-stage SCI or the second-stage SCI); or the indication information #2 may be carried in a format indication field in the SCI. This is not limited.

In a possible implementation, the indication information #2 is implemented by using at least one bit.

For example, it is assumed that 1 bit indicates that the COT indication information is carried in the SCI #1, or the COT indication information is carried in the SCI #1 and the MAC CE. For example, if the bit is set to "0", it indicates that the COT indication information is carried in the SCI #1; or if the bit is set to "1", it indicates that the COT indication information is carried in the SCI #1 and the MAC CE. For another example, if the bit is set to "1", it indicates that the COT indication information is carried in the SCI #1; or if the bit is set to "0", it indicates that the COT indication information is carried in the SCI #1 and the MAC CE. It should be understood that the foregoing descriptions are merely example descriptions, and no limitations are imposed.

For another example, it is assumed that 2 bits indicate that the COT indication information is carried in the SCI #1 and/or the MAC CE. If the bit is set to "01", it indicates that the COT indication information is carried in the SCI #1; if the bit is set to "10", it indicates that the COT indication information is carried in the MAC CE; or if the bit is set to "11", it indicates that the COT indication information is carried in the SCI #1 and the MAC CE. It should be understood that the foregoing descriptions are merely example descriptions, and no limitations are imposed.

The following describes several possible cases in which the COT indication information is carried in the SCI #1 and/or the MAC CE.

In a first possible case, a remaining length of the COT is less than or equal to X time domain units, and the COT indication information is carried in the SCI #1, where X is an integer greater than 1 or equal to 1. In this way, when the remaining length of the COT is short, the SCI #1 may indicate the COT indication information.

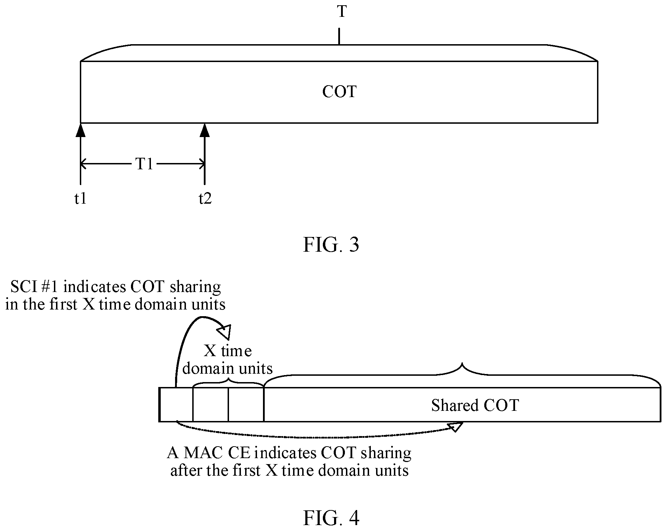

The remaining length of the COT may indicate a remaining time length that the COT has when the first terminal apparatus sends the COT indication information. For ease of understanding, a length of the COT, a used length of the COT, and the remaining length of the COT mentioned in embodiments of this application are first described herein with reference to FIG. 3. It may be understood that the length of the COT, the used length of the COT, and the remaining length of the COT are named for differentiation, and specific names of the length of the COT, the used length of the COT, and the remaining length of the COT do not limit the protection scope of embodiments of this application.

FIG. 3 is a diagram of a COT.
(1) A length of the COT indicates a total length of the COT after the first terminal apparatus obtains the COT. For example, the first terminal apparatus obtains, through LBT, a right to use a channel, and the first terminal apparatus may occupy the channel in a period of time, where duration of the period of time may be referred to as the length of the COT. As shown in FIG. 3, after the first terminal apparatus obtains the COT, the length of the COT is T.
(2) A remaining length of the COT (remaining length of COT) may indicate a remaining time length that the COT has when the first terminal apparatus sends COT indication information. As shown in FIG. 3, when the first terminal apparatus sends the COT indication information at a moment t1, the remaining length of the COT is T, in other words, the remaining length of the COT is equal to the length of the COT; or when the first terminal apparatus sends the COT indication information at a moment t2, the remaining length of the COT is T-T1.

Optionally, the remaining length of the COT may alternatively be determined relative to to-be-indicated COT indication information. For example, as shown in FIG. 3, when the first terminal apparatus sends the COT indication information at the moment t1, the remaining length of the COT may be a time length between the moment t1 and a moment t3, where the moment t3 is a time domain position that is indicated in the COT indication information and at which the second terminal apparatus sends information, for example, a start time domain position at which the second terminal apparatus sends information.

(3) A used length of the COT indicates a used time length that the COT has when the first terminal apparatus sends the COT indication information. As shown in FIG. 3, when the first terminal apparatus sends the COT indication information at the moment t1, the used length of the COT is 0; or when the first terminal apparatus sends the COT indication information at the moment t2, the used length of the COT is T1.

The foregoing describes the length of the COT, the used length of the COT, and the remaining length of the COT. Details are not described below again.

Based on the first possible case, when the remaining length of the COT is less than or equal to the X time domain units, the first terminal apparatus sends the SCI #1 to the second terminal apparatus, where the SCI #1 includes the COT indication information. In other words, in this case, the second terminal apparatus obtains the COT indication information from the SCI #1. FIG. 3 is used as an example. It is assumed that when the first terminal apparatus sends the COT indication information at the moment t2, the remaining length of the COT is T-T1. When T-T1 is less than or equal to the X time domain units, the first terminal apparatus sends SCI #1 to the second terminal apparatus, where the SCI #1 includes the COT indication information.

For example, a value of X may be predefined, configured via signaling, or preconfigured. This is not limited in this application.

For example, the value of X is related to at least one of the following: a processing capability of the second terminal apparatus and a subcarrier spacing (subcarrier spacing, SCS). The processing capability of the second terminal apparatus may be, for example, a processing time for demodulating a MAC CE by the second terminal device.

For example, if the SCS is 15 kHz, the value of X may be one or more values in [2, 4]. If the value of X is a plurality of values in [2, 4], different values correspond to different processing capabilities of the second terminal apparatus, in other words, one of 2, 3, and 4 may be selected as the value of X based on the processing capability of the second terminal device.

For another example, if the SCS is 30 kHz, the value of X may be one or more values in [3, 8]. If the value of X is a plurality of values in [3, 8], different values correspond to different processing capabilities of the second terminal apparatus, in other words, one of 3 to 8 may be selected as the value of X based on the processing capability of the second terminal device.

For another example, if the SCS is 60 kHz, the value of X may be one or more values in [5, 17]. If the value of X is a plurality of values in [5, 17], different values correspond to different processing capabilities of the second terminal apparatus, in other words, one of 5 to 17 may be selected as the value of X based on the processing capability of the second terminal device.

It may be understood that in embodiments of this application, [a, b] represents all values from a to b, including values a and b. For example, the value of X is one or more values in [2, 4]. If X is an integer, it indicates that the value of X may be 2, 3, or 4. Details are not described below again.

In a second possible case, a remaining length of the COT is greater than X time domain units, and the COT indication information is carried in the MAC CE. In this way, when the remaining length of the COT is long, the MAC CE may indicate the COT indication information, to avoid a problem, caused by a small quantity of SCI #1 signaling bits, that some time domain units cannot be indicated.

Based on this case, when the remaining length of the COT is greater than the X time domain units, the first terminal apparatus sends the MAC CE to the second terminal apparatus, where the MAC CE includes the COT indication information. In other words, in this case, the second terminal apparatus obtains the COT indication information from the MAC CE. FIG. 3 is used as an example. It is assumed that when the first terminal apparatus sends the COT indication information at a moment t2, the remaining length of the COT is T-T1. When T-T1 is greater than the X time domain units, the first terminal apparatus sends the MAC CE to the second terminal apparatus, where the MAC CE includes the COT indication information.

In a third possible case, a remaining length of the COT is greater than X time domain units, and the COT indication information is carried in the SCI #1 and the MAC CE. In this way, when the remaining length of the COT is long, the MAC CE and the SCI #1 may jointly indicate the COT indication information, to avoid a problem, caused by a small quantity of SCI #1 signaling bits, that some time domain units cannot be indicated.

Based on this case, when the remaining length of the COT is greater than the X time domain units, the first terminal apparatus sends the SCI #1 and the MAC CE to the second terminal apparatus, where the SCI #1 and the MAC CE include the COT indication information. In other words, in this case, the second terminal apparatus obtains the COT indication information from the SCI #1 and the MAC CE. FIG. 3 is used as an example. It is assumed that when the first terminal apparatus sends the COT indication information at a moment t2, the remaining length of the COT is T-T1. When T-T1 is greater than the X time domain units, the first terminal apparatus sends the SCI #1 and the MAC CE to the second terminal apparatus, where the SCI #1 and the MAC CE include the COT indication information.

In an example, the SCI #1 includes COT indication information in the first X time domain units in the COT, and the MAC CE includes COT indication information after the first X time domain units in the COT.

FIG. 4 is a diagram in which SCI #1 and a MAC CE include COT indication information. As shown in FIG. 4, when the remaining length of the COT is greater than the X time domain units, the first terminal apparatus sends the SCI #1 and the MAC CE to the second terminal apparatus, where the SCI #1 includes COT indication information in the first X time domain units in the COT, in other words, the SCI #1 indicates COT sharing in the first X time domain units, or the COT indication information included in the SCI #1 indicates a resource that is in the first X time domain units in the COT and that is to be used by the second terminal apparatus to send information; and the MAC CE includes the COT indication information after the first X time domain units in the COT, in other words, the MAC CE indicates COT sharing after the first X time domain units, or the COT indication information included in the MAC indicates a resource that is in a time domain unit after the first X time domain units in the COT and that is to be used by the second terminal apparatus to send information.

In another example, the SCI #1 includes COT indication information in the first X time domain units in the COT, and the MAC CE includes COT indication information in the first X time domain units in the COT.

In this example, the COT indication information included in the SCI #1 and the MAC CE indicates a resource that is in the first X time domain units in the COT and that is to be used by the second terminal apparatus to send information. For example, when a quantity of bits required by the COT indication information is large, the COT indication information may be partially carried in the SCI #1 and partially carried in the MAC CE. For another example, the first terminal apparatus shares a COT resource with a plurality of second terminal apparatuses, information about some second terminal apparatuses in the COT indication information is carried in the SCI #1, and information about remaining second terminal apparatuses in the COT indication information is carried in the MAC CE.

In another example, the SCI #1 includes COT indication information in the first X time domain units in the COT, and the MAC CE includes COT indication information in the first X time domain units in the COT and COT indication information after the first X time domain units in the COT.

In this example, the COT indication information included in the SCI #1 and the MAC CE indicates a resource that is in the first X time domain units in the COT and that is to be used by the second terminal apparatus to send information, and the MAC CE further includes the COT indication information indicating a resource that is in a time domain unit after the first X time domain units in the COT and that is to be used by the second terminal apparatus to send information.

In a fourth possible case, the COT indication information is located on a first time domain resource of the COT, and the COT indication information is carried in the SCI #1.

Based on this case, the COT indication information is located on the first time domain resource of the COT, and the first terminal apparatus sends the SCI #1 to the second terminal apparatus, where the SCI #1 includes the COT indication information. In other words, in this case, the second terminal apparatus obtains the COT indication information from the SCI #1.

That the COT indication information is located on a first time domain resource of the COT indicates that a resource that is indicated by the first terminal apparatus in the COT indication information and that is to be used by the second terminal apparatus to send information is located on the first time domain resource of the COT, in other words, the resource used by the second terminal apparatus to send information appears on the first time domain resource.

It should be noted that the COT indication information is located on the first time domain resource of the COT, and a position of a time domain resource used by the first terminal apparatus to send the COT indication information is not limited to the first time domain resource. For example, the first terminal apparatus sends the COT indication information at a moment t1. The moment t1 is not necessarily located on the first time domain resource of the COT. For example, the moment t1 may be located before a start moment of the first time domain resource.

For example, the first time domain resource is Y consecutive time domain units in the COT, and a start time domain unit in the Y consecutive time domain units is a start time domain unit of the COT, or a start time domain unit in the Y consecutive time domain units is a time domain unit in which the COT indication information is located, where Y is an integer greater than 1 or equal to 1.

For example, a value of Y may be predefined, configured via signaling, or preconfigured. This is not limited in this application.

For example, a value of Y is related to at least one of the following: a processing capability of the second terminal apparatus and an SCS. The processing capability of the second terminal device may be, for example, a processing time for demodulating a MAC CE by the second terminal device.

For example, if the SCS is 15 kHz, the value of Y may be one or more values in [2, 4]. If the value of Y is a plurality of values in [2, 4], different values correspond to different processing capabilities of the second terminal apparatus, in other words, one of 2, 3, and 4 may be selected as the value of Y based on the processing capability of the second terminal device.

For another example, if the SCS is 30 kHz, the value of Y may be one or more values in [3, 8]. If the value of Y is a plurality of values in [3, 8], different values correspond to different processing capabilities of the second terminal apparatus, in other words, one of 3 to 8 may be selected as the value of Y based on the processing capability of the second terminal device.

For another example, if the SCS is 60 kHz, the value of Y may be one or more values in [5, 17]. If the value of Y is a plurality of values in [5, 17], different values correspond to different processing capabilities of the second terminal apparatus, in other words, one of 5 to 17 may be selected as the value of Y based on the processing capability of the second terminal device.

It may be understood that, the foregoing cases are examples for description, and no limitations are imposed. For example, the COT indication information is located on the first time domain resource of the COT, or the COT indication information may be carried in the SCI #1 and the MAC CE. For another example, the COT indication information is located on the first time domain resource of the COT, or the COT indication information may be carried in the MAC CE.

In a fifth possible case, the COT indication information is located on a second time domain resource of the COT, and the first terminal apparatus sends the MAC CE to the second terminal apparatus.

Based on this case, the COT indication information is located on the second time domain resource of the COT, and the first terminal apparatus sends the MAC CE to the second terminal apparatus, where the MAC CE includes the COT indication information. In other words, in this case, the second terminal apparatus obtains the COT indication information from the MAC CE.

The second time domain resource of the COT is after a first time domain resource of the COT. For example, the second time domain resource is a time domain unit after Y consecutive time domain units in the COT.

For example, the MAC CE includes the COT indication information located on the second time domain resource of the COT and/or COT indication information located on the first time domain resource of the COT.

For example, the MAC CE includes the COT indication information on the first time domain resource of the COT, to be specific, the COT indication information that is in the MAC CE and that is sent by the first terminal apparatus indicates a resource that is in the first time domain resource of the COT and that is to be used by the second terminal apparatus to send information.

For another example, the MAC CE includes the COT indication information on the second time domain resource of the COT, to be specific, the COT indication information that is in the MAC CE and that is sent by the first terminal apparatus indicates a resource that is in the second time domain resource of the COT and that is to be used by the second terminal apparatus to send information.

For another example, the MAC CE includes the COT indication information on the first time domain resource of the COT and the COT indication information on the second time domain resource of the COT, to be specific, the COT indication information that is in the MAC CE and that is sent by the first terminal apparatus indicates resources that are in the first time domain resource and the second time domain resource of the COT and that are to be used by the second terminal apparatus to send information.

It may be understood that, the foregoing cases are examples for description, and no limitations are imposed. For example, the COT indication information is located on the second time domain resource of the COT, or the COT indication information may be carried in the SCI #1 and the MAC CE. For another example, the COT indication information is located on the second time domain resource of the COT, or the COT indication information may be carried in the SCI #1.

In a sixth possible case, the second terminal apparatus receives the MAC CE in a time domain unit n, where the MAC CE includes the COT indication information.

The COT indication information in the MAC CE indicates a resource that is in a time domain unit after a time domain unit n+Y of the COT and that is to be used by the second terminal apparatus to send information.

In the sixth possible case, the second terminal apparatus receives the MAC CE in the time domain unit n, and the second terminal apparatus does not expect the resource indicated to the second terminal apparatus for sending information to appear in a time domain unit before the time domain unit n+Y; or the second terminal apparatus receives the MAC CE in the time domain unit n, and the second terminal apparatus expects the resource indicated to the second terminal apparatus for sending information to appear in the time domain unit after the time domain unit n+Y. In addition, the second terminal apparatus does not expect the resource indicated to the second terminal apparatus for sending information to include the time domain unit n+Y, in other words, the second terminal apparatus does not expect the resource indicated to the second terminal apparatus for sending information to appear in the time domain unit before the time domain unit n+Y and in the time domain unit n+Y.

It may be understood that the foregoing cases are examples for description, and any variation belonging to the foregoing cases is applicable to embodiments of this application.

Optionally, the SCI #1 further includes a parameter used by the first terminal apparatus to send the third data in the COT, in other words, the COT indication information and the parameter used by the first terminal apparatus to send the third data in the COT may be carried in same SCI. The third data is the data sent by the first terminal apparatus to the second terminal apparatus. In this way, the COT indication information can be further indicated when the parameter for the third data is indicated, to reduce signaling overheads and a delay.

For brevity, the parameter used by the first terminal apparatus to send the third data in the COT is denoted as a parameter #3.

Optionally, the parameter #3 is used to allocate, indicate to send, or indicate necessary information (or referred to as related information) when the second terminal apparatus receives the third data. In an example, the parameter #3 includes at least one of the following: a source identifier (source ID), a destination identifier (destination ID), a cast type indicator (cast type indicator), a HARQ process number (HARQ process number), a redundancy version (redundancy version, RV), a new data indicator (new data indicator, NDI), a channel state information (channel state information, CSI) request (CSI request), and a HARQ enabling indicator. For meanings of the parameters, refer to descriptions in an existing protocol. This is not limited herein.

Further, optionally, the first terminal apparatus sends indication information #3 to the second terminal apparatus, where the indication information #3 indicates that the SCI #1 includes the COT indication information, or the SCI #1 includes the COT indication information and the parameter #3. Based on the indication information #3, unnecessary blind detection performed by the second terminal apparatus can be reduced, a detection speed can be improved, and detection complexity can be reduced.

The indication information #3 may be, for example, carried in SCI, for example, first-stage SCI or second-stage SCI. In an example, the indication information #3 may be carried in a dedicated field in the SCI (for example, the first-stage SCI or the second-stage SCI); or the indication information #3 may be carried in a format indication field in the SCI. This is not limited.

In a possible implementation, the indication information #3 is implemented by using at least one bit. For example, it is assumed that 1 bit indicates that the SCI #1 includes the COT indication information, or the SCI #1 includes the COT indication information and the parameter #3. For example, if the bit is set to "0", it indicates that the SCI #1 includes the COT indication information; or if the bit is set to "1", it indicates that the SCI #1 includes the COT indication information and the parameter #3. For another example, if the bit is set to "1", it indicates that the SCI #1 includes the COT indication information; or if the bit is set to "0", it indicates that the SCI #1 includes the COT indication information and the parameter #3. It should be understood that the foregoing descriptions are merely example descriptions, and no limitations are imposed.

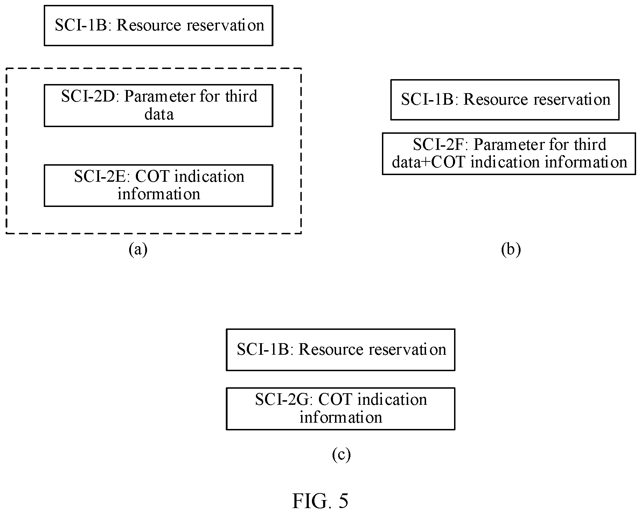

FIG. 5 is a diagram of SCI #1. As shown in FIG. 5, resource reservation may be carried in first-stage SCI (for example, denoted as SCI 1B), in other words, the SCI 1B indicates the resource reservation. The resource reservation may include at least one parameter used for the resource reservation. In an example, the resource reservation includes at least one of the following parameters: a priority, a reservation periodicity, a time domain resource, a frequency domain resource, a demodulation reference signal (demodulation reference signal, DMRS) pattern (DMRS pattern), a DMRS port, a format of sideline control information (for example, a format of second-stage SCI), and a modulation and coding scheme (modulation and coding scheme, MCS). The reservation periodicity, or referred to as a time domain offset value, may indicate a time interval between a next data packet and a current data packet.

At least the following two implementations may be included for the parameter used by the first terminal apparatus to send the third data in the COT and the COT indication information.

In a possible implementation, the parameter used by the first terminal apparatus to send the third data in the COT and the COT indication information are carried in different pieces of SCI. In an example, the different pieces of SCI may be different pieces of second-stage SCI, or may be different parts of second-stage SCI. This is not limited. As shown in FIG. 5(a), SCI-2D indicates the parameter used by the first terminal apparatus to send the third data in the COT, and SCI-2E indicates the COT indication information, in other words, the parameter used by the first terminal apparatus to send the third data in the COT is carried in the SCI-2D, and the COT indication information is carried in the SCI-2E. For example, SCI-2D in second-stage SCI indicates the parameter used by the first terminal apparatus to send the third data in the COT, and SCI-2E in the second-stage SCI indicates the COT indication information.

In another possible implementation, the parameter used by the first terminal apparatus to send the third data in the COT and the COT indication information are carried in same SCI. In an example, the same SCI may be same second-stage SCI, or may be a same part of second-stage SCI. As shown in FIG. 5(b), SCI-2F indicates the parameter used by the first terminal apparatus to send the third data in the COT and the COT indication information, in other words, the parameter used by the first terminal apparatus to send the third data in the COT and the COT indication information are carried in the SCI-2F. For example, SCI-2F in second-stage SCI indicates the parameter used by the first terminal apparatus to send the third data in the COT and the COT indication information.

In another possible implementation, the COT indication information is independently carried in one piece of SCI. As shown in FIG. 5(c), SCI-2G indicates the COT indication information, in other words, the COT indication information is carried in the SCI-2G. For example, SCI-2G in second-stage SCI indicates the COT indication information.

It may be understood that the SCI 1B, SCI 2D, SCI 2E, SCI 2F, and SCI 2G shown in FIG. 5 are examples for description, and names of the SCI 1B, SCI 2D, SCI 2E, SCI 2F, and SCI 2G do not limit the protection scope of embodiments of this application.

It may be further understood that the foregoing mainly uses the first-stage SCI and the second-stage SCI as examples for description. This is not limited. For example, the COT indication information is carried in one piece of third-stage SCI.

### Aspect 3: Attribute of the COT indication information

Optionally, the COT indication information includes a resource that is in the COT and that is to be used by the second terminal apparatus to send data; and/or a resource that is in the COT and that is to be used by the second terminal apparatus to send an answer message. In other words, the resource, indicated by the COT indication information, that is in the COT and that is to be used by the second terminal apparatus to send information may be used by the second terminal apparatus to send data, or may be used by the second terminal apparatus to send an answer message. For example, the answer message is a HARQ answer message. For details, refer to the foregoing related descriptions. Details are not described herein again.

In an example, if the COT indication information includes the resource that is in the COT and that is to be used by the second terminal apparatus to send data, the second terminal apparatus may send data by using the resource indicated by the COT indication information. For example, the second terminal apparatus may send data to the first terminal apparatus by using the resource indicated by the COT indication information. For another example, the second terminal apparatus may send data to another UE by using the resource indicated by the COT indication information.

In another example, if the COT indication information includes the resource that is in the COT and that is to be used by the second terminal apparatus to send an answer message, the second terminal apparatus may send an answer message (for example, an ACK/a NACK) by using the resource indicated by the COT indication information. For example, the second terminal apparatus may send an answer message for the second data to the first terminal apparatus by using the resource indicated by the COT indication information. For example, if the second terminal apparatus successfully receives the second data from the first terminal apparatus, the second terminal apparatus may send the ACK to the first terminal apparatus by using the resource indicated by the COT indication information; or if the second terminal apparatus fails to receive the second data from the first terminal apparatus, the second terminal apparatus may send the NACK to the first terminal apparatus by using the resource indicated by the COT indication information.

In another example, if the COT indication information includes the resource that is in the COT and that is to be used by the second terminal apparatus to send data and the resource that is in the COT and that is to be used by the second terminal apparatus to send an answer message, the second terminal apparatus may send data and an answer message (for example, an ACK/a NACK) by using the resources indicated by the COT indication information.

Further, optionally, the first terminal apparatus sends indication information #4 to the second terminal apparatus, where the indication information #4 indicates that the COT indication information may be used by the second terminal apparatus to send data, and/or the COT indication information may be used by the second terminal apparatus to send an answer message. For example, the answer message is a HARQ answer message. For details, refer to the foregoing related descriptions. Details are not described herein again.

The indication information #4 may be, for example, carried in SCI, for example, first-stage SCI or second-stage SCI. In an example, the indication information #4 may be carried in a dedicated field in the SCI (for example, the first-stage SCI or the second-stage SCI); or the indication information #4 may be carried in a format indication field in the SCI. This is not limited.

In a possible implementation, the indication information #4 is implemented by using at least one bit. For example, it is assumed that 2 bits indicate that the COT indication information may be used by the second terminal apparatus to send data, and/or the COT indication information may be used by the second terminal apparatus to send an answer message. If the bit is set to "01", it indicates that the COT indication information may be used by the second terminal apparatus to send data, in other words, the COT indication information includes the resource that is in the COT and that is to be used by the second terminal apparatus to send data; if the bit is set to "10", it indicates that the COT indication information may be used by the second terminal apparatus to send an answer message, in other words, the COT indication information includes the resource that is in the COT and that is to be used by the second terminal apparatus to send an answer message; or if the bit is set to "11", it indicates that the COT indication information may be used by the second terminal apparatus to send an answer message and used by the second terminal apparatus to send data, in other words, the COT indication information includes the resource that is in the COT and that is to be used by the second terminal apparatus to send an answer message and the resource that is in the COT and that is to be used by the second terminal apparatus to send data. It should be understood that the foregoing descriptions are merely example descriptions, and no limitations are imposed.

### Aspect 4: Content included in the COT indication information

Optionally, the COT indication information includes N groups of parameters, each of the N groups of parameters includes an identifier of one of the second terminal apparatuses, and N is a positive integer. In other words, the COT indication information includes identifiers of N second terminal apparatuses. The identifier of the second terminal apparatus may be a destination identifier, may be a device identifier of the second terminal apparatus, or may be a temporary identifier configured via signaling. This is not limited.

The N groups of parameters indicate parameters used by the N second terminal apparatuses to send information, in other words, the N groups of parameters one-to-one correspond to the N second terminal apparatuses. Each of the N groups of parameters includes the identifier of the second terminal apparatus, and the second terminal apparatus corresponding to the group of parameters may be learned of based on the identifier that is of the second terminal apparatus and that is in each group of parameters.

In a possible case, unicast communication is performed between the first terminal apparatus and the second terminal apparatus. In this case, in one piece of COT indication information, the first terminal apparatus may indicate a resource to one second terminal apparatus. In this case, N=1.

In another possible case, multicast communication is performed between the first terminal apparatus and a plurality of second terminal apparatuses. In this case, in one piece of COT indication information, the first terminal apparatus may indicate a resource for the plurality of second terminal apparatuses. In this case, N≥1.

For example, if N=1, it indicates that the COT indication information includes one group of parameters, and the group of parameters indicates a parameter to be used by the second terminal apparatus to send information. If N is greater than 2, it indicates that the COT indication information includes N groups of parameters, the N groups of parameters indicate parameters used by the N second terminal apparatuses to send information, and each group of parameters indicates a parameter used by one of the second terminal apparatuses to send information.

Optionally, when N is greater than 1, the first terminal apparatus may further indicate a value of N to the second terminal apparatus. It may be understood that the value of N may be a maximum value that is of N and that can be supported, or may be configured via signaling, preconfigured, or predefined. This is not limited.

Optionally, each of the N groups of parameters further includes at least one of the following: a channel access parameter, a time domain resource that is in the COT and that is to be used by the second terminal apparatus to send information, a frequency domain resource that is in the COT and that is to be used by the second terminal apparatus to send information, information #A, and feedback configuration information. The information #A indicates whether the second terminal apparatus needs to send the response message for the COT indication information to the first terminal apparatus. For details, refer to the descriptions in the foregoing aspect 1.

For example, it is assumed that N=2, the COT indication information includes two groups of parameters, and the two groups of parameters each include an identifier of one second terminal apparatus, for example, denoted as a UE #21 and a UE #22. A group of parameters including the identifier UE #21 indicates a parameter used by a UE #21 to send information, for example, includes at least one of the following: a channel access parameter, a time domain resource that is in the COT and that is used by the UE #21 to send information, a frequency domain resource that is in the COT and that is used by the UE #21 to send information, information #A, and feedback configuration information. A group of parameters including the identifier UE #22 indicates a parameter used by a UE #22 to send information, for example, includes at least one of the following: a channel access parameter, a time domain resource that is in the COT and that is used by the UE #22 to send information, a frequency domain resource that is in the COT and that is used by the UE #22 to send information, information #A, and feedback configuration information.

Based on embodiments of this application, the first terminal apparatus may send, by using the identifier of the second terminal apparatus as an index, one COT indication information list of N pieces of information indexed by idntifiers of the second terminal apparatuses. In other words, the identifier of the second terminal apparatus is used as an index, and an identifier of each second terminal apparatus (or each second terminal apparatus) corresponds to one group of parameters. If N is greater than 1, to be specific, the first terminal apparatus shares the COT with a plurality of second terminal apparatuses at the same time, the first terminal apparatus may allocate different time-frequency resources to the different second terminal apparatuses. Therefore, different second terminal apparatuses may be separately indicated by using a group of parameters corresponding to an identifier of a second terminal apparatus, so that the second terminal apparatus can accurately identify a resource allocated to the second terminal apparatus.

The following briefly describes each parameter.

### 1. Channel access parameter

A channel access parameter includes at least one of the following: a channel access type of a message to be sent by the second terminal apparatus, a priority of the message to be sent by the second terminal apparatus, or cyclic prefix extension indication information. The channel access type may include, for example, type1 LBT and type2 LBT, or may further specifically include type2A LBT, type2B LBT, and type2C LBT. In an example, the channel access type of the message to be sent by the second terminal apparatus may be, for example, a CAPC. For the priority of the message to be sent by the second terminal apparatus, refer to the related descriptions of the priority in the foregoing term explanation part. Details are not described herein again. The following mainly describes the channel access type of the message to be sent by the second terminal apparatus and the priority of the message to be sent by the second terminal apparatus.

In a first possible implementation, the channel access parameter includes the channel access type of the message to be sent by the second terminal apparatus and the priority of the message to be sent by the second terminal apparatus. In this way, the second terminal apparatus may directly obtain the channel access type of the message to be sent by the second terminal apparatus and the priority of the message to be sent by the second terminal apparatus.

In a second possible implementation, the channel access parameter jointly indicates the channel access type of the message to be sent by the second terminal apparatus and the priority of the message to be sent by the second terminal apparatus. For example, the channel access parameter includes indication information #5. The indication information #5 indicates the channel access type of the message to be sent by the second terminal apparatus or the priority of the message to be sent by the second terminal apparatus. There is an association relationship between the channel access type of the message to be sent by the second terminal apparatus and the priority of the message to be sent by the second terminal apparatus. The indication information #5 may be used by the second terminal apparatus to obtain the channel access type of the message to be sent by the second terminal apparatus and the priority of the message to be sent by the second terminal apparatus. Specifically, after receiving the indication information #5, the second terminal apparatus may determine, based on the association relationship between the channel access type of the message to be sent by the second terminal apparatus and the priority of the message to be sent by the second terminal apparatus, the channel access type of the message to be sent by the second terminal apparatus and the priority of the message to be sent by the second terminal apparatus. A quantity of bits occupied by the indication information #5 is less than 5 bits. For example, the quantity of bits occupied by the indication information #5 is 3 bits or 4 bits.

In an example, the indication information #5 indicates the priority of the message to be sent by the second terminal apparatus. After receiving the indication information #5, the second terminal apparatus may directly obtain, based on the indication information #5, the priority of the message to be sent by the second terminal apparatus, and the second terminal apparatus determines, based on the indication information #5 and the association relationship between the channel access type of the message to be sent by the second terminal apparatus and the priority of the message to be sent by the second terminal apparatus, the channel access type of the message to be sent by the second terminal apparatus. Based on this example, the indication information #5 may directly indicate the priority of the message to be sent by the second terminal apparatus, and indirectly (or implicitly) indicate the channel access type of the message to be sent by the second terminal apparatus.

In another example, the indication information #5 indicates the channel access type of the message to be sent by the second terminal apparatus. After receiving the indication information #5, the second terminal apparatus may directly obtain, based on the indication information #5, the channel access type of the message to be sent by the second terminal apparatus, and the second terminal apparatus determines, based on the indication information #5 and the association relationship between the channel access type of the message to be sent by the second terminal apparatus and the priority of the message to be sent by the second terminal apparatus, the priority of the message to be sent by the second terminal apparatus. Based on this example, the indication information #5 may directly indicate the channel access type of the message to be sent by the second terminal apparatus, and indirectly (or implicitly) indicate the priority of the message to be sent by the second terminal apparatus.

Optionally, the association relationship between the channel access type of the message to be sent by the second terminal apparatus and the priority of the message to be sent by the second terminal apparatus may be configured, preconfigured, or predefined, for example, predefined in a standard. This is not limited. In an example, the association relationship between the channel access type of the message to be sent by the second terminal apparatus and the priority of the message to be sent by the second terminal apparatus may exist in a form of a table.

### 2. Time domain resource that is in the COT and that is to be used by the second terminal apparatus to send information

A time domain resource that is in the COT and that is to be used by the second terminal apparatus to send information indicates a time domain resource of the COT shared by the second terminal apparatus, in other words, the second terminal apparatus may send information by using the time domain resource that is in the COT. In an example, information about the time domain resource that is in the COT and that is to be used by the second terminal apparatus to send information may include time domain offset value indication information and/or sending duration indication information.

In a possible case, if the COT indication information indicates the time domain resource that is in the COT and that is to be used by the second terminal apparatus to send information, and does not indicate a frequency domain resource that is in the COT and that is to be used by the second terminal apparatus to send information, the frequency domain resource used by the second terminal apparatus to send information is all frequency domain resources on the time domain resource used by the second terminal apparatus to send information.

In another possible case, if the COT indication information indicates the time domain resource that is in the COT and that is to be used by the second terminal apparatus to send information, and the COT indication information includes indication information #6. If a value of the indication information #6 is a second value, a frequency domain resource used by the second terminal apparatus to send information is a frequency domain resource indicated by the indication information #6; or if a value of the indication information #6 is a third value (for example, an invalid value), a frequency domain resource used by the second terminal apparatus to send information is all frequency domain resources on the time domain resource used by the second terminal apparatus to send information. The invalid value may be a value in a numerical range, or the invalid value may be a numerical range.

### 3. Frequency domain resource that is in the COT and that is to be used by the second terminal apparatus to send information

A frequency domain resource that is in the COT and that is to be used by the second terminal apparatus to send information indicates a frequency domain resource of the COT shared by the second terminal apparatus, in other words, the second terminal apparatus may send information by using the frequency domain resource that is in the COT. In an example, information about the frequency domain resource that is in the COT and that is to be used by the second terminal apparatus to send information may include at least one of the following: contiguous resource allocation or discrete resource allocation indication information, and resource indication information (for example, subchannel or interlace (interlace) indication information) in a resource pool or a resource block set (RB set), and RB set indication information.

### 4. Feedback configuration information

In an example, feedback configuration information includes at least one of the following: a channel format for sending feedback information by the second terminal apparatus, time domain resource indication information for sending feedback information by the second terminal apparatus, frequency domain resource indication information for sending feedback information by the second terminal apparatus, information indicating the second terminal apparatus to send a feedback, information indicating a feedback manner for sending a feedback information by the second terminal apparatus, and a sequence parameter for sending feedback information by the second terminal apparatus.

The feedback manner for sending the feedback information by the second terminal apparatus includes any one of the following: a feedback that is in the COT and that is based on a plurality of PSFCH resources, a feedback based on a single PSFCH resource, a feedback in the COT, a feedback outside the COT, a feedback based on a preset resource, and feedback performed based on a dynamically indicated resource.

The sequence parameter for sending the feedback information by the second terminal apparatus may include at least one of the following: a root sequence number, a cyclic shift, and an orthogonal code.

A channel format of a feedback channel indicates a format (format) of the feedback information. In an example, the channel format of the feedback channel may be, for example, any one of the following: a PSFCH format 0, a PSFCH format 1, or a PSFCH format 2. For different formats, different quantities of symbols may be occupied, or the feedback information is sent in different manners. For example, for the PSFCH format 0, one symbol is occupied, and the feedback information is carried by using a sequence. For another example, for the PSFCH format 1, two symbols are occupied, and the feedback information is carried in a channel coding manner.

The foregoing separately describes the information. It may be understood that the foregoing information may be used separately or in combination. This is not limited. In addition, if the COT indication information does not include the foregoing information, processing may be performed according to a predefined rule, to implement sharing between the first terminal apparatus and the second terminal apparatus.

Optionally, the COT indication information further includes an identifier of the first terminal apparatus. In this way, the second terminal apparatus may identify whether a terminal apparatus sharing the COT resource is the first terminal apparatus communicating with the second terminal apparatus. The identifier of the first terminal apparatus may be a source identifier, may be a device identifier of the first terminal apparatus, or may be a temporary identifier configured via signaling. This is not limited.

In a first possible case, the COT indication information and the parameter used by the first terminal apparatus to send the third data in the COT are carried in same signaling. In this case, the parameter used by the first terminal apparatus to send the third data in the COT includes the identifier of the first terminal apparatus, and the COT indication information does not include the identifier of the first terminal apparatus. For the third data, refer to the foregoing descriptions. Details are not described herein again. In this case, the COT indication information and the parameter used by the first terminal apparatus to send the third data in the COT are carried in same signaling, and the parameter used by the first terminal apparatus to send the third data in the COT includes the identifier of the first terminal apparatus, so that the second terminal apparatus may learn of the identifier of the first terminal apparatus based on the parameter used by the first terminal apparatus to send the third data in the COT. Therefore, the COT indication information may not carry the identifier of the first terminal apparatus, to reduce signaling overheads.

For example, the same signaling may be SCI in a same format, for example, second-stage SCI; or for another example, may be a same MAC CE. This is not limited. For example, it is assumed that the COT indication information and the parameter used by the first terminal apparatus to send the third data in the COT are carried in second-stage SCI, to be specific, the second-stage SCI includes two parts of content, one part is the COT indication information, and the other part is the parameter used by the first terminal apparatus to send the third data in the COT. In this case, the COT indication information and the parameter used by the first terminal apparatus to send the third data in the COT are carried in the same signaling (namely, in the same second-stage SCI).

In a second possible case, the COT indication information and the parameter used by the first terminal apparatus to send the third data in the COT are not carried in same signaling. In this case, the COT indication information includes the identifier of the first terminal apparatus. In addition, the parameter used by the first terminal apparatus to send the third data in the COT may also include the identifier of the first terminal apparatus, so that the second terminal apparatus learns that the third data is sent by the first terminal apparatus. In this case, because the COT indication information and the parameter used by the first terminal apparatus to send the third data in the COT are not carried in the same signaling, the COT indication information includes the identifier of the first terminal apparatus. In this way, the second terminal apparatus may identify that the terminal apparatus sharing the COT resource is the first terminal apparatus.

That the COT indication information and the parameter used by the first terminal apparatus to send the third data in the COT are not carried in same signaling includes at least the following two cases: In one case, the first terminal apparatus sends no data in the COT. In this case, there is no parameter used by the first terminal apparatus to send the third data in the COT. Therefore, the COT indication information and the parameter used by the first terminal apparatus to send the third data in the COT are not carried in the same signaling. In another case, the first terminal apparatus sends data in the COT, but the parameter used by the first terminal apparatus to send the third data in the COT and the COT indication information are carried in different signaling. For the case in which the COT indication information and the parameter used by the first terminal apparatus to send the third data in the COT are not carried in same signaling, details are not described below again.

In a third possible case, a cast type is unicast, and the COT indication information includes the identifier of the first terminal apparatus and an identifier of one of the second terminal apparatuses.

In other words, in a unicast scenario, the COT indication information includes the identifier of the first terminal apparatus and the identifier of the second terminal apparatus. Unicast means that one sending terminal and one receiving terminal form a unicast connection pair. For example, the first terminal apparatus sends data to the second terminal apparatus. In the unicast scenario, because transmission is performed between the first terminal apparatus and the second terminal apparatus, the COT indication information includes the identifier of the first terminal apparatus and the identifier of the second terminal apparatus.

In a fourth possible case, a cast type is unicast, and the parameter used by the first terminal apparatus to send the third data in the COT includes the identifier of the first terminal apparatus and an identifier of one of the second terminal apparatuses.

In a unicast scenario, because transmission is performed between the first terminal apparatus and the second terminal apparatus, the identifier of the first terminal apparatus and the identifier of the second terminal apparatus may alternatively be carried in the parameter used by the first terminal apparatus to send the third data in the COT.

In a fifth possible case, a cast type is multicast, and the COT indication information includes the identifier of the first terminal apparatus and identifiers of N second terminal apparatuses.

In other words, in a multicast scenario, the COT indication information includes the identifier of the first terminal apparatus and the identifiers of the N second terminal apparatuses. Multicast means that one sending terminal and at least one receiving terminal form a multicast connection pair. For example, the first terminal apparatus sends data to at least one second terminal apparatus. In the multicast scenario, because transmission is performed between the first terminal apparatus and the N second terminal apparatuses, the COT indication information includes the identifier of the first terminal apparatus and the identifiers of the N second terminal apparatuses.

In a sixth possible case, a cast type is multicast, and the COT indication information includes one destination identifier and identifiers of N second terminal apparatuses.

The destination identifier may be considered as an identifier of a group in which the N second terminal apparatuses are located, the destination identifier corresponds to a group of second terminal apparatuses (namely, the N second terminal apparatuses), the destination identifier may indicate a group of second terminal apparatuses (namely, the N second terminal apparatuses), or the destination identifier may identify a group of second terminal apparatuses (namely, the N second terminal apparatuses). For uniform description, an example in which the destination identifier indicates a group of second terminal apparatuses is mainly used below for description.

In a multicast scenario, because transmission is performed between one first terminal apparatus and N second terminal apparatuses (namely, a group of terminal apparatuses), the first terminal apparatus may send one destination identifier and identifiers of the N second terminal apparatuses. In this way, the signaling overheads can be reduced by indicating one destination identifier in the COT indication information. In addition, the COT indication information further includes the identifiers of the N second terminal apparatuses, to identify that a receiver of the COT indication information is the N second terminal apparatuses.

Optionally, the first terminal device sends indication information #12 to the second terminal device, where the indication information #12 indicates whether the receiver of the COT indication information is the group of terminal apparatuses indicated by the destination identifier that is in the COT indication information, in other words, the indication information #12 indicates whether the receiver of the COT indication information is the N second terminal apparatuses.

The indication information #12 may be, for example, carried in SCI, for example, first-stage SCI or second-stage SCI. In an example, the indication information #12 may be carried in a dedicated field in the SCI (for example, the first-stage SCI or the second-stage SCI); or the indication information #12 may be carried in a format indication field in SCI. This is not limited.

In a possible implementation, the indication information #12 is implemented by using at least one bit. In an example, the indication information #12 whose value is a first value indicates whether the receiver of the COT indication information is the group of terminal apparatuses indicated by the destination identifier. For example, it is assumed that 1 bit indicates whether the receiver of the COT indication information is the group of terminal apparatuses indicated by the destination identifier. For example, if the bit is set to "0", it indicates that the receiver of the COT indication information is the group of terminal apparatuses indicated by the destination identifier, in other words, the receiver of the COT indication information is the N second terminal apparatuses. If the bit is set to "1", it indicates that the receiver of the COT indication information is not the group of terminal apparatuses indicated by the destination identifier, in other words, the receiver of the COT indication information is not the N second terminal apparatuses. For another example, if the bit is set to "1", it indicates that the receiver of the COT indication information is the group of terminal apparatuses indicated by the destination identifier, in other words, the receiver of the COT indication information is the N second terminal apparatuses. If the bit is set to "0", it indicates that the receiver of the COT indication information is not the group of terminal apparatuses indicated by the destination identifier, in other words, the receiver of the COT indication information is not the N second terminal apparatuses. It should be understood that the foregoing descriptions are merely example descriptions, and no limitations are imposed.

Optionally, if the first terminal apparatus shares the COT with a plurality of different unicast terminal apparatuses, the COT indication information may include destination identifiers or user identifiers of the plurality of terminal apparatuses.

In a seventh possible case, a cast type is multicast, and the parameter used by the first terminal apparatus to send the third data in the COT includes the identifier (namely, a source identifier) of the first terminal apparatus and one destination identifier, and the COT indication information includes identifiers of N second terminal apparatuses. Optionally, the destination identifier identifies a receiving group to which the N second terminal apparatuses belong.

In a multicast scenario, because transmission is performed between the first terminal apparatus and the N second terminal apparatuses, the parameter used by the first terminal apparatus to send the third data in the COT includes the identifier of the first terminal apparatus and a group identifier of the N second terminal apparatuses, to identify that a receiver of the third data is the N second terminal apparatuses. Further, the COT indication information includes the identifiers of the N second terminal apparatuses, to identify that a receiver of the COT indication information is the N second terminal apparatuses.

Optionally, the first terminal device sends indication information #13 to the second terminal device, where the indication information #13 indicates whether the receiver of the COT indication information is the N second terminal apparatuses, or the indication information #13 indicates whether the receiver of the COT indication information is the N second terminal apparatuses indicated by the destination identifier.

The indication information #13 may be, for example, carried in SCI, for example, first-stage SCI or second-stage SCI. In an example, the indication information #13 may be carried in a dedicated field in the SCI (for example, the first-stage SCI or the second-stage SCI); or the indication information #1 may be carried in a format indication field in the SCI. This is not limited.

In a possible implementation, the indication information #13 is implemented by using at least one bit. In an example, the indication information #13 whose value is a first value indicates whether the receiver of the COT indication information is the N second terminal apparatuses. For example, it is assumed that 1 bit indicates whether the receiver of the COT indication information is the N second terminal apparatuses. For example, if the bit is set to "0", it indicates that the receiver of the COT indication information is the N second terminal apparatuses; or if the bit is set to "1 ", it indicates that the receiver of the COT indication information is not the N second terminal apparatuses. For another example, if the bit is set to "1", it indicates that the receiver of the COT indication information is the N second terminal apparatuses; or if the bit is set to "0", it indicates that the receiver of the COT indication information is not the N second terminal apparatuses. It should be understood that the foregoing descriptions are merely example descriptions, and no limitations are imposed.

It should be noted that a quantity of bits occupied by an identifier of a corresponding group member in the group identifier of the N second terminal apparatuses depends on a size of the group, or a maximum supported N value configured via signaling or predefined.

In addition, optionally, for COT sharing of a unicast connection, to be specific, a first terminal apparatus and one second terminal apparatus form a unicast connection pair, the first terminal apparatus may send SCI #1 to the second terminal apparatus, where the SCI #1 includes COT indication information, and the COT indication information indicates a resource that is in a COT and that is to be used by the second terminal apparatus to send information.

Optionally, for COT sharing of at least two independent and parallel unicast connections, to be specific, a first terminal apparatus and each of at least two second terminal apparatuses form a unicast connection pair, the first terminal apparatus may separately send SCI #1 to the at least two second terminal apparatuses, where the SCI #1 includes COT indication information, and the COT indication information indicates a resource that is in a COT and that is to be used by the second terminal apparatus to send information. For example, a first terminal apparatus and a second terminal apparatus #1 form a unicast connection pair, and the first terminal apparatus and a second terminal apparatus #2 form a unicast connection pair. The first terminal apparatus may send SCI #1 to the second terminal apparatus #1, where the SCI #1 includes COT indication information, and the COT indication information indicates a resource that is in a COT and that is used by the second terminal apparatus #1 to send information. The first terminal apparatus may further send other SCI #1 to the second terminal apparatus #2, where the SCI #1 includes COT indication information, and the COT indication information indicates a resource that is in the COT and that is used by the second terminal apparatus #2 to send information.

### Aspect 5: A time between messages satisfies a limit

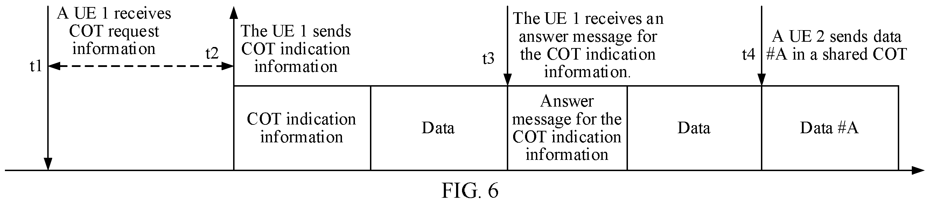

FIG. 6 is a diagram of messages in terms of time.

Optionally, a time interval between a moment at which the first terminal apparatus sends COT indication information and a moment at which the first terminal apparatus receives a response message for the COT indication information is greater than or equal to a first preset value.

In consideration of a time caused because the second terminal apparatus decodes the COT indication information and prepares the response message for the COT indication information, in this embodiment of this application, the time interval between the moment at which the first terminal apparatus sends the COT indication information and the moment at which the first terminal apparatus receives the response message for the COT indication information is greater than or equal to the first preset value. The first preset value may be predefined, for example, predefined in a standard, or may be preconfigured. This is not limited.

In an example, the first preset value is greater than or equal to: a time required by the second terminal apparatus to decode the COT indication information+a time required by the second terminal apparatus to prepare the response message for the COT indication information.

In an example, a value of the first preset value may be, for example, 2 slots, 3 slots, or 4 slots.

As shown in FIG. 6, the moment at which the first terminal apparatus sends the COT indication information is t2, the moment at which the first terminal apparatus receives the response message for the COT indication information is t3, and a time interval between t2 and t3 is greater than or equal to the first preset value, in other words, the time interval between t2 and t3 is greater than or equal to: the time required by the second terminal apparatus to decode the COT indication information+the time required by the second terminal apparatus to prepare the response message for the COT indication information.

Optionally, a time interval between the moment at which the first terminal apparatus sends the COT indication information and a moment at which the second terminal apparatus sends information by using a COT resource shared by the first terminal apparatus is greater than or equal to a second preset value. An example in which the second terminal apparatus sends data #A to the first terminal apparatus in a shared COT is used below for description.

In consideration of a time caused because the second terminal apparatus decodes the COT indication information and prepares the data #A, in this embodiment of this application, a time interval between the moment at which the first terminal apparatus sends the COT indication information and a moment at which the second terminal apparatus sends the data #A to the first terminal apparatus is greater than or equal to the second preset value. The second preset value may be predefined, for example, predefined in a standard, or may be preconfigured. This is not limited.

In an example, the second preset value is greater than or equal to: the time required by the second terminal apparatus to decode the COT indication information+a time required by the second terminal apparatus to prepare the data #A.

In an example, there are a plurality of second preset values. For example, there may be different values or value sets depending on whether the response message for the COT indication information is activated or configured via signaling. For example, if the COT indication information is activated or configured via signaling, after receiving the COT indication information, the second terminal apparatus sends the response message for the COT indication information to the first terminal apparatus. In this case, the value of the second preset value may be a value #1. If the COT indication information is not activated or configured via signaling, after receiving the COT indication information, the second terminal apparatus does not need to send the response message for the COT indication information to the first terminal apparatus. In this case, the value of the second preset value may be a value #2. If the COT indication information is activated or configured via signaling, the time for preparing the response message for the COT indication information and a time for sending the response message for the COT indication information by the second terminal apparatus further need to be considered. Therefore, the value #1 is greater than the value #2.

In an example, the value of the second preset value may be, for example, 2 slots, 3 slots, 4 slots, or 5 slots.

As shown in FIG. 6, the moment at which the first terminal apparatus sends the COT indication information is t2, the moment the second terminal apparatus sends the data #A to the first terminal apparatus that is sent by the second terminal apparatus in the shared COT is t4, and a time interval between t2 and t4 is greater than or equal to the second preset value.

Optionally, a time interval between a moment at which the first terminal apparatus receives COT request information and the moment at which the first terminal apparatus sends the COT indication information is greater than or equal to a third preset value.

In consideration of a time caused because the first terminal apparatus decodes the COT request information and prepares the COT indication information, in this embodiment of this application, the time interval between the moment at which the first terminal apparatus receives the COT request information and the moment at which the first terminal apparatus sends the COT indication information is greater than or equal to the third preset value. The third preset value may be predefined, for example, predefined in a standard, or may be preconfigured. This is not limited.

In an example, the third preset value is greater than or equal to: a time required by the first terminal apparatus to decode the COT request information+a time required by the first terminal apparatus to prepare the COT indication information+a time required for scheduling processing of the COT indication information.

In an example, a value of the third preset value may be, for example, 2 slots, 3 slots, 4 slots, or 5 slots.

As shown in FIG. 6, the moment at which the first terminal apparatus receives the COT request information is t1, the moment at which the first terminal apparatus sends the COT indication information is t2, and a time interval between t1 and t2 is greater than or equal to the third preset value.

Optionally, a time interval between the moment at which the first terminal apparatus receives the COT request information and the moment at which the second terminal apparatus sends the information by using the COT resource shared by the first terminal apparatus is greater than or equal to a fourth preset value. An example in which the second terminal apparatus sends the data #A to the first terminal apparatus in the shared COT is used below for description.

In consideration of a time caused because the first terminal apparatus decodes the COT request information and prepares the COT indication information, the second terminal apparatus receives and decodes the COT indication information and prepares the data #A, and the like, in this embodiment of this application, a time interval between the moment at which the first terminal apparatus receives the COT request information and the moment the second terminal apparatus sends the data #A to the first terminal apparatus from the second terminal apparatus is greater than or equal to the fourth preset value. The fourth preset value may be predefined, for example, predefined in a standard, or may be preconfigured. This is not limited.

In an example, the time interval between the moment at which the first terminal apparatus receives the COT request information and the moment the second terminal apparatus sends the data #A to the first terminal apparatus from the second terminal apparatus is less than or equal to: a remaining packet delay budget (packet delay budget, PDB) of a message to be sent by the second terminal apparatus+a sending time of the data #A.

In an example, a value of the fourth preset value may be, for example, 3 slots, 4 slots, 5 slots, 6 slots, 7 slots, or 8 slots. As shown in FIG. 6, the moment at which the first terminal apparatus receives the COT request information is t1, the moment the second terminal apparatus sends the data #A to the first terminal apparatus that is sent by the second terminal apparatus in the shared COT is t4, and a time interval between t1 and t4 is greater than or equal to the fourth preset value.

Optionally, a value of the fourth preset value is a sum of at least two of the value of the first preset value, the value of the second preset value, and the value of the third preset value.

Optionally, any two of the value of the first preset value, the value of the second preset value, and the value of the third preset value may be the same.

Optionally, any one of the first preset value, the second preset value, the third preset value, and the fourth preset value may have a plurality of different values, and the different values correspond to different processing capabilities of the first terminal apparatus and/or the second terminal apparatus.

It may be understood that the foregoing mainly describes the time interval between the messages that is restricted from a side of the first terminal apparatus. It may be understood that the time interval between the messages may alternatively be restricted from a side of the second terminal apparatus. For details, refer to the foregoing descriptions. Details are not described herein again.

The foregoing separately describes the solutions with reference to the five aspects. It may be understood that content of the foregoing aspects may be used separately or in combination. This is not limited. The following describes related content of the COT request information with reference to the method 700. The following COT request information solution and the solution in the method 200 may be used in combination, or may be used separately. This is not limited.

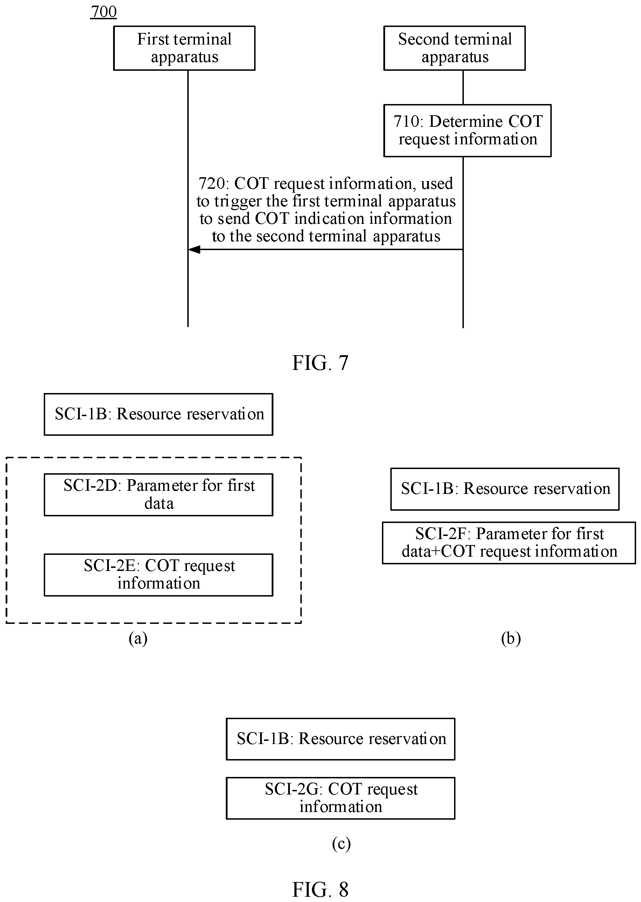

FIG. 7 is a diagram of the information transmission method 700 according to an embodiment of this application. The method 700 may include the following steps.

710: A second terminal apparatus determines COT request information.

Optionally, whether the second terminal apparatus sends the COT request information may be determined by the second terminal apparatus through an implementation, or may be determined based on information configured in a resource pool. Optionally, the configured information may be a system message, or may be an RRC message. This is not limited in embodiments of this application.

720: The second terminal apparatus sends COT request information to a first terminal apparatus, where the COT request information is used to trigger the first terminal apparatus to send COT indication information to the second terminal apparatus.

The COT request information is used to trigger the first terminal apparatus to send the COT indication information to the second terminal apparatus, may be replaced with that the COT request information is used by the first terminal apparatus to determine to send the COT indication information to the second terminal apparatus, or may be replaced with that the COT request information is used to require the first terminal apparatus to send the COT indication information to the second terminal apparatus.

Optionally, the method 700 further includes: The second terminal apparatus receives the COT indication information from the first terminal apparatus. In other words, after receiving the COT request information, the first terminal apparatus may send the COT indication information to the second terminal apparatus. For the COT indication information, refer to the descriptions in the foregoing method 200. Details are not described herein again.

Based on the foregoing technical solutions, the second terminal apparatus sends a COT request to the first terminal apparatus, so that the first terminal apparatus can respond to a requirement of the second terminal apparatus for a COT in a timely manner based on the request of the second terminal apparatus, and share a COT resource with the second terminal apparatus, to reduce a transmission delay and improve resource utilization.

That the second terminal apparatus sends COT request information to a first terminal apparatus may be that the second terminal apparatus actively sends the COT request information to the first terminal apparatus, or may be that the second terminal apparatus sends the COT request information to the first terminal apparatus based on an indication of the first terminal apparatus. This is not limited.

As described above, the COT request information includes at least one of the following: resource information that is of the COT of the first terminal apparatus and that is requested by the second terminal apparatus, information indicating that transmission of first data is not completed, and resource reservation information of second data. The following describes three possible cases.

In a first possible case, the COT request information includes the resource information that is of the COT of the first terminal apparatus and that is requested (requested) by the second terminal apparatus.

In this case, after receiving the COT request information, the first terminal apparatus learns of the resource information that is of the COT of the first terminal apparatus and that is requested by the second terminal apparatus. Therefore, the first terminal apparatus may send the COT indication information to the second terminal apparatus, to share the COT resource with the second terminal apparatus.

For content included in the COT request information in this case, refer to descriptions in the following aspect 3.

In a second possible case, the COT request information includes information indicating that the transmission of the first data is not completed, and the first data is data sent by the second terminal apparatus to the first terminal apparatus. The information indicating that the transmission of the first data is not completed may also be described as follows: The first terminal apparatus further needs an additional resource.

In this case, the information indicating that the transmission of the first data is not completed may be used to implicitly request the resource information of the COT of the first terminal apparatus, in other words, after receiving, from the second terminal apparatus, the information indicating that the transmission of the first data is not completed, the first terminal apparatus may send the COT indication information to the second terminal apparatus. In this way, during data transmission, a COT sharing request may be implicitly indicated by using a small quantity of bits, to reduce signaling overheads.

For example, the second terminal apparatus sends the first data to the first terminal apparatus, where partial data in the first data has been sent to the first terminal apparatus, and remaining data in the first data has not been sent to the first terminal apparatus. In this case, the second terminal apparatus may send, to the first terminal apparatus, the information indicating that the transmission of the first data is not completed. The first terminal apparatus receives the information indicating that the transmission of the first data is not completed, and the first terminal apparatus may send the COT indication information to the second terminal apparatus, to share the COT resource with the second terminal apparatus. Therefore, the second terminal apparatus may send the remaining data in the first data to the first terminal apparatus on the shared COT resource. For differentiation, in the first data, data that has been sent to the first terminal apparatus is denoted as data #11, and data that has not been sent to the first terminal apparatus is denoted as data #12.

Optionally, the information indicating that the transmission of the first data is not completed includes any one of the following: information #B, information indicating a size of data whose transmission is not completed by the second terminal apparatus, and information indicating a buffer size of the second terminal apparatus. The information #B indicates whether the transmission of the first data is completed. The following describes several examples.

Example 1: The information indicating that the transmission of the first data is not completed is the information #B.

For example, the second terminal apparatus may send the information #B in a last slot in which the data #11 is sent to the first terminal apparatus, and determine, based on a value of the information #B, whether the transmission of the first data is completed. In this way, by using the information #B, the COT request is implicitly indicated when the first data is transmitted. Therefore, indication information of some parameters during data transmission may be reused, to reduce signaling and reduce a transmission delay of the COT request information.

The information #B is implemented by using one or more bits. For example, it is assumed that 1 bit indicates whether the transmission of the first data is completed. If the bit is set to "0", it indicates that the transmission of the first data is completed; or if the bit is set to "1", it indicates that the transmission of the first data is not completed, in other words, partial data in the first data is not sent to the first terminal apparatus. It should be understood that the foregoing descriptions are merely example descriptions, and no limitations are imposed.

It may be understood that an example in which the second terminal apparatus sends the information #B in the last slot in which the data #11 is sent to the first terminal apparatus is used for description. This is not limited. For example, the second terminal apparatus may send the information #B in any slot in which the data #11 is sent to the first terminal apparatus, or the second terminal apparatus may send the information #B in each slot in which the data #11 is sent to the first terminal apparatus. This is not limited.

Example 2: The information indicating that the transmission of the first data is not completed is the information indicating the size of the data whose transmission is not completed by the second terminal apparatus.

For example, the second terminal apparatus sends, in a last slot in which the data #11 is sent to the first terminal apparatus, the information indicating the size of the data whose transmission is not completed by the second terminal apparatus (information #C for short for differentiation), where the information #C indicates a size of the data #12. The first terminal apparatus may determine, for the second terminal apparatus based on the size that is of the data #12 and that is indicated by the information #C, to send the COT indication information to the second terminal apparatus. In an example, a resource, indicated by the COT indication information, that is in the COT and that is to be used by the second terminal apparatus to send information may be determined based on the size of the data #12.

It may be understood that an example in which the second terminal apparatus sends the information #C in the last slot in which the data #11 is sent to the first terminal apparatus is used for description. This is not limited. For example, the second terminal apparatus may send the information #C in any slot in which the data #11 is sent to the first terminal apparatus, or the second terminal apparatus may send the information #C in each slot in which the data #11 is sent to the first terminal apparatus. This is not limited.

Example 3: The information indicating that the transmission of the first data is not completed is the information indicating the buffer size of the second terminal apparatus.

For example, the second terminal apparatus sends, to the first terminal apparatus, the information indicating the buffer size of the second terminal apparatus, and the first terminal apparatus may determine, based on the information indicating the buffer size of the second terminal apparatus, to send the COT indication information to the second terminal apparatus.

The foregoing descriptions are separately provided with reference to the three examples. It may be understood that the foregoing examples may alternatively be used in combination. For example, the information indicating that the transmission of the first data is not completed includes the information #B and the information indicating the size of the data whose transmission is not completed by the second terminal apparatus. In this way, the first terminal apparatus may directly learn, based on the information #B, that the transmission of the first data is not completed, and learn of, based on the information indicating the size of the data whose transmission is not completed by the second terminal apparatus, the size of the data whose transmission is not completed, to determine, for the second terminal apparatus based on the information indicating the size of the data whose transmission is not completed by the second terminal apparatus, the resource that is in the COT and that is to be used by the second terminal apparatus to send information.

Optionally, in the foregoing second possible case, the second terminal apparatus may send the COT request information to the first terminal apparatus based on the indication of the first terminal apparatus. The following provides detailed descriptions.

In this case, the COT request information may include the information indicating that the transmission of the first data is not completed and some parameter information (denoted as a parameter #A for differentiation). After the second terminal apparatus sends, to the first terminal apparatus, the information indicating that the transmission of the first data is not completed, the first terminal apparatus may send indication information #11 to the second terminal apparatus, where the indication information #11 indicates the second terminal apparatus to send the parameter #A to the first terminal apparatus. After receiving the indication information #11, the second terminal apparatus sends the parameter #A to the first terminal apparatus.

The parameter #A may include a parameter related to the to-be-transmitted first data (for example, the data #12), and/or a related parameter used by the first terminal apparatus to determine the resource that is in the COT and that is to be used by the second terminal apparatus to send data #12. In an example, the parameter #A includes, for example, at least one of the following: a priority of a message to be sent by the second terminal apparatus (namely, the data #12), a channel access type of the message to be sent by the second terminal apparatus, an identifier of the second terminal apparatus, an identifier of the first terminal apparatus, a transmission type of the second terminal apparatus, a time domain resource required by the second terminal apparatus, a frequency domain resource required by the second terminal apparatus, a PDB required by the second terminal apparatus, request information of a feedback resource, and a parameter of a requested feedback resource. A meaning of each piece of information is described in detail below with reference to an aspect 3.

In a third possible case, the COT request information includes the resource reservation information of the second data, and the second data is data to be sent by the second terminal apparatus to the first terminal apparatus.

In this case, the resource reservation information of the second data may be used to implicitly request the resource information of the COT of the first terminal apparatus, in other words, after receiving the resource reservation information of the second data from the second terminal apparatus, the first terminal apparatus may send the COT indication information to the second terminal apparatus.

For example, before the second terminal apparatus sends the second data to the first terminal apparatus, the second terminal apparatus may send the resource reservation information of the second data to the first terminal apparatus. The first terminal apparatus receives the resource reservation information of the second data, and the first terminal apparatus may send the COT indication information to the second terminal apparatus, to share the COT resource with the second terminal apparatus, so that the second terminal apparatus may send the second data to the first terminal apparatus on the shared COT resource.

For content included in the COT request information in this case, refer to descriptions in the following aspect 4.

It may be understood that, the foregoing several cases are examples for description, and no limitations are imposed. For example, the first terminal apparatus may alternatively send the COT request information to the second terminal apparatus by using a previous higher layer message or service message, so that the first terminal apparatus shares the COT resource with the second terminal apparatus.

The following describes in detail the solution of the embodiment shown in the method 700 with reference to several aspects.

### Aspect 1: Signaling design of the COT request information

Optionally, the COT request information is carried in SCI #1.

The SCI #1 may be, for example, second-stage SCI; or may be newly defined SCI (for example, referred to as third-stage SCI). The SCI #1 is mentioned below for a plurality of times, and details are not described again.

Further, optionally, the first terminal apparatus sends indication information #1 to the second terminal apparatus, where the indication information #1 indicates whether the SCI #1 includes the COT request information.

The indication information #1 may be, for example, carried in SCI, for example, first-stage SCI or second-stage SCI. In an example, the indication information #1 may be carried in a dedicated field in SCI (for example, first-stage SCI or second-stage SCI); or the indication information #1 may be carried in a format indication field in SCI. This is not limited.

In a possible implementation, the indication information #1 is implemented by using at least one bit. In an example, the indication information #1 whose value is a fourth value indicates that the SCI #1 includes the COT request information. For example, it is assumed that 1 bit indicates whether the SCI #1 includes the COT request information. If the bit is set to "0", it indicates that the SCI #1 does not include the COT request information; or if the bit is set to "1", it indicates that the SCI #1 includes the COT request information. It should be understood that the foregoing descriptions are merely example descriptions, and no limitations are imposed.

As described in the method 200, the COT indication information may also be carried in the SCI #1. Therefore, the indication information #1 may indicate whether the SCI #1 includes the COT request information or COT sharing information.

For example, the second terminal apparatus sends the indication information #1 and the SCI #1 to the first terminal apparatus, where the value of the indication information #1 is a first value, and the indication information #1 whose value is the first value indicates that the SCI #1 includes the COT indication information. The first terminal apparatus sends the indication information #1 and the SCI #1 to the second terminal apparatus, where the value of the indication information #1 is the fourth value, and the indication information #1 whose value is the fourth value indicates that the SCI #1 includes the COT request information. Values of the first value and the fourth value are different. For example, the value of the first value is 1, and the value of the fourth value is 0. For another example, the value of the first value is 0, and the value of the fourth value is 1.

Optionally, the COT request information is carried in the SCI #1 and/or a MAC CE. Based on this, the COT request information may be carried in the SCI #1, may be carried in the MAC CE, or may be partially carried in the SCI #1 and partially carried in the MAC CE. In this way, the information transmission is applicable to more scenarios.

In an example, the COT request information is carried in the SCI #1.

Based on this, the second terminal apparatus sends the SCI #1 to the first terminal apparatus, where the SCI #1 includes the COT request information.

In another example, the COT request information is carried in the MAC CE.

Based on this, the second terminal apparatus sends the MAC CE to the first terminal apparatus, where the MAC CE includes the COT request information.

In another example, the COT request information is carried in the SCI #1 and the MAC CE.

Based on this, the second terminal apparatus sends the SCI #1 and the MAC CE to the first terminal apparatus, where the SCI #1 and the MAC CE include the COT request information. For example, the SCI #1 includes partial information in the COT request information, and the MAC CE includes remaining information in the COT request information. For example, when a quantity of bits required by the COT request information is large, the COT request information may be partially carried in the SCI #1 and partially carried in the MAC CE. For another example, the foregoing second possible case is used as an example. The COT request information may include the information indicating that the transmission of the first data is not completed and the parameter #A. The information indicating that the transmission of the first data is not completed is carried in the SCI #1, and the parameter #A is carried in the MAC CE.

Further, optionally, the second terminal apparatus sends indication information #7 to the first terminal apparatus, where the indication information #7 indicates that the COT request information is carried in the SCI #1 and/or the MAC CE.

The indication information #7 may be, for example, carried in SCI, for example, first-stage SCI or second-stage SCI. In an example, the indication information #7 may be carried in a dedicated field in SCI (for example, first-stage SCI or second-stage SCI); or the indication information #7 may be carried in a format indication field in SCI. This is not limited.

In a possible implementation, the indication information #7 is implemented by using at least one bit.

For example, it is assumed that 1 bit indicates that the COT request information is carried in the SCI #1, or the COT request information is carried in the MAC CE. For example, if the bit is set to "0", it indicates that the COT request information is carried in the SCI #1; or if the bit is set to "1", it indicates that the COT request information is carried in the MAC CE. For another example, if the bit is set to "1", it indicates that the COT request information is carried in the SCI #0; or if the bit is set to "1", it indicates that the COT request information is carried in the MAC CE. It should be understood that the foregoing descriptions are merely example descriptions, and no limitations are imposed.

For another example, it is assumed that 2 bits indicate that the COT request information is carried in the SCI #1 and/or the MAC CE. If the bit is set to "01", it indicates that the COT request information is carried in the SCI #1; if the bit is set to "10", it indicates that the COT request information is carried in the MAC CE; or if the bit is set to "11", it indicates that the COT request information is carried in the SCI #1 and the MAC CE. It should be understood that the foregoing descriptions are merely example descriptions, and no limitations are imposed.

Optionally, the SCI #1 further includes a parameter to be used by the second terminal apparatus to send the first data, in other words, the COT request information and the parameter to be used by the second terminal apparatus to send the first data may be carried in same SCI. The first data is data sent by the second terminal apparatus to the first terminal apparatus. In this way, the COT request information can be further indicated when the parameter for the first data is indicated, to reduce signaling overheads and a delay.

For brevity, the parameter to be used by the second terminal apparatus to send the first data is denoted as a parameter #1.

Optionally, the parameter #1 is used to allocate, indicate to send, or indicate necessary information (or referred to as related information) when the first terminal apparatus receives the first data. In an example, the parameter #1 includes at least one of the following: a source identifier, a destination identifier, a cast type indication, a new data indicator, a HARQ process number, a redundancy version, a CSI request, and a HARQ enabling indication. For meanings of the parameters, refer to descriptions in an existing protocol. This is not limited herein.

Further, optionally, the second terminal apparatus sends indication information #8 to the first terminal apparatus, where the indication information #8 indicates that the SCI #1 includes the COT request information, or the SCI #1 includes the COT request information and the parameter #1. Based on the indication information #8, unnecessary blind detection performed by the first terminal apparatus can be reduced, a detection speed can be improved, and detection complexity can be reduced.

The indication information #8 may be, for example, carried in SCI, for example, first-stage SCI or second-stage SCI. In an example, the indication information #8 may be carried in a dedicated field in SCI (for example, first-stage SCI or second-stage SCI); or the indication information #8 may be carried in a format indication field in SCI. This is not limited.

In a possible implementation, the indication information #8 is implemented by using at least one bit. For example, it is assumed that 1 bit indicates that the SCI #1 includes the COT request information, or the SCI #1 includes the COT request information and the parameter #1. For example, if the bit is set to "0", it indicates that the SCI #1 includes the COT request information; or if the bit is set to "1", it indicates that the SCI #1 includes the COT request information and the parameter #1. For another example, if the bit is set to "1", it indicates that the SCI #1 includes the COT request information; or if the bit is set to "0", it indicates that the SCI #1 includes the COT request information and the parameter #1. It should be understood that the foregoing descriptions are merely example descriptions, and no limitations are imposed.

FIG. 8 is another diagram of SCI #1. As shown in FIG. 8, resource reservation may be carried in first-stage SCI (for example, denoted as SCI 1B), in other words, the SCI 1B indicates the resource reservation. For the resource reservation, refer to the related descriptions in FIG. 5. Details are not described herein again.

At least the following two implementations may be included for the parameter to be used by the second terminal apparatus to send the first data and the COT request information.

In a possible implementation, the parameter to be used by the second terminal apparatus to send the first data and the COT request information are carried in different pieces of SCI. In an example, the different pieces of SCI may be different pieces of second-stage SCI, or may be different parts of second-stage SCI. This is not limited. As shown in FIG. 8(a), SCI-2D indicates the parameter to be used by the second terminal apparatus to send the first data, and SCI-2E indicates the COT request information, in other words, the parameter to be used by the second terminal apparatus to send the first data is carried in the SCI-2D, and the COT request information is carried in the SCI-2E. For example, SCI-2D in second-stage SCI indicates the parameter to be used by the second terminal apparatus to send the first data, and SCI-2E in the second-stage SCI indicates the COT request information.

In another possible implementation, the parameter to be used by the second terminal apparatus to send the first data and the COT request information are carried in same SCI. In an example, the same SCI may be same second-stage SCI, or may be a same part of second-stage SCI. As shown in FIG. 8(b), SCI-2F indicates the parameter to be used by the second terminal apparatus to send the first data and the COT request information, in other words, the parameter to be used by the second terminal apparatus to send the first data and the COT request information are carried in the SCI-2F. For example, SCI-2F in second-stage SCI indicates the parameter to be used by the second terminal apparatus to send the first data and the COT request information.

In another possible implementation, the COT request information is carried in one piece of SCI. As shown in FIG. 8(c), SCI-2G indicates the COT request information, in other words, the COT request information is carried in the SCI-2G. For example, SCI-2G in second-stage SCI indicates the COT request information.

It may be understood that the SCI 1B, SCI 2D, SCI 2E, SCI 2F, and SCI 2G shown in FIG. 8 are examples for description, and names of the SCI 1B, SCI 2D, SCI 2E, SCI 2F, and SCI 2G do not limit the protection scope of embodiments of this application.

It may be further understood that the foregoing mainly uses the first-stage SCI and the second-stage SCI as examples for description. This is not limited. For example, the COT request information is carried in one piece of third-stage SCI.

### Aspect 2: Attribute of the COT request information

Optionally, the COT resource requested by using the COT request information is used by the second terminal apparatus to send data; and/or used by the second terminal apparatus to send an answer message. For example, the answer message is a HARQ answer message. For details, refer to the foregoing related descriptions. Details are not described herein again.

For example, if the COT resource requested by using the COT request information is used by the second terminal apparatus to send data, after receiving the COT indication information from the first terminal apparatus, the second terminal apparatus may send data by using the resource indicated by the COT indication information. For example, the second terminal apparatus may send data to the first terminal apparatus by using the resource indicated by the COT indication information. For another example, the second terminal apparatus may send data to another UE by using the resource indicated by the COT indication information.

In another example, if the COT resource requested by using the COT request information is used by the second terminal apparatus to send an answer message, after receiving the COT indication information from the first terminal apparatus, the second terminal apparatus may send an answer message (for example, an ACK/NACK) by using the resource indicated by the COT indication information. For example, the second terminal apparatus may send an answer message for third data to the first terminal apparatus by using the resource indicated by the COT indication information. For example, if the second terminal apparatus successfully receives the third data from the first terminal apparatus, the second terminal apparatus may send an ACK to the first terminal apparatus by using the resource indicated by the COT indication information; or if the second terminal apparatus fails to receive the third data from the first terminal apparatus, the second terminal apparatus may send a NACK to the first terminal apparatus by using the resource indicated by the COT indication information.

In another example, if the COT resource requested by using the COT request information is used by the second terminal apparatus to send data and an answer message, after receiving the COT indication information from the first terminal apparatus, the second terminal apparatus may send data and an answer message (for example, an ACK/NACK) by using the resource indicated by the COT indication information.

Further, optionally, the first terminal apparatus sends indication information #9 to the second terminal apparatus, where the indication information #9 indicates that the COT resource requested by using the COT request information is used by the second terminal apparatus to send data; and/or used by the second terminal apparatus to send an answer message.

The indication information #9 may be, for example, carried in SCI, for example, first-stage SCI or second-stage SCI. In an example, the indication information #9 may be carried in a dedicated field in SCI (for example, first-stage SCI or second-stage SCI); or the indication information #9 may be carried in a format indication field in SCI. This is not limited.

In a possible implementation, the indication information #9 is implemented by using at least one bit. For example, it is assumed that 2 bits indicate that the COT resource requested by using the COT request information is used by the second terminal apparatus to send data; and/or used by the second terminal apparatus to send an answer message. If the bit is set to "01", it indicates that the COT resource requested by using the COT request information is used by the second terminal apparatus to send data; if the bit is set to "10", it indicates that the COT resource requested by using the COT request information is used by the second terminal apparatus to send an answer message; or if the bit is set to "11", it indicates that the COT resource requested by using the COT request information is used by the second terminal apparatus to send data and an answer message. It should be understood that the foregoing descriptions are merely example descriptions, and no limitations are imposed.

### Aspect 3: Content included in the COT request information

Optionally, the COT request information includes at least one of the following: the priority of the message to be sent by the second terminal apparatus, the channel access type of the message to be sent by the second terminal apparatus, the identifier of the second terminal apparatus, the identifier of the first terminal apparatus, the transmission type of the second terminal apparatus, the time domain resource required by the second terminal apparatus, the frequency domain resource required by the second terminal apparatus, the PDB required by the second terminal apparatus, the request information of the feedback resource, and the parameter of the requested feedback resource. This solution is applicable to the first possible case and the second possible case. For example, when the COT request information includes the resource information that is of the COT of the first terminal apparatus and that is requested by the second terminal apparatus, the COT request information further includes at least one of the foregoing information.

The following briefly describes an implementation of each parameter.

### 1. Priority and channel access type (namely, CAPC) of the message to be sent by the second terminal apparatus

In a first possible implementation, the COT request information may directly include the priority and the channel access type of the message to be sent by the second terminal apparatus. In this way, the first terminal apparatus may directly obtain the priority and the access type of the message to be sent by the second terminal apparatus.

In a second possible implementation, the COT request information jointly indicates the priority and the channel access type of the message to be sent by the second terminal apparatus. For example, the COT request information includes indication information #10, where the indication information #10 indicates the priority or the channel access type of the message to be sent by the second terminal apparatus, and the priority and/or the channel access type of the message to be sent by the second terminal apparatus has an association relationship. The indication information #10 may be used by the first terminal apparatus to obtain the priority and the channel access type of the message to be sent by the second terminal apparatus. Specifically, after receiving the indication information #10, the first terminal apparatus may determine, based on the association relationship between the priority and the channel access type of the message to be sent by the second terminal apparatus, the priority and the channel access type of the message to be sent by the second terminal apparatus. A quantity of bits occupied by the indication information #10 is less than 5 bits. For example, the quantity of bits occupied by the indication information #10 is 3 bits or 4 bits.

For example, the indication information #10 indicates a channel access type (namely, a channel access type of a message to be sent by the second terminal apparatus). After receiving the indication information #10, the first terminal apparatus may directly obtain the channel access type based on the indication information #10, and the first terminal apparatus determines, based on the indication information #10 and an association relationship between a priority of the message to be sent by the second terminal apparatus and the channel access type, the priority of the message to be sent by the second terminal apparatus. Based on this example, the indication information #10 may directly indicate the channel access type, and indirectly (or implicitly) indicate the priority of the message to be sent by the second terminal apparatus.

In another example, the indication information #10 indicates a priority of a message to be sent by the second terminal apparatus. After receiving the indication information #10, the first terminal apparatus may directly obtain, based on the indication information #10, the priority of the message to be sent by the second terminal apparatus, and the first terminal apparatus determines a channel access type (namely, a channel access type of the message to be sent by the second terminal apparatus) based on the indication information #10 and an association relationship between the priority of the message to be sent by the second terminal apparatus and the channel access type. Based on this example, the indication information #10 may directly indicate the priority of the message to be sent by the second terminal apparatus, and indirectly (or implicitly) indicate the channel access type.

Optionally, the association relationship between the priority of the message to be sent by the second terminal apparatus and the channel access type may be configured, preconfigured, or predefined, for example, predefined in a standard. This is not limited. In an example, the association relationship between the priority of the message to be sent by the second terminal apparatus and the channel access type may exist in a form of a table.

### 2. Identifier of the second terminal apparatus

The identifier of the second terminal apparatus is used by the first terminal apparatus to identify a terminal apparatus that sends the COT request. The identifier of the second terminal apparatus may be a source identifier, may be a device identifier of the second terminal apparatus, or may be a temporary identifier configured via signaling or predefined. This is not limited.

In a possible case, the COT request information and the parameter to be used by the second terminal apparatus to send the first data are carried in same signaling. In this case, the parameter to be used by the second terminal apparatus to send the first data includes the identifier of the second terminal apparatus, and the COT request information may not include the identifier of the second terminal apparatus. For the first data, refer to the foregoing descriptions. Details are not described herein again. In this case, the COT request information and the parameter to be used by the second terminal apparatus to send the first data are carried in the same signaling, and the parameter to be used by the second terminal apparatus to send the first data includes the identifier of the second terminal apparatus, so that the first terminal apparatus may learn of the identifier of the second terminal apparatus based on the parameter to be used by the second terminal apparatus to send the first data. Therefore, the COT request information may not carry the identifier of the second terminal apparatus, to reduce the signaling overheads.

In another possible case, the first indication information and the parameter to be used by the second terminal apparatus to send the first data are not carried in same signaling. In this case, the COT request information may include the identifier of the second terminal apparatus. In addition, the parameter to be used by the second terminal apparatus to send the first data may also include the identifier of the second terminal apparatus, so that the first terminal apparatus learns that the first data is sent by the second apparatus. In this case, because the COT request information and the parameter to be used by the second terminal apparatus to send the first data are not carried in the same signaling, the COT request information includes the identifier of the first terminal apparatus. In this way, the first terminal apparatus may identify that the COT request information is sent by the second terminal apparatus.

### 3. Identifier of the first terminal apparatus

In a possible case, the COT request information and the parameter to be used by the second terminal apparatus to send the first data are carried in same signaling. In this case, the parameter to be used by the second terminal apparatus to send the first data includes the identifier of the first terminal apparatus, and the COT request information does not include the identifier of the first terminal apparatus. For the first data, refer to the foregoing descriptions. Details are not described herein again. In this case, the COT request information and the parameter to be used by the second terminal apparatus to send the first data are carried in the same signaling, and the parameter to be used by the second terminal apparatus to send the first data includes the identifier of the first terminal apparatus, so that the first terminal apparatus may learn of the identifier of the first terminal apparatus based on the parameter to be used by the second terminal apparatus to send the first data. Therefore, the COT request information may not carry the identifier of the first terminal apparatus, to reduce the signaling overheads.

In another possible case, the first indication information and the parameter to be used by the second terminal apparatus to send the first data are not carried in same signaling. In this case, the first indication information includes the identifier of the first terminal apparatus. In addition, the parameter to be used by the second terminal apparatus to send the first data may also include the identifier of the first terminal apparatus, so that the first terminal apparatus learns that the first data is sent to the first terminal apparatus. In this case, because the COT request information and the parameter to be used by the second terminal apparatus to send the first data are not carried in the same signaling, the COT request information includes the identifier of the first terminal apparatus. In this way, the first terminal apparatus may identify that the COT request information is sent to the first terminal apparatus.

### 4. Transmission type of the second terminal apparatus

In an example, the transmission type of the second terminal apparatus may be dynamic grant (dynamic grant, DG) or configured grant (configured grant, CG). If the transmission type of the second terminal apparatus is CG, the COT request information may further include a resource periodicity or a resource reservation periodicity.

### 5. Time domain resource required by the second terminal apparatus

The time domain resource required by the second terminal apparatus indicates a time domain resource requested by the second terminal apparatus. The first terminal apparatus may determine, based on the time domain resource required by the second terminal apparatus, the COT resource to be shared with the second terminal apparatus. Optionally, the time domain resource required by the second terminal apparatus includes a position of the time domain resource and/or a size of the time domain resource.

In an example, the time domain resource required by the second terminal apparatus includes at least one of the following information: a slot start position, a quantity of slots, a quantity of symbols, and the like.

### 6. Frequency domain resource required by the second terminal apparatus

The frequency domain resource required by the second terminal apparatus indicates a frequency domain resource requested by the second terminal apparatus. The first terminal apparatus may determine, based on the frequency domain resource required by the second terminal apparatus, the COT resource to be shared with the second terminal apparatus.

In an example, the time domain resource required by the second terminal apparatus includes at least one of the following information: a quantity of subchannels, a quantity of interlaces, a quantity of RB sets, and the like.

### 7. PDB required by the second terminal apparatus

The PDB may indicate a tolerable remaining time for completing data packet transmission. A smaller value of the PDB indicates that data needs to be sent in a shorter time.

The PDB required by the second terminal apparatus indicates a PDB requested by the second terminal apparatus. For example, if the PDB required by the second terminal apparatus is small, for example, less than a threshold, the first terminal apparatus may preferentially share the COT resource with the second terminal apparatus.

Optionally, the PDB required by the second terminal apparatus may be used by the first terminal apparatus to determine a time domain resource that is in the COT and that is to be used by the second terminal apparatus to send information.

It may be understood that, if the COT request does not include the PDB required by the second terminal apparatus, or the value of the PDB required by the second terminal apparatus is an invalid value (or another preset value), it means that the PDB required by the second terminal apparatus is outside a remaining COT of the first terminal apparatus, and the first terminal apparatus may not share the COT resource with the second terminal apparatus. The invalid value may be a value in a numerical range, or the invalid value may be a numerical range.

### 8. Request information of the feedback resource

The request information of the feedback resource indicates a resource that is requested by the second terminal apparatus and that is used to send feedback information (for example, a HARQ answer message).

### 9. Parameter of the requested feedback resource

In an example, the parameter of the requested feedback resource includes at least one of the following: a channel format for sending the feedback information by the second terminal apparatus, a time domain resource required by the second terminal apparatus for sending the feedback information, a frequency domain resource required by the second terminal apparatus for sending the feedback information, a feedback manner for sending the feedback information by the second terminal apparatus, and a sequence parameter for sending the feedback information by the second terminal apparatus. For meanings of the parameters, refer to the related descriptions in the aspect 4 in the embodiment in FIG. 2. Details are not described herein again.

The parameters are separately described above. It may be understood that if the COT request does not include any one of the foregoing parameters, a corresponding parameter may be determined according to a preset rule.

### Aspect 4: Content included in the resource reservation information

Optionally, that the COT request information includes resource reservation information of the first data sent by the second terminal apparatus is used as an example. The resource reservation information includes at least one of the following: the PDB required by the second terminal apparatus, the priority of the message to be sent by the second terminal apparatus, the channel access type of the message to be sent by the second terminal apparatus, the request information of the feedback resource, the parameter of the requested feedback resource, the reservation periodicity, the time domain resource required by the second terminal apparatus, the frequency domain resource required by the second terminal apparatus, a time interval between two adjacent data packets sent by the second terminal apparatus, a DMRS pattern, a DMRS port, a format of sidelink control information (for example, a format of second-stage SCI), and a modulation and coding scheme (modulation and coding scheme, MCS). The reservation periodicity, or referred to as a time domain offset value, may indicate a time interval between a next data packet and a current data packet. The PDB required by the second terminal apparatus may be determined based on the reservation periodicity, and may be used to determine the time domain resource that is in the COT and that is to be used by the second terminal apparatus to send information, for example, used to determine a minimum time domain resource that is in the COT and that is to be used by the second terminal apparatus to send information. For other parameters, refer to the related descriptions in the foregoing aspect 3. Details are not described herein again.

Optionally, the resource reservation information means that the information includes one or more parameters used for resource reservation. Optionally, the name is not used to limit another function indicated in the information included in the name.

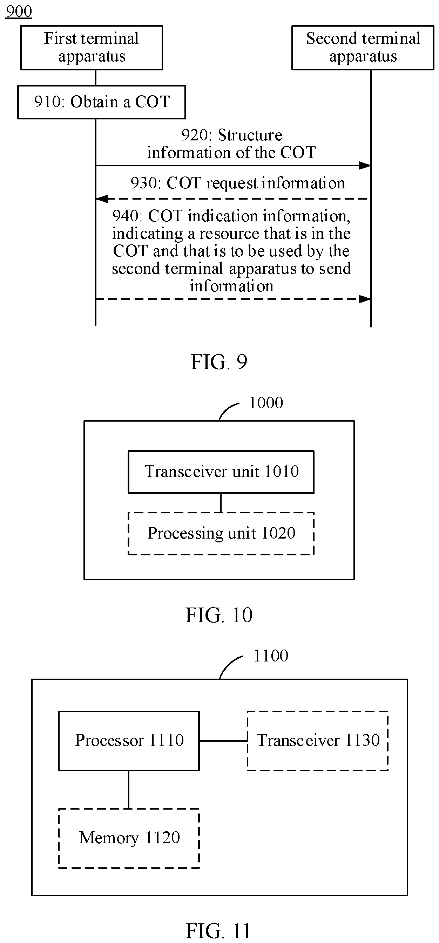

FIG. 9 is a diagram of an information transmission method 900 according to an embodiment of this application. The method 900 may be used in combination with the foregoing method 200 or method 700, or may be used independently. This is not limited. For content that is not described in detail below, refer to the foregoing descriptions of the method 200 or the method 700. Details are not described herein again. The method 900 may include the following steps.

910: A first terminal apparatus obtains a COT.

Step 910 is similar to step 210, and details are not described herein again.

920: The first terminal apparatus sends structure information of the COT to a second terminal apparatus.

The structure information of the COT (that is, an example of first information) indicates information related to the COT. In an example, the structure information of the COT includes at least one of the following: a length of the COT, a remaining length of the COT, a used length of the COT, a frequency domain resource occupied by the COT, and a channel access priority type. The structure information of the COT is described in detail later.

Optionally, the method 900 may further include step 930.

930: The second terminal apparatus sends COT request information to the first terminal apparatus.

For example, step 930 may be performed before step 920, to be specific, after receiving the COT request information from the second terminal apparatus, the first terminal apparatus sends the structure information of the COT to the second terminal apparatus. In this way, after learning that the second terminal apparatus has a requirement for sharing a COT resource, the first terminal apparatus may send the structure information of the COT to the second terminal apparatus.

For another example, step 930 may be performed after step 920, to be specific, the first terminal apparatus first sends the structure information of the COT to the second terminal apparatus, and after receiving the structure information of the COT from the first terminal apparatus, the second terminal apparatus sends the COT request information to the second terminal apparatus. In this way, the second terminal apparatus may determine, based on the structure information that is of the COT and that is provided by the first terminal apparatus, whether to share the COT resource of the first terminal apparatus.

Step 930 is similar to step 201, and details are not described herein again.

Optionally, the method 900 may further include step 940.

940: The first terminal apparatus sends COT indication information to the second terminal apparatus, where the COT indication information indicates a resource that is in the COT and that is to be used by the second terminal apparatus to send information.

The COT indication information and the structure information of the COT may be carried in same signaling, or may be carried in different signaling. This is not limited.

Step 940 is similar to step 220, and details are not described herein again.

Based on this, the first terminal apparatus sends the structure information of the COT to the second terminal apparatus. In this way, the second terminal apparatus can determine a structure of the COT, to send and receive corresponding data when a resource of the COT is subsequently shared.

The following describes a related solution of the structure information of the COT with reference to several aspects.

Aspect 1: Signaling design of the structure information of the COT

Optionally, the structure information of the COT is carried in SCI #2.

The SCI #2 may be, for example, first-stage SCI, or may be other SCI such as second-stage SCI or newly defined SCI.

Optionally, the first terminal apparatus sends the SCI #2 to the second terminal apparatus, where the SCI #2 includes the structure information of the COT. Optionally, the SCI #2 further includes a resource reservation indication. The resource reservation indication may include at least one parameter used for resource reservation. In an example, the resource reservation indication includes at least one of the following parameters: a priority of sending data by the first terminal apparatus in the COT, a reservation periodicity for sending data by the first terminal apparatus in the COT, a time domain resource used by the first terminal apparatus to send data in the COT, and a frequency domain resource used by the first terminal apparatus to send data in the COT. In addition, the resource reservation indication may further include at least one of the following parameters: a DMRS pattern, a DMRS port, a format of sidelink control information (for example, a format of second-stage SCI), an MCS, and the like. This is not limited.

Further, optionally, the first terminal apparatus sends indication information #14 (that is, an example of second information) to the second terminal apparatus, where the indication information #14 indicates whether the SCI #2 includes the structure information of the COT. Based on the indication information #14, unnecessary blind detection performed by the second terminal apparatus can be reduced, a detection speed can be improved, and detection complexity can be reduced.

The indication information #14 may be, for example, carried in SCI, for example, first-stage SCI or second-stage SCI. In an example, the indication information #14 may be carried in a dedicated field in SCI (for example, first-stage SCI or second-stage SCI); or the indication information #14 may be carried in a format indication field in SCI. This is not limited.

In a possible implementation, the indication information #14 is implemented by using at least one bit. For example, it is assumed that 1 bit indicates whether the SCI #2 includes the structure information of the COT. For example, if the bit is set to "0", it indicates that the SCI #2 includes the structure information of the COT; or if the bit is set to "1", it indicates that the SCI #2 does not include the structure information of the COT. For another example, if the bit is set to "1", it indicates that the SCI #2 does not include the structure information of the COT; or if the bit is set to "0", it indicates that the SCI #2 includes the structure information of the COT. It should be understood that the foregoing descriptions are merely example descriptions, and no limitations are imposed.

Aspect 2: Content included in the structure information of the COT

In an example, the structure information of the COT includes at least one of the following: the length of the COT, the remaining length of the COT, the used length of the COT, the frequency domain resource occupied by the COT, and the channel access priority type.

### 1. Length of the COT

For the length of the COT, refer to the related descriptions in the method 200. Details are not described herein again.

If the structure information of the COT includes the length of the COT, the second terminal apparatus may learn of the length of the COT obtained by the first terminal apparatus, and may further determine, based on the length of the COT and a requirement of the second terminal apparatus, whether to share the COT resource of the first terminal apparatus.

In an example, the length of the COT may include at least one of the following: a quantity of time domain units occupied by the COT, a start position of the COT in time domain, and an end position of the COT in time domain. The quantity of time domain units occupied by the COT may be, for example, a quantity of slots occupied by the COT. The start position of the COT in time domain indicates a 1^{st} time domain unit in time domain units occupied by the COT, for example, a 1^{st} slot. The end position of the COT in time domain indicates a last time domain unit in the time domain units occupied by the COT, for example, a last slot.

In an example, if maximum occupation duration of the COT is 10 ms, and the FR1 supports a maximum of 60 kHz, there are 80 slots in total. Therefore, 7 bits may indicate the length of the COT.

2. Remaining length of the COT

For the remaining length of the COT, refer to the related descriptions in the method 200. Details are not described herein again.

If the structure information of the COT includes the remaining length of the COT, the second terminal apparatus may learn of the remaining length of the COT obtained by the first terminal apparatus, and may further determine, based on the remaining length of the COT and a requirement of the second terminal apparatus, whether the remaining length of the COT is a time domain resource expected by the second terminal apparatus, to determine whether to share the COT resource of the first terminal apparatus.

In an example, the remaining length of the COT may include at least one of the following: a quantity of remaining time domain units in the COT, a start position of a remaining time domain resource in the COT, and an end position of the remaining time domain resource in the COT. The quantity of remaining time domain units in the COT may be, for example, a quantity of remaining slots in the COT. The start position of the remaining time domain resource in the COT indicates a 1^{st} time domain unit in the remaining time domain units in the COT, for example, a 1^{st} slot in remaining slots in the COT. The end position of the remaining time domain resource in the COT indicates a last time domain unit in the remaining time domain units in the COT, for example, a last slot in the remaining slots in the COT.

In an example, if maximum occupation duration of the COT is 10 ms, and the FR1 supports a maximum of 60 kHz, there are 80 slots in total. Therefore, 7 bits may indicate the remaining length of the COT.

### 3. Used length of the COT

For the used length of the COT, refer to the related descriptions in the method 200. Details are not described herein again.

In an example, the used length of the COT may include at least one of the following: a quantity of used time domain units in the COT, a start position of a used time domain resource in the COT, and an end position of the used time domain resource in the COT. The quantity of used time domain units in the COT may be, for example, a quantity of used slots in the COT. The start position of the used time domain resource in the COT indicates a 1^{st} time domain unit in the used time domain units in the COT, for example, a 1^{st} slot in used slots in the COT. The end position of the used time domain resource in the COT indicates a last time domain unit in the used time domain units in the COT, for example, a last slot in the used slots in the COT.

In an example, if maximum occupation duration of the COT is 10 ms, and the FR1 supports a maximum of 60 kHz, there are 80 slots in total. Therefore, 7 bits may indicate the used length of the COT.

If the structure information of the COT includes the used length of the COT and the length of the COT, the second terminal apparatus may calculate the remaining length of the COT based on the used length of the COT and the length of the COT, so that the second terminal apparatus may determine, based on the remaining length of the COT, whether to share the COT resource of the first terminal apparatus.

4. Frequency domain resource occupied by the COT

The frequency domain resource occupied by the COT may be consecutive frequency domain resources or inconsecutive frequency domain resources. This is not limited. The following uses an example in which the frequency domain resource occupied by the COT is a resource block set (RB set) occupied by the COT for description. Optionally, a quantity of RB sets occupied by the COT may be configured via signaling.
(1) RB sets are consecutive, to be specific, the structure information that is of the COT and that is sent by the first terminal apparatus includes consecutive RB sets occupied by the COT.

In an example, in this case, binary bits may indicate the consecutive RB sets occupied by the COT.

For example, in consideration of a system bandwidth, of FR1, that supports a maximum of 100 MHz, 3 bits are required for 5*20 MHz. Therefore, the consecutive RB sets occupied by the COT may be indicated by using 3 bits. For another example, in consideration of backward compatibility, a maximum of 64 RB sets may need to be indicated. In this case, a system bandwidth of 64*20 MHz=1.28 GHz may be supported, and the system bandwidth of 1.28 GHz needs 6 bits. Therefore, the consecutive RB sets occupied by the COT may be indicated by using 6 bits.

(2) RB sets are inconsecutive, to be specific, the structure information that is of the COT and that is sent by the first terminal apparatus includes inconsecutive RB sets occupied by the COT.

In an example, in this case, a bitmap (bitmap) may indicate the inconsecutive RB sets occupied by the COT.

For example, in consideration of a system bandwidth, of FR1, that supports a maximum of 100 MHz, 5 bits are required for 5*20 MHz. Therefore, the consecutive RB sets occupied by the COT may be indicated by using 5 bits. For another example, in consideration of backward compatibility, a maximum of 64 RB sets may need to be indicated. In this case, a system bandwidth of 64*20 MHz=1.28 GHz may be supported, and the system bandwidth of 1.28 GHz needs 64 bits. Therefore, the consecutive RB sets occupied by the COT may be indicated by using 64 bits.

### 5. Channel access priority type

For example, the channel access priority type may be a CAPC. In an example, 2 bits may indicate the channel access priority type, for example, 2 bits indicate the CAPC.

Optionally, the channel access priority type may indirectly indicate a maximum length MCOT of the COT. For example, the structure information of the COT includes the channel access priority type, and after receiving the channel access priority type, the second terminal apparatus may learn of the maximum length MCOT of the COT. For example, there is an association relationship between the channel access priority type and the MCOT. After receiving the channel access priority type, the second terminal apparatus may learn of the maximum length MCOT of the COT based on the channel access priority type and the association relationship between the channel access priority type and the MCOT.

The foregoing describes embodiments of this application with reference to FIG. 2 to FIG. 9. A plurality of pieces of information are described in the foregoing embodiment, and a quantity of bits occupied by each piece of information is not limited. The following briefly lists two examples. It may be understood that a quantity of bits occupied by each piece of content listed below is merely an example for description, and does not limit the protection scope of embodiments of this application.

Example 1: A first terminal apparatus shares a COT resource with one second terminal apparatus or one second terminal apparatus group.

For example, a source identifier (namely, an identifier of the first terminal apparatus) may occupy 16 bits. The source identifier may be carried in a parameter used by the first terminal apparatus to send third data in a COT, to be specific, the source identifier in the parameter used by the first terminal apparatus to send the third data in the COT may indicate that a transmitting end of COT indication information is the first terminal apparatus.

For another example, a destination identifier may occupy 4 bits. For example, if one first terminal apparatus shares a COT resource with a maximum of 16 second terminal apparatuses, COT indication information may carry one destination identifier, the destination identifier may indicate a group of second terminal apparatuses, and the destination identifier may occupy 4 bits.

For another example, an intra-group identifier of the second terminal apparatus occupies 4 bits.

For another example, a time domain (time domain) resource that is indicated by the first terminal apparatus and that is to be used by the second terminal apparatus to send information may occupy 12 bits. For example, it is assumed that there are a maximum of 80 slots, if the time domain resource that is indicated by the first terminal apparatus to the second terminal apparatus and that is to be used by the second terminal apparatus to send information is indicated by using a start and length indicator value ((start and length indicator value, SLIV), 12 bits may be required.

For example, the first terminal apparatus indicates, by using the SLIV, the time domain resource used by the second terminal apparatus to send information. For example, a start slot S and a length L of the time domain resource may be used to generate, in the following manner, a resource indication value (resource indication value, RIV) generated by using a value of the SLIV:

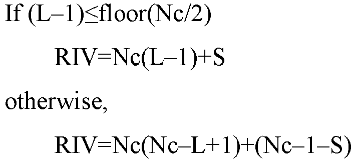

In the foregoing expression, a value of Nc is an indicated length of the COT or remaining length of the COT, and floor(x) represents taking the floor of a digit x. It may be understood that a rounding manner is not limited.

For another example, the time domain resource that is indicated by the first terminal apparatus to the second terminal apparatus and that is to be used by the second terminal apparatus to send information may indicate, by using the indicated length of the COT as a time length, consecutive slots occupied in time domain.

For another example, a frequency domain (frequency domain) resource that is indicated by the first terminal apparatus and that is to be used by the second terminal apparatus to send information may occupy 4 bits. For example, if there are a maximum of 5 RB sets, 3 bits may be required. For another example, if there are a maximum of 64 RB sets, 6 bits may be required. For another example, actually, an RB set occupied in frequency domain may be indicated by using an indicated quantity of RB sets as a frequency domain length.

For example, the first terminal apparatus indicates, by using an SLIV, the frequency domain resource used by the second terminal apparatus to send information. For example, a start RB set of a frequency domain resource is represented as *S_{f},* and a quantity *L_{f}* of occupied consecutive RB sets may be used to generate, in the following manner, an RIV generated by using a value of the SLIV:

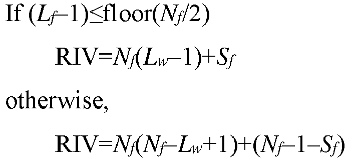

In the foregoing expression, a value of *N_{f}* is an indicated quantity of RB sets occupied by the COT, and floor(x) represents taking the floor of a digit x. It may be understood that a rounding manner is not limited.

For another example, a subchannel that is indicated by the first terminal apparatus and on which the second terminal apparatus sends information may occupy 10 bits. If a subchannel that is indicated by the first terminal apparatus to the second terminal apparatus and on which the second terminal apparatus sends information is indicated by using an SLIV, 6 bits may be required.

Example 2: A second terminal apparatus sends COT request information to a first terminal apparatus.

For example, a priority of a message to be sent by the second terminal apparatus may occupy 3 bits.

For another example, a channel access type (for example, a CAPC) of a message to be sent by the second terminal apparatus may occupy 2 bits.

For another example, a time domain resource required by the second terminal apparatus may occupy 7 bits. For example, if the time domain resource required by the second terminal apparatus in the COT request information sent by the second terminal apparatus to the first terminal apparatus is a quantity of slots required by the second terminal apparatus, in consideration of a maximum quantity 80 of slots, the time domain resource required by the second terminal apparatus may occupy 7 bits.

For another example, a frequency domain resource required by the second terminal apparatus may occupy 3 to 6 bits.

For example, if the frequency domain resource required by the second terminal apparatus in the COT request information sent by the second terminal apparatus to the first terminal apparatus is a quantity of RB sets required by the second terminal apparatus, when a maximum quantity of RB sets is 5, the frequency domain resource required by the second terminal apparatus may occupy 3 bits; or when a maximum quantity of RB sets is 64, the frequency domain resource required by the second terminal apparatus may occupy 6 bits.

For another example, if the frequency domain resource required by the second terminal apparatus in the COT request information sent by the second terminal apparatus to the first terminal apparatus is a quantity of subchannels required by the second terminal apparatus, in consideration of a maximum quantity 10 of subchannels, the quantity of subchannels required by the second terminal apparatus in the COT request information sent by the second terminal apparatus to the first terminal apparatus may occupy 4 bits.

It may be understood that, in some of the foregoing embodiments, "transmission" is mentioned. Unless otherwise specified, "transmission" includes receiving and/or sending. For example, transmitting a signal may include receiving a signal and/or sending a signal.

It may be further understood that, in some of the foregoing embodiments, "include" and "carried in" are mentioned for a plurality of times. It may be understood that they represent a same meaning. For example, that the COT indication information is carried in the SCI #1 may be replaced with that the SCI #1 includes the COT indication information.

It may be further understood that, in some of the foregoing embodiments, the solution in which the MAC CE includes the COT indication information is described. It may be understood that the MAC CE may alternatively be replaced with other signaling such as RRC signaling.

It may be further understood that, in embodiments of this application, 1^{st}-stage SCI and first-stage SCI are sometimes alternately used, and represent a same meaning. For example, the 1^{st}-stage SCI and the first-stage SCI may indicate SCI that is sent on a previous symbol in a slot and that is carried on a PSCCH. For another example, the 1^{st}-stage SCI and the first-stage SCI may alternatively indicate SCI that is sent on a later symbol in a slot, may be SCI sent on a PSCCH, or SCI obtained by multiplexing SCI sent by on a PSSCH.

It may be further understood that, in embodiments of this application, interaction between the first terminal apparatus and the second terminal apparatus is mainly used as an example for description. This application is not limited thereto.

It can be further understood that some optional features in embodiments of this application may not depend on another feature in some scenarios, or may be combined with another feature in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by the communication device may alternatively be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

FIG. 10 is a schematic block diagram of a communication apparatus 1000 according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 further includes a processing unit 1020. The processing unit 1020 may be configured to perform data processing.

Optionally, the apparatus 1000 further includes a storage unit. The storage unit may be configured to store instructions and/or data. The processing unit 1020 may read the instructions and/or the data in the storage unit, to enable the apparatus to implement actions performed by the terminal apparatus in the foregoing method embodiments.

In a design, the apparatus 1000 may be the first terminal apparatus in the foregoing embodiments, or may be a component (for example, a chip) of the first terminal apparatus. The apparatus 1000 may implement the steps or procedures performed by the first terminal apparatus in the foregoing method embodiments. The transceiver unit 1010 may be configured to perform receiving/sending-related operations of the first terminal apparatus in the foregoing method embodiments. The processing unit 1020 may be configured to perform processing-related operations of the first terminal apparatus in the foregoing method embodiments.

In a possible implementation, the transceiver unit 1010 is configured to receive first indication information from a second terminal apparatus, where the first indication information includes at least one of the following: resource information used by the second terminal apparatus to request a channel occupancy time COT of the first terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus. The transceiver unit 1010 is further configured to send COT indication information to the second terminal apparatus, where the COT indication information indicates a resource that is in the COT and that is to be used by the second terminal apparatus to send information.

In another possible implementation, the processing unit 1020 is configured to obtain a channel occupancy time COT; and the transceiver unit 1010 is configured to send COT indication information to a second terminal apparatus, where the COT indication information indicates a resource that is in the COT and that is to be used by the second terminal apparatus to send information.

The apparatus 1000 may implement the steps or procedures performed by the first terminal apparatus in the method embodiments according to embodiments of this application. The apparatus 1000 may include units configured to perform the methods performed by the first terminal apparatus in embodiments shown in FIG. 2 to FIG. 9.

In another design, the apparatus 1000 may be the second terminal apparatus in the foregoing embodiments, or may be a component (for example, a chip) of the second terminal apparatus. The apparatus 1000 may implement the steps or procedures performed by the second terminal apparatus in the foregoing method embodiments. The transceiver unit 1010 may be configured to perform receiving/sending-related operations of the second terminal apparatus in the foregoing method embodiments. The processing unit 1020 may be configured to perform processing-related operations of the second terminal apparatus in the foregoing method embodiments.

In a possible implementation, the processing unit 1020 is configured to determine first indication information, where the first indication information is used to trigger a first terminal apparatus to send channel occupancy time COT indication information, and the COT indication information indicates a resource that is in a COT of the first terminal apparatus and that is to be used by the second terminal apparatus to send information; and the first indication information includes at least one of the following: resource information that is of the COT of the first terminal apparatus and that is requested by the second terminal apparatus, information indicating that transmission of first data is not completed, and resource reservation information of second data, where the first data is data sent by the second terminal apparatus to the first terminal apparatus, and the second data is data to be sent by the second terminal apparatus to the first terminal apparatus. The transceiver unit 1010 is configured to send the first indication information to the first terminal apparatus.

In another possible implementation, the transceiver unit 1010 is configured to receive channel occupancy time COT indication information from a first terminal apparatus, where the COT indication information indicates a resource that is in a COT of the first terminal apparatus and that is to be used by the second terminal apparatus to send information; and the transceiver unit 1010 is further configured to send information by using the resource indicated by the COT indication information.

The apparatus 1000 may implement the steps or procedures performed by the second terminal apparatus in the method embodiments according to embodiments of this application. The apparatus 1000 may include units configured to perform the methods performed by the second terminal apparatus in embodiments shown in FIG. 2 to FIG. 9.

For more detailed descriptions of the apparatus 1000, directly refer to the related descriptions in the foregoing method embodiments. Details are not described herein again.

It should be understood that a specific process in which the units perform the foregoing corresponding steps is described in detail in the foregoing method embodiments. For brevity, details are not described herein.

It should be further understood that the apparatus 1000 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the terminal apparatus (for example, the first terminal apparatus or the second terminal apparatus) in the foregoing embodiments, and may be configured to perform the procedures and/or steps corresponding to the terminal apparatus in the foregoing method embodiments. To avoid repetition, details are not described herein again.

The apparatus 1000 in the foregoing solutions has a function of implementing corresponding steps performed by the terminal apparatus (for example, the first terminal apparatus or the second terminal apparatus) in the foregoing methods. The function may be implemented by hardware, or may be implemented by hardware executing corresponding software. The hardware or software includes one or more modules corresponding to the foregoing function. For example, a transceiver unit may be replaced with a transceiver (where for example, a sending unit in the transceiver unit may be replaced with a transmitter, and a receiving unit in the transceiver unit may be replaced with a receiver), and another unit such as a processing unit may be replaced with a processor, to separately perform receiving and sending operations and a related processing operation in the method embodiments.

In addition, the transceiver unit 1010 may alternatively be a transceiver circuit (where for example, the transceiver circuit may include a receiver circuit and a transmitter circuit), and the processing unit may be a processing circuit.

It should be noted that the apparatus in FIG. 10 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 11 is a schematic block diagram of a communication apparatus 1100 according to an embodiment of this application. The apparatus 1100 includes a processor 1110, and the processor 1110 is coupled to a memory 1120. Optionally, the apparatus further includes the memory 1120, configured to store a computer program or instructions and/or data. The processor 1110 is configured to execute the computer program or the instructions stored in the memory 1120, or read the data stored in the memory 1120, to perform the methods in the foregoing method embodiments.

Optionally, there are one or more processors 1110.

Optionally, there are one or more memories 1120.

Optionally, the memory 1120 and the processor 1110 are integrated together or separately disposed.

Optionally, as shown in FIG. 11, the apparatus 1100 further includes a transceiver 1130. The transceiver 1130 is configured to receive and/or send a signal. For example, the processor 1110 is configured to control the transceiver 1130 to receive and/or send a signal.

In a solution, the apparatus 1100 is configured to implement the operations performed by the terminal apparatus in the foregoing method embodiments.

For example, the processor 1110 is configured to execute the computer program or the instructions stored in the memory 1120, to implement related operations of the first terminal apparatus or the second terminal apparatus in the foregoing method embodiments.

In an implementation process, the steps in the foregoing methods can be implemented by using a hardware integrated logic circuit in the processor 1110, or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1120, and the processor 1110 reads information in the memory 1120 and completes the steps of the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 1110) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 1110 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 1120) may store data required by the processor (for example, the processor 1110) during software execution. The memory may be implemented by using any suitable storage technology. For example, the memory may be any available storage medium that can be accessed by a processor and/or a computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another appropriate type.

The memory (for example, the memory 1120) and the processor (for example, the processor 1110) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (where for example, the integrated circuit may be disposed in a UE or another network node).

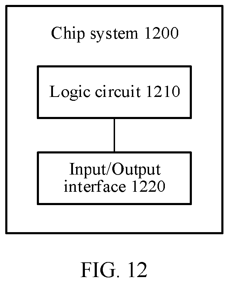

FIG. 12 is a schematic block diagram of a chip system 1200 according to an embodiment of this application. The chip system 1200 (or may also be referred to as a processing system) includes a logic circuit 1210 and an input/output interface (input/output interface) 1220.

The logic circuit 1210 may be a processing circuit in the chip system 1200. The logic circuit 1210 may be coupled to and connected to a storage unit, and invoke instructions in the storage unit, to enable the chip system 1200 to implement the methods and functions in embodiments of this application. The input/output interface 1220 may be an input/output circuit in the chip system 1200, and outputs information processed by the chip system 1200, or inputs to-be-processed data or signaling information into the chip system 1200 for processing.

In a solution, the chip system 1200 is configured to implement the operations performed by the terminal apparatus in the foregoing method embodiments.

For example, the logic circuit 1210 is configured to implement a processing-related operation performed by the first terminal apparatus in the foregoing method embodiment, for example, a processing-related operation performed by the first terminal apparatus in the embodiment shown in FIG. 2, a processing-related operation performed by the first terminal apparatus in the embodiment shown in FIG. 7, or a processing-related operation performed by the first terminal apparatus in the embodiment shown in FIG. 9; the input/output interface 1220 is configured to implement sending-and/or receiving-related operations performed by the first terminal apparatus in the foregoing method embodiment, for example, sending-and/or receiving-related operations performed by the first terminal apparatus in the embodiment shown in FIG. 2, sending-and/or receiving-related operations performed by the first terminal apparatus in the embodiment shown in FIG. 7, or sending-and/or receiving-related operations performed by the first terminal apparatus in the embodiment shown in FIG. 9.

For another example, the logic circuit 1210 is configured to implement a processing-related operation performed by the second terminal apparatus in the foregoing method embodiment, for example, a processing-related operation performed by the second terminal apparatus in the embodiment shown in FIG. 2, a processing-related operation performed by the second terminal apparatus in the embodiment shown in FIG. 7, or a processing-related operation performed by the second terminal apparatus in the embodiment shown in FIG. 9; the input/output interface 1220 is configured to implement sending-and/or receiving-related operations performed by the second terminal apparatus in the foregoing method embodiment, for example, sending-and/or receiving-related operations performed by the second terminal apparatus in the embodiment shown in FIG. 2, sending-and/or receiving-related operations performed by the second terminal apparatus in the embodiment shown in FIG. 7, or sending-and/or receiving-related operations performed by the second terminal apparatus in the embodiment shown in FIG. 9.

An embodiment of this application further provides a computer-readable storage medium. The computer-readable storage medium stores computer instructions used to implement the method performed by the terminal apparatus (for example, the first terminal apparatus or the second terminal apparatus) in the foregoing method embodiments.

An embodiment of this application further provides a computer program product, including instructions. When the instructions are executed by a computer, the method performed by the terminal apparatus (for example, the first terminal apparatus or the second terminal apparatus) in the foregoing method embodiments is implemented.

An embodiment of this application further provides a communication system. The communication system includes the first terminal apparatus and the second terminal apparatus in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
obtaining, by a first terminal apparatus, a channel occupancy time COT; and
sending, by the first terminal apparatus, COT indication information to a second terminal apparatus, wherein the COT indication information indicates a resource that is in the COT and that is to be used by the second terminal apparatus to send information.

2. The method according to claim 1, wherein before the sending, by the first terminal apparatus, COT indication information to a second terminal apparatus, the method further comprises:
receiving, by the first terminal apparatus, first indication information from the second terminal apparatus, wherein the first indication information comprises at least one of the following: resource information that is of the COT of the first terminal apparatus and that is requested by the second terminal apparatus, information indicating that transmission of first data is not completed, and resource reservation information of second data, wherein
the first data is data sent by the second terminal apparatus to the first terminal apparatus, and the second data is data to be sent by the second terminal apparatus to the first terminal apparatus.

3. The method according to claim 1 or 2, wherein the method further comprises:
sending, by the first terminal apparatus, second indication information to the second terminal apparatus, wherein the second indication information whose value is a first value indicates that sidelink control information comprises the COT indication information.

4. The method according to claim 1 or 2, wherein the sending, by the first terminal apparatus, COT indication information to a second terminal apparatus comprises:
sending, by the first terminal apparatus, sidelink control information to the second terminal apparatus, wherein the sidelink control information comprises the COT indication information;
sending, by the first terminal apparatus, a medium access control-control element MAC CE to the second terminal apparatus, wherein the MAC CE comprises the COT indication information; or
sending, by the first terminal apparatus, sidelink control information and a MAC CE to the second terminal apparatus, wherein the sidelink control information and the MAC CE comprise the COT indication information.

5. The method according to claim 4, wherein
a remaining length of the COT is less than or equal to X time domain units, and the first terminal apparatus sends the sidelink control information to the second terminal apparatus;
a remaining length of the COT is greater than X time domain units, and the first terminal apparatus sends the MAC CE to the second terminal apparatus; or
a remaining length of the COT is greater than X time domain units, and the first terminal apparatus sends the sidelink control information and the MAC CE to the second terminal apparatus, wherein
X is an integer greater than or equal to 1.

6. The method according to claim 5, wherein the first terminal apparatus sends the sidelink control information and the MAC CE to the second terminal apparatus, wherein
the sidelink control information comprises COT indication information in the first X time domain units in the COT;
the MAC CE comprises COT indication information after the first X time domain units in the COT;
the MAC CE comprises COT indication information in the first X time domain units in the COT.

7. The method according to claim 5 or 6, wherein a value of X is related to at least one of the following: a processing capability of the second terminal apparatus and a subcarrier spacing.

8. The method according to claim 4, wherein
the COT indication information is located on a first time domain resource of the COT, and the first terminal apparatus sends the sidelink control information to the second terminal apparatus; or
the COT indication information is located on a second time domain resource of the COT, and the first terminal apparatus sends the MAC CE to the second terminal apparatus, wherein
the second time domain resource of the COT is after the first time domain resource of the COT.

9. The method according to claim 8, wherein the MAC CE comprises the COT indication information located on the second time domain resource of the COT and/or the first time domain resource of the COT.

10. The method according to claim 8 or 9, wherein:
the first time domain resource of the COT is Y consecutive time domain units in the COT, and a start time domain unit in the Y consecutive time domain units is a start time domain unit of the COT, or a start time domain unit in the Y consecutive time domain units is a time domain unit in which the COT indication information is located, wherein Y is an integer greater than 1 or equal to 1; and
the second time domain resource of the COT is a time domain unit after the Y consecutive time domain units in the COT.

11. The method according to claim 10, wherein a value of Y is related to at least one of the following: a processing capability of the second terminal apparatus and a subcarrier spacing.

12. The method according to any one of claims 4 to 11, wherein the method further comprises:
sending, by the first terminal apparatus, third indication information to the second terminal apparatus, wherein
the third indication information indicates that the sidelink control information comprises the COT indication information;
the third indication information indicates that the MAC CE comprises the COT indication information; or
the third indication information indicates that the sidelink control information and the MAC CE comprise the COT indication information.

13. The method according to any one of claims 3 to 12, wherein the sidelink control information further comprises a parameter used by the first terminal apparatus to send third data in the COT, and the third data is data sent by the first terminal apparatus to the second terminal apparatus.

14. The method according to any one of claims 3 to 13, wherein the method further comprises: sending, by the first terminal apparatus, fourth indication information to the second terminal apparatus, wherein the fourth indication information indicates that:
the sidelink control information comprises the COT indication information; or
the sidelink control information comprises the COT indication information and the parameter used by the first terminal apparatus to send the third data in the COT, and the third data is the data sent by the first terminal apparatus to the second terminal apparatus.

15. The method according to any one of claims 1 to 14, wherein the COT indication information comprises:
a resource that is in the COT and that is to be used by the second terminal apparatus to send data; and/or
a resource that is in the COT and that is to be used by the second terminal apparatus to send a hybrid automatic repeat request HARQ answer message.

16. The method according to claim 15, wherein the method further comprises:
sending, by the first terminal apparatus, fifth indication information to the second terminal apparatus, wherein the fifth indication information indicates that the COT indication information comprises any one of the following:
the resource that is in the COT and that is to be used by the second terminal apparatus to send data;
the resource that is in the COT and that is to be used by the second terminal apparatus to send a HARQ answer message; or
the resource that is in the COT and that is to be used by the second terminal apparatus to send data, and the resource that is in the COT and that is to be used by the second terminal apparatus to send a HARQ answer message.

17. The method according to any one of claims 1 to 16, wherein the method further comprises:
receiving, by the first terminal apparatus, a response message from the second terminal apparatus, wherein the response message indicates whether the second terminal apparatus accepts sharing of the COT, wherein
the response message comprises a response message of the second terminal apparatus for the COT indication information; or
the response message comprises a HARQ answer message of the second terminal apparatus for the third data sent by the first terminal apparatus, wherein the HARQ answer message sent by using a first resource indicates that the second terminal apparatus accepts sharing of the COT, or the HARQ answer message sent by using a second resource indicates that the second terminal apparatus does not accept sharing of the COT.

18. The method according to claim 17, wherein a time interval between a moment at which the first terminal apparatus sends the COT indication information and a moment at which the first terminal apparatus receives the response message is greater than or equal to a first preset value.

19. The method according to any one of claims 1 to 18, wherein the sending, by the first terminal apparatus, COT indication information to a second terminal apparatus comprises:
sending, by the first terminal apparatus, the COT indication information to N second terminal apparatuses, wherein N is a positive integer, wherein
the COT indication information comprises N groups of parameters, and each of the N groups of parameters comprises an identifier of one of the second terminal apparatuses; and
each of the N groups of parameters further comprises at least one of the following: a channel access parameter, a time domain resource that is in the COT and that is to be used by the second terminal apparatus to send information, a frequency domain resource that is in the COT and that is to be used by the second terminal apparatus to send information, sixth indication information, and feedback configuration information, wherein
the sixth indication information indicates whether the second terminal apparatus sends the response message for the COT indication information.

20. The method according to claim 19, wherein the COT indication information further comprises an identifier of the first terminal apparatus.

21. The method according to claim 19, wherein
the COT indication information and the parameter used by the first terminal apparatus to send the third data in the COT are carried in same signaling, the parameter used by the first terminal apparatus to send the third data in the COT comprises an identifier of the first terminal apparatus, and the COT indication information does not comprise the identifier of the first terminal apparatus; or
the COT indication information and the parameter used by the first terminal apparatus to send the third data in the COT are not carried in same signaling, and the COT indication information comprises an identifier of the first terminal apparatus, wherein
the third data is the data sent by the first terminal apparatus to the second terminal apparatus.

22. The method according to claim 19, wherein the method further comprises:
sending, by the first terminal apparatus, seventh indication information, wherein the seventh indication information indicates a cast type, wherein
the cast type is unicast, and the COT indication information comprises an identifier of the first terminal apparatus and the identifier of one of the second terminal apparatuses, or the parameter used by the first terminal apparatus to send the third data in the COT comprises an identifier of the first terminal apparatus and the identifier of one of the second terminal apparatuses;
the cast type is multicast, and the COT indication information comprises an identifier of the first terminal apparatus and identifiers of the N second terminal apparatuses; or
the cast type is multicast, the parameter used by the first terminal apparatus to send the third data in the COT comprises an identifier of the first terminal apparatus and a group identifier of the N second terminal apparatuses, and the COT indication information comprises identifiers of the N second terminal apparatuses, wherein
the third data is the data sent by the first terminal apparatus to the second terminal apparatus.

23. The method according to any one of claims 17 to 22, wherein the channel access parameter comprises eighth indication information, wherein the eighth indication information indicates a channel access type of a message to be sent by the second terminal apparatus or a priority of the message to be sent by the second terminal apparatus, and there is an association relationship between the channel access type of the message to be sent by the second terminal apparatus and the priority of the message to be sent by the second terminal apparatus.

24. The method according to any one of claims 19 to 23, wherein the feedback configuration information comprises at least one of the following:
a channel format for sending feedback information by the second terminal apparatus;
time domain resource indication information for sending feedback information by the second terminal apparatus;
frequency domain resource indication information for sending feedback information by the second terminal apparatus;
information indicating the second terminal apparatus to send a feedback;
information indicating a manner of sending a feedback by the second terminal apparatus; and
a sequence parameter for sending feedback information by the second terminal apparatus.

25. The method according to any one of claims 19 to 24, wherein the COT indication information indicates the time domain resource that is in the COT and that is to be used by the second terminal apparatus to send information, and the COT indication information comprises ninth indication information, wherein
a value of the ninth indication information is a second value, and the frequency domain resource to be used by the second terminal apparatus to send information is a frequency domain resource indicated by the ninth indication information; or
a value of the ninth indication information is a third value, and the frequency domain resource to be used by the second terminal apparatus to send information is all frequency domain resources on the time domain resource used by the second terminal apparatus to send information.

26. The method according to any one of claims 1 to 25, wherein the method further comprises:
sending, by the first terminal apparatus, first information to the second terminal apparatus, wherein the first information comprises at least one of the following: the remaining length of the COT, a length of the COT, a used length of the COT, a frequency domain resource occupied by the COT, and a channel access priority type.

27. The method according to claim 26, wherein the sending, by the first terminal apparatus, first information to the second terminal apparatus comprises:
sending, by the first terminal apparatus, sidelink control information to the second terminal apparatus, wherein the sidelink control information comprises the first information.

28. The method according to claim 27, wherein the sidelink control information further comprises at least one of the following:
priority indication information for sending data by the first terminal apparatus in the COT;
reservation periodicity indication information for sending data by the first terminal apparatus in the COT;
time domain resource indication information for sending data by the first terminal apparatus in the COT; and
frequency domain resource indication information for sending data by the first terminal apparatus in the COT.

29. The method according to claim 27 or 28, wherein the sidelink control information further comprises second information, and the second information indicates that the sidelink control information comprises the first information.

30. An information transmission method, comprising:
receiving, by a second terminal apparatus, channel occupancy time COT indication information from a first terminal apparatus, wherein the COT indication information indicates a resource that is in a COT of the first terminal apparatus and that is to be used by the second terminal apparatus to send information; and
sending, by the second terminal apparatus, information by using the resource indicated by the COT indication information.

31. The method according to claim 30, wherein before the receiving, by a second terminal apparatus, COT indication information from a first terminal apparatus, the method further comprises:
sending, by the second terminal apparatus, first indication information to the first terminal apparatus, wherein the first indication information comprises at least one of the following: resource information that is of the COT of the first terminal apparatus and that is requested by the second terminal apparatus, information indicating that transmission of first data is not completed, and resource reservation information of second data, wherein
the first data is data sent by the second terminal apparatus to the first terminal apparatus, and the second data is data to be sent by the second terminal apparatus to the first terminal apparatus.

32. The method according to claim 30 or 31, wherein the method further comprises:
receiving, by the second terminal apparatus, second indication information from the first terminal apparatus, wherein the second indication information whose value is a first value indicates that sidelink control information comprises the COT indication information.

33. The method according to claim 30 or 31, wherein the receiving, by a second terminal apparatus, COT indication information from a first terminal apparatus comprises:
receiving, by the second terminal apparatus, sidelink control information from the first terminal apparatus, wherein the sidelink control information comprises the COT indication information;
receiving, by the second terminal apparatus, a medium access control-control element MAC CE from the first terminal apparatus, wherein the MAC CE comprises the COT indication information; or
receiving, by the second terminal apparatus, sidelink control information and a MAC CE from the first terminal apparatus, wherein the sidelink control information and the MAC CE comprise the COT indication information.

34. The method according to claim 33, wherein
a remaining length of the COT is less than or equal to X time domain units, and the second terminal apparatus receives the sidelink control information from the first terminal apparatus;
a remaining length of the COT is greater than X time domain units, and the second terminal apparatus receives the MAC CE from the first terminal apparatus; or
a remaining length of the COT is greater than X time domain units, and the second terminal apparatus receives the sidelink control information and the MAC CE from the first terminal apparatus, wherein
X is an integer greater than or equal to 1.

35. The method according to claim 34, wherein the second terminal apparatus receives the sidelink control information and the MAC CE from the first terminal apparatus, wherein
the sidelink control information comprises COT indication information in the first X time domain units in the COT; and
the MAC CE comprises COT indication information after the first X time domain units in the COT,
the MAC CE comprises COT indication information in the first X time domain units in the COT.

36. The method according to claim 34 or 35, wherein a value of X is related to at least one of the following: a processing capability of the second terminal apparatus and a subcarrier spacing.

37. The method according to claim 33, wherein
the COT indication information is located on a first time domain resource of the COT, and the second terminal apparatus receives the sidelink control information from the first terminal apparatus; or
the COT indication information is located on a second time domain resource of the COT, and the second terminal apparatus receives the MAC CE from the first terminal apparatus, wherein
the second time domain resource of the COT is after the first time domain resource of the COT.

38. The method according to claim 37, wherein the MAC CE comprises the COT indication information located on the second time domain resource of the COT and/or the first time domain resource of the COT.

39. The method according to claim 37 or 38, wherein:
the first time domain resource of the COT is Y consecutive time domain units in the COT, and a start time domain unit in the Y consecutive time domain units is a start time domain unit of the COT, or a start time domain unit in the Y consecutive time domain units is a time domain unit in which the COT indication information is located, wherein Y is an integer greater than 1 or equal to 1; and
the second time domain resource of the COT is a time domain unit after the Y consecutive time domain units in the COT.

40. The method according to claim 39, wherein a value of Y is related to at least one of the following: a processing capability of the second terminal apparatus and a subcarrier spacing.

41. The method according to any one of claims 33 to 40, wherein the method further comprises:
receiving, by the second terminal apparatus, third indication information from the first terminal apparatus, wherein
the third indication information indicates that the sidelink control information comprises the COT indication information;
the third indication information indicates that the MAC CE comprises the COT indication information; or
the third indication information indicates that the sidelink control information and the MAC CE comprise the COT indication information.

42. The method according to any one of claims 32 to 41, wherein the sidelink control information further comprises a parameter used by the first terminal apparatus to send third data in the COT, and the third data is data sent by the first terminal apparatus to the second terminal apparatus.

43. The method according to any one of claims 32 to 42, wherein the method further comprises:
receiving, by the second terminal apparatus, fourth indication information from the first terminal apparatus, wherein the fourth indication information indicates that:
the sidelink control information comprises the COT indication information; or
the sidelink control information comprises the COT indication information and the parameter used by the first terminal apparatus to send the third data in the COT, and the third data is the data sent by the first terminal apparatus to the second terminal apparatus.

44. The method according to any one of claims 30 to 43, wherein the COT indication information comprises:
a resource that is in the COT and that is to be used by the second terminal apparatus to send data; and/or
a resource that is in the COT and that is to be used by the second terminal apparatus to send a hybrid automatic repeat request HARQ answer message.

45. The method according to claim 44, wherein the method further comprises:
receiving, by the second terminal apparatus, fifth indication information from the first terminal apparatus, wherein the fifth indication information indicates that the COT indication information comprises any one of the following:
the resource that is in the COT and that is to be used by the second terminal apparatus to send data;
the resource that is in the COT and that is to be used by the second terminal apparatus to send a HARQ answer message; or
the resource that is in the COT and that is to be used by the second terminal apparatus to send data, and the resource that is in the COT and that is to be used by the second terminal apparatus to send a HARQ answer message.

46. The method according to any one of claims 30 to 45, wherein the method further comprises:
sending, by the second terminal apparatus, a response message to the first terminal apparatus, wherein the response message indicates whether the second terminal apparatus accepts sharing of the COT; and
the response message comprises a response message of the second terminal apparatus for the COT indication information; or
the response message comprises a HARQ answer message of the second terminal apparatus for the third data sent by the first terminal apparatus, wherein the HARQ answer message sent by using a first resource indicates that the second terminal apparatus accepts sharing of the COT, or the HARQ answer message sent by using a second resource indicates that the second terminal apparatus does not accept sharing of the COT.

47. The method according to claim 46, wherein a time interval between a moment at which the second terminal apparatus receives the COT indication information and a moment at which the second terminal apparatus sends the response message is greater than or equal to a first preset value.

48. The method according to any one of claims 30 to 47, wherein the COT indication information comprises N groups of parameters, each of the N groups of parameters comprises an identifier of one of second terminal apparatuses, and N is a positive integer; and
each of the N groups of parameters further comprises at least one of the following: a channel access parameter, a time domain resource that is in the COT and that is to be used by the second terminal apparatus to send information, a frequency domain resource that is in the COT and that is to be used by the second terminal apparatus to send information, sixth indication information, and feedback configuration information, wherein
the sixth indication information indicates whether the second terminal apparatus sends the response message for the COT indication information.

49. The method according to claim 48, wherein the COT indication information further comprises an identifier of the first terminal apparatus.

50. The method according to claim 48, wherein
the COT indication information and the parameter used by the first terminal apparatus to send the third data in the COT are carried in same signaling, the parameter used by the first terminal apparatus to send the third data in the COT comprises an identifier of the first terminal apparatus, and the COT indication information does not comprise the identifier of the first terminal apparatus; or
the COT indication information and the parameter used by the first terminal apparatus to send the third data in the COT are not carried in same signaling, and the COT indication information comprises an identifier of the first terminal apparatus, wherein
the third data is the data sent by the first terminal apparatus to the second terminal apparatus.

51. The method according to claim 48, wherein the method further comprises:
receiving, by the second terminal apparatus, seventh indication information from the first terminal apparatus, wherein the seventh indication information indicates a cast type, wherein
the cast type is unicast, and the COT indication information comprises an identifier of the first terminal apparatus and the identifier of one of the second terminal apparatuses, or the parameter used by the first terminal apparatus to send the third data in the COT comprises an identifier of the first terminal apparatus and the identifier of one of the second terminal apparatuses;
the cast type is multicast, and the COT indication information comprises an identifier of the first terminal apparatus and identifiers of N second terminal apparatuses; or
the cast type is multicast, the parameter used by the first terminal apparatus to send the third data in the COT comprises an identifier of the first terminal apparatus and a group identifier of N second terminal apparatuses, and the COT indication information comprises identifiers of the N second terminal apparatuses, wherein
the third data is the data sent by the first terminal apparatus to the second terminal apparatus.

52. The method according to any one of claims 48 to 51, wherein the channel access parameter comprises eighth indication information, and the eighth indication information indicates a channel access type of a message to be sent by the second terminal apparatus or a priority of the message to be sent by the second terminal apparatus; and
the method further comprises:
determining, by the second terminal apparatus based on the eighth indication information and an association relationship, the channel access type of the message to be sent by the second terminal apparatus and the priority of the message to be sent by the second terminal apparatus, wherein
the association relationship is an association relationship between the channel access type of the message to be sent by the second terminal apparatus and the priority of the message to be sent by the second terminal apparatus.

53. The method according to any one of claims 48 to 52, wherein the feedback configuration information comprises at least one of the following:
a channel format for sending feedback information by the second terminal apparatus;
time domain resource indication information for sending feedback information by the second terminal apparatus;
frequency domain resource indication information for sending feedback information by the second terminal apparatus;
information indicating the second terminal apparatus to send a feedback;
information indicating a manner of sending a feedback by the second terminal apparatus; and
a sequence parameter for sending feedback information by the second terminal apparatus.

54. The method according to any one of claims 48 to 53, wherein the COT indication information indicates the time domain resource that is in the COT and that is to be used by the second terminal apparatus to send information, and the COT indication information comprises ninth indication information, wherein
a value of the ninth indication information is a second value, and the frequency domain resource to be used by the second terminal apparatus to send information is a frequency domain resource indicated by the ninth indication information; or
a value of the ninth indication information is a third value, and the frequency domain resource to be used by the second terminal apparatus to send information is all frequency domain resources on the time domain resource used by the second terminal apparatus to send information.

55. The method according to any one of claims 30 to 54, wherein the method further comprises:
receiving, by the second communication apparatus, first information from the first terminal apparatus, wherein the first information comprises at least one of the following: the remaining length of the COT, a length of the COT, a used length of the COT, a frequency domain resource occupied by the COT, and a channel access priority type.

56. The method according to claim 55, wherein the receiving, by the second communication apparatus, first information from the first terminal apparatus comprises:
receiving, by the second communication apparatus, sidelink control information from the first terminal apparatus, wherein the sidelink control information comprises the first information.

57. The method according to claim 56, wherein the sidelink control information further comprises at least one of the following:
priority indication information for sending data by the first terminal apparatus in the COT;
reservation periodicity indication information for sending data by the first terminal apparatus in the COT;
time domain resource indication information for sending data by the first terminal apparatus in the COT; and
frequency domain resource indication information for sending data by the first terminal apparatus in the COT.

58. The method according to claim 56 or 57, wherein the sidelink control information further comprises second information, and the second information indicates that the sidelink control information comprises the first information.

59. A communication apparatus, comprising a module or unit configured to perform the method according to any one of claims 1 to 58.

60. A communication apparatus, comprising a processor, wherein the processor is configured to execute a computer program or instructions stored in a memory, to enable the apparatus to perform the method according to any one of claims 1 to 58.

61. The apparatus according to claim 60, wherein the apparatus further comprises the memory and/or a communication interface, and the communication interface is coupled to the processor; and
the communication interface is configured to input and/or output information.

62. A computer-readable storage medium, wherein the computer-readable storage medium stores a computer program or instructions; and when the computer program or the instructions are run on a communication apparatus, the communication apparatus is enabled to perform the method according to any one of claims 1 to 58.

63. A computer program product, wherein the computer program product comprises a computer program or instructions for performing the method according to any one of claims 1 to 58.

64. A chip, wherein the chip is coupled to a memory, and is configured to read and execute program instructions stored in the memory, to implement the method according to any one of claims 1 to 58.
